# EUROPEAN PATENT APPLICATION

(11) **EP 4 765 371 A1**
(43) Date of publication of application: **24.06.2026**
(21) Application number: 23958659.7
(22) Date of filing: 17.11.2023
(51) Int. Cl.: H01M 50/131

(54) **BATTERY CELL, BATTERY AND ELECTRIC DEVICE**

(71) Applicant: Contemporary Amperex Technology Co., Limited, Ningde, Fujian 352100 (CN)
(72) Inventor: WU, Kai, Ningde, Fujian 352100 (CN); CHEN, Xinxiang, Ningde, Fujian 352100 (CN); HUANG, Shoujun, Ningde, Fujian 352100 (CN); LIN, Denghua, Ningde, Fujian 352100 (CN); CHEN, Long, Ningde, Fujian 352100 (CN); LUO, Yan, Ningde, Fujian 352100 (CN); ZHENG, Yulian, Ningde, Fujian 352100 (CN); WANG, Peng, Ningde, Fujian 352100 (CN)
(74) Representative: Ran, Handong
(86) International application number: PCT/CN2023/132468
(87) International publication number: WO 2025/102386

(57) **Abstract**

Disclosed in the embodiments of the present application are a battery cell, a battery and an electric device. The battery cell comprises: an electrode assembly, wherein the electrode assembly comprises a positive electrode sheet, the positive electrode sheet comprises a positive electrode active material capable of realizing reversible de-intercalation and intercalation of metal ions, and the positive electrode active material comprises a compound containing nickel; and a case, which is used for accommodating the electrode assembly, wherein the melting point of at least some regions of the case is p, and p satisfies: 1200 °C ≤ p ≤ 2000 °C. According to the battery cell, the battery and the electric device in the embodiments of the present application, the reliability of the battery cell can be improved.

## Description

### TECHNICAL FIELD

The present application relates to the field of batteries, and in particular, to a battery cell, a battery, and an electric device.

### BACKGROUND

Energy saving and emission reduction are keys to sustainable development of the automobile industry. In this case, electric vehicles have become an important part of the sustainable development of the automobile industry due to their energy saving and environmental protection advantages. For electric vehicles, the battery technology is an important factor in their development.

In the development of battery technologies, in addition to improving the performance of batteries, the safety issue is also a problem that cannot be ignored. If the safety of the battery cannot be guaranteed, the battery cannot be used. Therefore, how to not only improve battery performance but also ensure battery safety has become a particularly important problem in the development of battery technologies.

### SUMMARY

Embodiments of the present application provide a battery cell, a battery, and an electric device, which can improve the reliability of the battery cell.

In a first aspect, provided is a battery cell. The battery cell includes: an electrode assembly, where the electrode assembly includes a positive electrode plate, the positive electrode plate includes a positive electrode active material enabling reversible de-intercalation and intercalation of metal ions, and the positive electrode active material includes a nickel element-containing compound; and a shell body, configured to accommodate the electrode assembly, where a melting point of at least a partial region of the shell body is p, and p satisfies that 1200 °C ≤ p ≤ 2000 °C.

Therefore, for the battery cell according to the embodiments of the present application, in the case that the positive electrode active material of the positive electrode plate includes a nickel element-containing compound, the energy density and long cycle life of the battery cell can be effectively increased, but the gas generated during the use of the battery cell will also be increased. Particularly, when thermal runaway occurs in the battery cell, the internal temperature of the battery cell increases rapidly and a large amount of gas is generated. Therefore, appropriately increasing the melting point p of at least a partial region of the shell body will make the shell body less prone to melting, reduce the possibility of explosion of the battery cell, and further reduce the risk of thermal runaway of adjacent battery cells, thereby improving the reliability of the battery. However, the melting point p of the shell body should not be too large, so as to reduce the difficulty in selecting and processing the material of the shell body, thereby saving costs and facilitating processing.

In some embodiments, the nickel element-containing compound includes a layered lithium-containing transition metal oxide, and the molar amount of the nickel element in the layered lithium-containing transition metal oxide accounts for not less than 50%, optionally not less than 70%, optionally not less than 80%, or optionally not less than 90%, of the total molar amount of the transition metal element in the layered lithium-containing transition metal oxide, so that the energy density of the battery cell can be further improved.

In some embodiments, the layered lithium-containing transition metal oxide includes LiaNibCocMdOeAf, where: 0 < a ≤ 1.2; 0.5 ≤ b < 1, optionally, 0.9 ≤ b < 1; 0 < c < 1; 0 < d < 1; 1 ≤ e ≤ 2; 0 ≤ f ≤ 1; M includes, but is not limited to, one or more of Mn, Al, Zr, Zn, Cu, Cr, Mg, Fe, V, Ti, and B, and A includes, but is not limited to, one or more of N, F, S and Cl, thus increasing the energy density of the battery cell.

In some embodiments, the material of at least a partial region of the shell body includes at least one of the following: steel, copper alloy, titanium alloy, and nickel alloy. These materials have high melting points and can meet the requirements of the shell body, and they offer ease of processing and low cost.

In some embodiments, the material of the at least a partial region of the shell body includes steel, and 1300 °C ≤ p ≤ 1800 °C. This allows the design requirements to be easily met and improves the reliability of the battery cell and the battery.

In some embodiments, the material of at least a partial region of the shell body includes at least one of the following: stainless steel and carbon steel. For example, if the shell body is made of stainless steel material, the requirements for the melting point p are easily met. In addition, the shell body is made of stainless steel, which is not prone to rusting and can improve the service life of the shell body compared to other materials. If the shell body is made of carbon steel material, the requirements for the melting point p are easily met.

In some embodiments, the mass content of the chromium element in the material of at least a partial region of the shell body is m, and m satisfies that 10% ≤ m ≤ 30%. Appropriately increasing the amount of chromium element in the material of at least a partial region of the shell body can increase the melting point of the material, thereby making it easy to meet the requirements for the melting point p. In addition, since the chromium element can react with oxygen to generate a dense chromium oxide film, a corrosion-resistant protective film can be further formed on the surface of the shell body, thereby improving the corrosion resistance of the shell body.

In some embodiments, the at least a partial region of the shell body includes all side walls of the shell body and a bottom wall of the shell body. In the case that the value of the mass content d of the nickel element of the positive electrode plate of the electrode assembly is fixed, if thermal runaway occurs in the battery cell, the internal temperature of the battery cell increases rapidly and a large amount of gas is generated. If all regions of the shell body meet the requirements for the melting point p, the overall deformation ability of the shell body can be improved, so that the shell body is less prone to damage or melting, which can restrain the high-temperature and high-pressure gas inside the shell body, reduce the impact on the connected battery cells, and further reduce the risk of thermal runaway of adjacent battery cells, thereby improving the reliability of the battery.

In some embodiments, the shell body is cylindrical or polygonal prismatic to facilitate processing.

In some embodiments, a tensile strength of the at least a partial region of the shell body at a temperature of 500 °C is Rn, and Rn satisfies that 100 MPa ≤ Rn ≤ 1200 MPa. In the case that the positive electrode active material of the positive electrode plate includes a nickel element-containing compound, the energy density and long cycle life of the battery cell can be effectively increased, but the gas generated during the use of the battery cell will also be increased. Particularly, when thermal runaway occurs in the battery cell, the internal temperature of the battery cell increases rapidly and a large amount of gas is generated. Therefore, appropriately increasing the tensile strength Rn of at least a partial region of the shell body at the high temperature of 500 °C can improve the deformation ability of this part of the shell body when thermal runaway occurs in the battery cell, making the shell body less prone to rapid damage and explosion, thereby reducing the risk of thermal runaway of adjacent battery cells and improving the reliability of the battery. However, the tensile strength Rn of at least a partial region of the shell body at the high temperature of 500 °C should not be too large to save costs and facilitate processing.

In some embodiments, the electrode assembly further includes a negative electrode plate. The negative electrode plate includes a negative electrode active material enabling reversible de-intercalation and intercalation of metal ions. The negative electrode active material includes a silicon-based material. The tensile strength of at least a partial region of the shell body at the temperature of 25 °C is Rm, and Rm satisfies that 250 MPa ≤ Rm ≤ 2000 MPa. By providing the silicon-based material on the negative electrode plate, more metal ions can be accommodated, thereby effectively increasing the energy density of the battery cell. In addition, in the case that the negative electrode active material of the negative electrode plate includes a silicon-based material, the degree of deformation of the electrode assembly in the battery cell during use will be increased. Particularly, during the charging process of the battery cell, the metal ions are intercalated into the silicon-based material of the negative electrode plate, which will cause the volume expansion of the electrode assembly, thereby increasing the pressure of the electrode assembly on the shell body of the battery cell. Therefore, increasing the tensile strength Rm of at least a partial region of the shell body at the room temperature of 25 °C can improve the deformation ability of the shell body, so that the shell body is less prone to damage during the use of the battery cell, thereby improving the structural stability of the battery cell and further improving the service life of the battery cell. However, the tensile strength Rm of at least a partial region of the shell body at the room temperature of 25 °C should not be too large, so as to reduce the difficulty in selecting and processing the material of the shell body, thereby saving costs and facilitating processing.

In some embodiments, the electrode assembly further includes a negative electrode plate. The negative electrode plate includes a negative electrode active material enabling reversible de-intercalation and intercalation of metal ions. The negative electrode active material includes a silicon-based material. The yield strength of at least a partial region of the shell body at the temperature of 25 °C is Re, and Re satisfies that 140 MPa ≤ Re ≤ 1000 MPa. By providing the silicon-based material on the negative electrode plate, more metal ions can be accommodated, thereby effectively increasing the energy density of the battery cell. In addition, in the case that the negative electrode active material of the negative electrode plate includes a silicon-based material, the degree of deformation of the electrode assembly in the battery cell during use will be increased. Particularly, during the charging process of the battery cell, the metal ions are intercalated into the silicon-based material of the negative electrode plate, which will cause the volume expansion of the electrode assembly, thereby increasing the pressure of the electrode assembly on the shell body of the battery cell. Therefore, increasing the yield strength Re of at least a partial region of the shell body at the room temperature of 25 °C can improve the deformation ability of the shell body, thereby improving the structural stability of the battery cell and further improving the service life of the battery cell. During the charging and discharging processes of the battery cell, in the case that the electrode assembly undergoes cyclical volume expansion and reduction, increasing the yield strength Re of at least a partial region of the shell body at room temperature can enhance the maximum compressive force borne by the shell body. In the case that the limit of the yield strength of the shell body is not exceeded, the shell body is less prone to damage, and the deformation of the shell body is recoverable, thereby improving the service life of the shell body. However, the yield strength Re of at least a partial region of the shell body at room temperature should not be too large, so as to reduce the difficulty in selecting and processing the material of the shell body, thereby saving costs and facilitating processing.

In some embodiments, the tensile strength of at least a partial region of the shell body at the temperature of 25 °C is Rm, at least a part of the shell body includes a third shell body wall, the average thickness of the third shell body wall is T, and Rm and T satisfy that 250 MPa ≤ Rm ≤ 2000 MPa, 0.05 mm ≤ T ≤ 0.5 mm, and 60 mm·MPa ≤ T × Rm ≤ 500 mm·MPa. Increasing the tensile strength Rm of at least a partial region of the shell body at the room temperature of 25 °C can improve the deformation ability of the shell body, so that the shell body is less prone to damage during the use of the battery cell, thereby improving the structural stability and service life of the battery cell. However, the tensile strength Rm of at least a partial region of the shell body at room temperature should not be too large, so as to reduce the difficulty in selecting and processing the material of the shell body, thereby saving costs and facilitating processing. In the case that the average thickness T of the third shell body wall of the shell body is relatively small, the structural strength of the third shell body wall can be increased by increasing the tensile strength Rm of the third shell body wall of the shell body at the room temperature of 25 °C, which can not only increase the energy density of the battery cell, but also improve the structural strength and stability of the battery cell. Conversely, in the case that the average thickness T of the third shell body wall of the shell body is relatively large, the structural strength of the shell body can be increased, and the difficulty in selecting a material for the shell body can also be reduced by appropriately reducing the tensile strength Rm of the third shell body wall of the shell body at room temperature, thereby reducing the processing difficulty and processing costs of the battery cell. In addition, T × Rm represents the rigidity of the third shell body wall, and the rigidity of the third shell body wall is limited to be neither too small nor too large, so that the third shell body wall can have a relatively good deformation ability, the processing difficulty can be reduced, and costs can be reduced.

In some embodiments, the capacity of the battery cell is C, and the tensile strength of at least a partial region of the shell body at the temperature of 25 °C is Rm. Rm and C satisfy that 250 MPa ≤ Rm ≤ 2000 MPa and 25 Ah ≤ C ≤ 550 Ah. In one aspect, increasing the capacity C of the battery cell can increase the capacity density of the battery including a plurality of the battery cells. Alternatively, if the capacity C of a single battery cell is increased in the case that the total capacity of the battery remains unchanged, the number of battery cells provided can be reduced, and correspondingly, the number of electrical connections between the plurality of battery cells can also be reduced, thereby reducing the probability of electrical connection failures and helping to improve the reliability of the battery. Moreover, in the case that the capacity C of the battery cell is large, the tensile strength Rm of at least a partial region of the shell body at the room temperature of 25 °C can also be increased to meet the structural strength requirements of the high-capacity battery cell for the shell body, thereby improving the reliability and service life of the battery cell. In another aspect, if the battery cell has a large capacity, the reactions inside the battery cell become more intense, thus placing higher requirements on the structural strength of the shell body. Therefore, the capacity C of the battery cell should not be too large, so as to limit the design requirements for the structural strength of the shell body. This can reduce the difficulty in material selection and processing of the battery cell, reduce costs, and improve the processing efficiency.

In some embodiments, the shell body is provided with an opening, the shell body includes a first shell body wall disposed opposite to the opening and at least two second shell body walls, and the first shell body wall intersects with the second shell body walls; a transition region is disposed between two adjacent second shell body walls among the at least two second shell body walls, and the maximum thickness T1 of the transition region and the maximum thickness T0 of a second shell body wall with the largest thickness among the two second shell body walls satisfy that T1 > T0.

In the embodiments, by providing the transition region between two adjacent second shell body walls, the stress concentration between the two adjacent second shell body walls can be reduced, thereby reducing the risk of structural failure caused by such stress concentration. In addition, by setting the maximum thickness T1 of the transition region to be greater than the maximum thickness T0 of the second shell body wall with the largest thickness among the two adjacent second shell body walls, the thickened transition region can enhance the structural strength of the shell body. This is beneficial for solving the problem of deformation of the shell body during the production and assembly process of the battery cell and the deformation of the shell body due to gas generation-induced expansion during the use of the battery cell.

In some embodiments, the shell body is of an integrally formed structure. The shell body is provided with an opening, the shell body includes a first shell body wall disposed opposite to the opening and at least two second shell body walls, and the first shell body wall intersects with the second shell body walls. Two second shell body walls among the at least two second shell body walls are connected by a first round corner, and the depth H of the shell body and the inner diameter R1 of the first round corner satisfy that 2.5 mm ≤ R1 ≤ 20 mm and 50 mm < H ≤ 250 mm. Therefore, the risk of cracking of the shell body due to force bearing during the integral forming process can be minimized without affecting the energy density of the battery cell, thereby reducing the difficulty in forming the shell body.

In some embodiments, the shell body is of an integrally formed structure. The shell body is provided with an opening, the shell body includes a first shell body wall disposed opposite to the opening and at least two second shell body walls, and the first shell body wall intersects with the second shell body walls. Two second shell body walls among the at least two second shell body walls are connected by a first round corner, and the yield strength Re of the shell body at the temperature of 25 °C and the inner diameter R1 of the first round corner satisfy that 140 MPa ≤ Re ≤ 1000 MPa and 2.5 mm ≤ R1 ≤ 20 mm.

In the embodiments, by using a material having a yield strength Re satisfying that 140 MPa ≤ Re ≤ 1000 MPa to manufacture the shell body, the wall thickness of the shell body can be reduced without reducing the strength of the shell body, thereby increasing the capacity space of the battery cell. In addition, by setting the inner diameter R1 of the first round corner between the adjacent second shell body walls to satisfy that 2.5 mm ≤ R1 ≤ 20 mm, the risk of cracking of the shell body due to force bearing during the integral forming process can be minimized, while reducing the difficulty in forming the shell body.

In some embodiments, the shell body is provided with an opening, the shell body includes a first shell body wall disposed opposite to the opening and a second shell body wall, and the first shell body wall intersects with the second shell body wall. The first shell body wall is connected to the second shell body wall by a second round corner, and the inner diameter r1 of the second round corner and the minimum thickness T2 of a second shell body wall with the smallest thickness among the at least two second shell body walls satisfy that 2.0 ≤ r1/T2 ≤ 30. By setting the ratio of the inner diameter r1 of the second round corner between the first shell body wall and the second shell body wall to the minimum thickness T2 of the second shell body wall with the smallest wall thickness within the range of [2.0, 30], it helps to balance the processing difficulty of the shell body and the space capacity and strength of the battery cell.

In some embodiments, the shell body includes: a first shell body part provided with an opening, where the first shell body part includes a first wall opposite to the opening and a second wall connected to the first wall, and the first wall and the second wall are integrally formed; and a second shell body part fixedly connected to the second wall. In the depth direction of the first shell body part, at least a partial region of the shell body is jointly formed by the first shell body part and the second shell body part. Compared with the technical solution in which the shell body is directly integrally formed, manufacturing the shell body in this manner can reduce the risk of cracking of the shell body during the integral deep drawing forming process.

In some embodiments, the battery cell is used in a battery, and the electrode assembly includes a first tab and a second tab opposite in polarity. The shell body includes a cylindrical body and a cover body connected to the cylindrical body. The cover body and the cylindrical body are of an integrally formed structure. The cylindrical body is arranged around the outer periphery of the electrode assembly, and the cover body is provided with an electrode lead-out hole. At least a part of the cover body is configured to electrically connect a first connecting member of the battery and the first tab. The battery cell further includes a second electrode terminal configured to electrically connect a second connecting member of the battery and the second tab, where the second electrode terminal is insulatedly disposed on the cover body and mounted at the electrode lead-out hole, one of the cover body and the second electrode terminal is a positive output pole of the battery cell, and the other is a negative output pole of the battery cell. By using the cover body and the second electrode terminal as output poles, the structure of the battery cell can be simplified and the current passage capacity of the battery cell can be ensured. The cover body and the second electrode terminal are located at the same end of the battery cell, so that the first connecting member and the second connecting member can be assembled on the same side of the battery cell, which can simplify the assembly process and improve the efficiency in assembling a plurality of battery cells into a group.

In some embodiments, the second tab is disposed at an end of the electrode assembly facing the cover body, and the first tab is disposed at the other end of the electrode assembly facing away from the cover body; the cylindrical body is configured to connect the first tab and the cover body, so that the first tab is electrically connected to the cover body. In the embodiments of the present application, by disposing the first tab and the second tab at two ends of the electrode assembly, respectively, the risk of electrical connection between the first tab and the second tab can be reduced, and the current passage area of the first tab and the current passage area of the second tab can be increased.

In some embodiments, the electrode assembly includes a first tab; the shell body includes a cylindrical body and a cover body connected to the cylindrical body, the cylindrical body is arranged around the outer periphery of the electrode assembly, the cover body includes a first electrode terminal, the first tab is electrically connected to the first electrode terminal through the cylindrical body, the shell body is of a multi-layer structure, and the resistivity of the multi-layer structure varies across the layers. The electrode assembly includes a first tab, the first tab is electrically connected to a first electrode terminal of the battery cell through the shell body, the shell body is of a multi-layer structure, and the resistivity of the multi-layer structure varies across the layers. By allowing the first tab to be electrically connected to the first electrode terminal through the cylindrical body, the structure of the battery cell can be simplified; by configuring the shell body as a multi-layer structure and allowing the resistivity of the multi-layer structure to vary across the layers, the current passage capacity of the battery cell can be improved by a layer with lower resistivity, and the structural strength of the shell body can be improved by a layer with higher resistivity. This can not only improve the performance of the battery cell, but also improve the structural strength of the battery cell, thereby prolonging the service life of the battery cell.

In some embodiments, the shell body is of a multi-layer structure. The material of the outermost shell body of the shell body includes at least one of the following: aluminum, aluminum alloy, copper, copper alloy, and chromium. In the case that the material of the outermost shell body includes aluminum, the aluminum is oxidized into dense aluminum oxide, such that corrosion resistance can be achieved; in the case that the material of the outermost shell body includes copper, the copper is oxidized into copper oxide, namely, verdigris, such that corrosion resistance can be achieved; in the case that the material of the outermost shell body includes chromium, the chromium is oxidized into chromium oxide, which also offers corrosion resistance. Therefore, when the outermost shell body is made of the above anti-corrosion materials, the other shell body layers located at the inner side of the outermost shell body can be protected by the outermost shell body, which can improve the structural stability of the shell body and improve the service life of the shell body.

In a second aspect, provided is a battery. The battery includes a plurality of battery cells, and the battery cell is the battery cell according to the first aspect or according to any one of the embodiments of the first aspect.

In a third aspect, provided is an electric device. The electric device includes a battery, the battery includes the battery cell according to the first aspect or according to any one of the embodiments of the first aspect, and the battery is configured to supply power to the electric device.

In some embodiments, the electric device is a vehicle, a ship, or a spacecraft.

### BRIEF DESCRIPTION OF THE DRAWINGS

FIG. 1 is a schematic diagram of a vehicle according to one embodiment of the present application;
FIG. 2 is a schematic diagram of an exploded structure of a battery according to one embodiment of the present application;
FIG. 3 is a schematic structural diagram of a battery cell according to one embodiment of the present application;
FIG. 4 is a schematic diagram of an exploded structure of a battery cell according to one embodiment of the present application;
FIG. 5 is a schematic cutaway diagram of an electrode assembly according to one embodiment of the present application;
FIG. 6 is a schematic cutaway diagram of a negative electrode plate or a positive electrode plate of an electrode assembly according to one embodiment of the present application;
FIG. 7 is a schematic structural diagram of a fixture for cyclic charging fatigue test according to one embodiment of the present application;
FIG. 8 is a schematic structural diagram from a side view of a shell body of a battery cell according to one embodiment of the present application;
FIG. 9 is a schematic diagram of a cutaway structure of a shell body of a battery cell according to one embodiment of the present application;
FIG. 10 is a schematic exploded diagram of a battery cell according to one embodiment of the present application;
FIG. 11 is a cutaway diagram of a shell body according to one embodiment of the present application;
FIG. 12 is a schematic diagram of a transition region of a shell body according to one embodiment of the present application;
FIG. 13 is a schematic diagram of another transition region of a shell body according to one embodiment of the present application;
FIG. 14 is a schematic diagram of the material flow of a shell body during the integral forming process according to one embodiment of the present application;
FIG. 15 is a schematic diagram showing the force bearing of a shell body during the integral forming process according to one embodiment of the present application;
FIG. 16 is another cutaway diagram of a shell body according to one embodiment of the present application;
FIG. 17 is a partially enlarged schematic diagram of portion B in FIG. 10;
FIG. 18 is an exploded schematic diagram of a shell body according to one embodiment of the present application;
FIG. 19 is a schematic structural diagram of a second shell body part according to one embodiment of the present application;
FIG. 20 is another schematic structural diagram of a second shell body part according to one embodiment of the present application;
FIG. 21 is another exploded schematic diagram of a shell body according to one embodiment of the present application;
FIG. 22 is a schematic cross-sectional diagram of a shell body according to one embodiment of the present application;
FIG. 23 is an enlarged diagram of a partial structure of a shell body according to one embodiment of the present application;
FIG. 24 is a schematic cutaway diagram of a partial structure of a battery according to another embodiment of the present application;
FIG. 25 is a schematic diagram of an exploded structure of a battery cell according to another embodiment of the present application;
FIG. 26 is a schematic diagram of a cutaway structure of a battery cell according to another embodiment of the present application;
FIG. 27 is a schematic cutaway diagram of a partial structure of a battery according to another embodiment of the present application; and
FIG. 28 is a schematic cutaway diagram of another partial structure of a battery according to another embodiment of the present application.

The drawings are not drawn to scale.

### DETAILED DESCRIPTION

The technical solutions in the embodiments of the present application will be described below with reference to the drawings.

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments. It will be explicitly and implicitly appreciated by those skilled in the art that the described embodiments of the present application can be combined with other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two). Similarly, "plurality of groups" refers to two or more (including two) groups, and "plurality of pieces" refers to two or more (including two) pieces.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

In some embodiments, the battery cell in the embodiments of the present application may be a metal battery. Specifically, the metal battery may include a lithium metal secondary battery, a sodium metal battery, a magnesium metal battery, and the like. This is not limited in the embodiments of the present application.

The battery cell generally includes an electrode assembly. The electrode assembly includes a positive electrode, a negative electrode, and a separator. During the charging and discharging processes of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector has two surfaces opposite to each other in a thickness direction thereof, and the positive electrode active material is disposed on either or both of the two opposite surfaces of the positive electrode current collector.

As an example, a metal foil, a foam metal, or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The foam metal may be foam nickel, foam copper, foam aluminum, foam alloy, foam carbon, or the like. The composite current collector may include a polymer material base layer and a metal layer. The composite current collector may be fabricated by forming a metal material (aluminum, aluminum alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO4), a composite material of lithium manganese phosphate and carbon, lithium manganese iron phosphate, and a composite material of lithium manganese iron phosphate and carbon.

In some embodiments, the negative electrode may be a negative electrode plate, and the negative electrode plate may include a negative electrode current collector and a negative electrode active material disposed on at least one surface of the negative electrode current collector.

As an example, the negative electrode current collector has two surfaces opposite to each other in a thickness direction thereof, and the negative electrode active material is disposed on either or both of the two opposite surfaces of the negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be fabricated by forming a metal material (copper, copper alloy, nickel, nickel alloy, titanium, titanium alloy, silver, silver alloy, and the like) on a polymer material substrate (such as a substrate made of polypropylene, polyethylene terephthalate, polybutylene terephthalate, polystyrene, and polyethylene).

As an example, the negative electrode active material may be a negative electrode active material known in the art for use in battery cells. As an example, the negative electrode active material may include at least one of the following materials: artificial graphite, natural graphite, soft carbon, hard carbon, a silicon-based material, a tin-based material, lithium titanate, and the like.

In some embodiments, the electrode assembly further includes a separator. The separator is disposed between the positive electrode and the negative electrode.

In some embodiments, the separator is a separation film. The present application does not particularly limit the type of the separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene difluoride, and ceramic.

In some embodiments, the separator is a solid-state electrolyte. The solid-state electrolyte is disposed between the positive electrode and the negative electrode, serving both to transport ions and to isolate the positive electrode and the negative electrode.

In some embodiments, the battery cell further includes an electrolyte that serves to conduct ions between the positive electrode and the negative electrode. The present application does not specifically limit the type of the electrolyte, which can be selected according to needs. The electrolyte may be liquid-state, gel-state, or solid-state.

In some embodiments, the electrode assembly is provided with tabs that can conduct current out from the electrode assembly. The tabs include a positive electrode tab and a negative electrode tab.

In some embodiments, the battery cell may include a shell. The shell is configured to encapsulate components such as electrode assemblies and electrolytes. The shell may be a steel shell, an aluminum shell, a plastic shell (such as polypropylene), a composite metal shell (such as a copper-aluminum composite shell), an aluminum-plastic film, or the like. The shell includes a shell body and a cover plate.

The battery described in the embodiments of the present application may include one or more battery cells to provide a single physical module with a higher voltage and capacity. When there are a plurality of battery cells, the plurality of battery cells are connected in series, in parallel, or in series-parallel by a busbar component.

In some embodiments, the battery may be a battery pack. The battery pack includes a case and a battery cell, and the battery cell or the battery module is accommodated in the case.

In some embodiments, the case may be a part of the chassis structure of the vehicle. For example, part of the case may become at least a part of the floor of the vehicle, or a part of the case may become at least a part of a crossmember and a longitudinal member of the vehicle.

In some embodiments, the battery may be located in an energy storage device. The energy storage device includes an energy storage container, an energy storage electrical cabinet, and the like.

Battery technology advancement requires consideration of various design factors at the same time, such as energy density, cycle life, discharge capacity, charging and discharging rate, and other performance parameters. In addition, the safety and stability of the battery also need to be considered. For example, the energy of the battery cell can be effectively increased by properly selecting the positive electrode active material of the positive electrode plate of the electrode assembly or the negative electrode active material of the negative electrode plate, thereby increasing the energy of the battery. Taking the positive electrode plate of the electrode assembly as an example, a nickel element-containing compound may be appropriately added to the positive electrode active material of the positive electrode plate, so that the energy and long cycle life of the battery cell can be improved, but the reactions inside the battery cell are also more severe. Especially in the case of thermal runaway of a battery cell, the runaway speed is faster, the gas production is more intense, and the temperature rises higher. For example, the temperature is usually higher than 800 °C to 900 °C. The shell body of the battery cell is easily damaged or melted if its strength is insufficient, which further causes the connected battery cells to be affected by the battery cell experiencing thermal runaway, resulting in thermal propagation.

Therefore, embodiments of the present application provide a battery cell, a battery, and an electric device, which can resolve the foregoing problems. The battery cell according to the embodiments of the present application includes an electrode assembly and a shell body for accommodating the electrode assembly. The electrode assembly includes a positive electrode plate. The positive electrode plate includes a positive electrode active material enabling reversible de-intercalation and intercalation of metal ions. The positive electrode active material includes a nickel element-containing compound. The melting point of at least a partial region of the shell body is p, and p satisfies that 1200 °C ≤ p ≤ 2000 °C. In the case that the positive electrode active material of the positive electrode plate includes a nickel element-containing compound, the energy density and long cycle life of the battery cell can be effectively increased, but the gas generated during the use of the battery cell will also be increased. Particularly, when thermal runaway occurs in the battery cell, the internal temperature of the battery cell increases rapidly and a large amount of gas is generated. Therefore, appropriately increasing the melting point p of at least a partial region of the shell body will make the shell body less prone to melting, reduce the possibility of explosion of the battery cell, and further reduce the risk of thermal runaway of adjacent battery cells, thereby improving the reliability of the battery. However, the melting point p of the shell body should not be too large, so as to reduce the difficulty in selecting and processing the material of the shell body, thereby saving costs and facilitating processing.

The technical solutions described in the embodiments of the present application are all suitable for various electric devices using batteries.

The electric device may be a vehicle, a mobile phone, a portable device, a laptop computer, a ship, a spacecraft, an electric toy, an electric tool, or the like. The vehicle may be a petrol or diesel vehicle, a natural gas vehicle, or a new energy vehicle, and the new energy vehicle may be a pure electric vehicle, a hybrid electric vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric devices described above are not specially limited in the embodiments of the present application.

For ease of explanation, the following embodiments will be described by taking a vehicle as an example of the electric device.

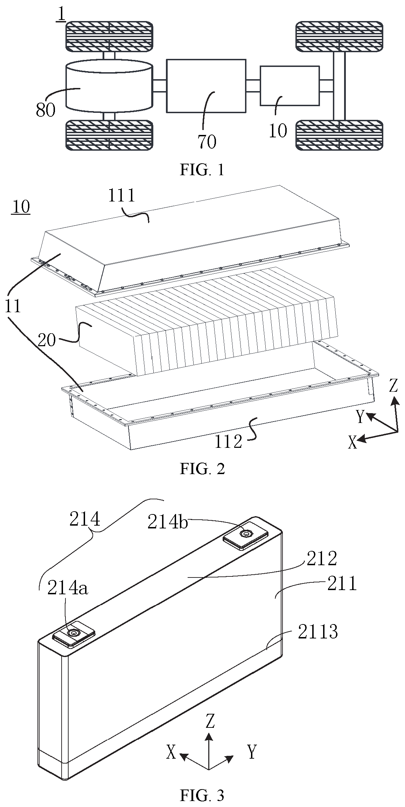

For example, FIG. 1 is a schematic structural diagram of a vehicle 1 according to one embodiment of the present application. The vehicle 1 may be a petrol or diesel vehicle, a natural gas vehicle, or a new energy vehicle. The new energy vehicle may be a pure electric vehicle, a hybrid electric vehicle, or an extended-range vehicle. A motor 80, a controller 70, and a battery 10 may be disposed inside the vehicle 1. The controller 70 is used to control the battery 10 to power the motor 80. For example, the battery 10 may be disposed at the bottom, front, or rear of the vehicle 1. The battery 10 may be used to supply power to the vehicle 1. For example, the battery 10 may serve as an operation power source for the vehicle 1 and is used in a circuit system of the vehicle 1, for example, for operation power needed for starting, navigating, and driving of the vehicle 1. In another embodiment of the present application, the battery 10 may not only serve as an operation power source for the vehicle 1, but also serve as a driving power source for the vehicle 1 to, instead of or in part instead of petrol or diesel or natural gas, provide driving power for the vehicle 1.

To meet different power usage requirements, the battery may include a plurality of battery cells. The plurality of battery cells may be connected in series, in parallel, or in series-parallel. The series-parallel connection refers to a mixture of series connection and parallel connection. The battery may also be referred to as a battery pack. For example, the plurality of battery cells may be first connected in series, in parallel, or in series-parallel to form a battery module, and then a plurality of battery modules are connected in series, in parallel, or in series-parallel to form a battery. That is, the plurality of battery cells may be directly assembled into a battery, or may be first assembled into battery modules, which are then assembled into a battery.

For example, FIG. 2 shows a schematic structural diagram of a battery 10 according to one embodiment of the present application. The battery 10 may include a plurality of battery cells 20. The battery 10 may further include a case 11, and the interior of the case 11 is a hollow structure. The plurality of battery cells 20 are accommodated in the case 11. FIG. 2 shows a possible implementation of the case 11 according to the embodiments of the present application. As shown in FIG. 2, the case 11 may include two case parts, herein referred to as a first case part 111 and a second case part 112, respectively, and the first case part 111 and the second case part 112 are snap-fitted together. The shapes of the first case part 111 and the second case part 112 may be determined based on the shape of the combination of a plurality of battery cells 20, and at least one of the first case part 111 and the second case part 112 has one opening. For example, as shown in FIG. 2, the first case part 111 and the second case part 112 may each be a hollow rectangular parallelepiped, each having only one open face. The opening of the first case part 111 and the opening of the second case part 112 may be disposed opposite to each other, and the first case part 111 and the second case part 112 are snap-fitted together to form the case 11 with an enclosed chamber. The chamber may be configured to accommodate a plurality of battery cells 20. The plurality of battery cells 20, after being connected in parallel, in series, or in series-parallel, are disposed inside the case 11 formed after the first case part 111 and the second case part 112 are snap-fitted together.

For another example, unlike the configuration shown in FIG. 2, only one of the first case part 111 and the second case part 112 may be a hollow rectangular parallelepiped with an opening, while the other is plate-shaped so as to lid the opening. For example, in an example where the second case part 112 is a hollow rectangular parallelepiped and only one face is the open face and the first case part 111 is plate-shaped, the first case part 111 lids the opening of the second case part 112 to form the case 11 with an enclosed chamber. The embodiments of the present application are not limited thereto.

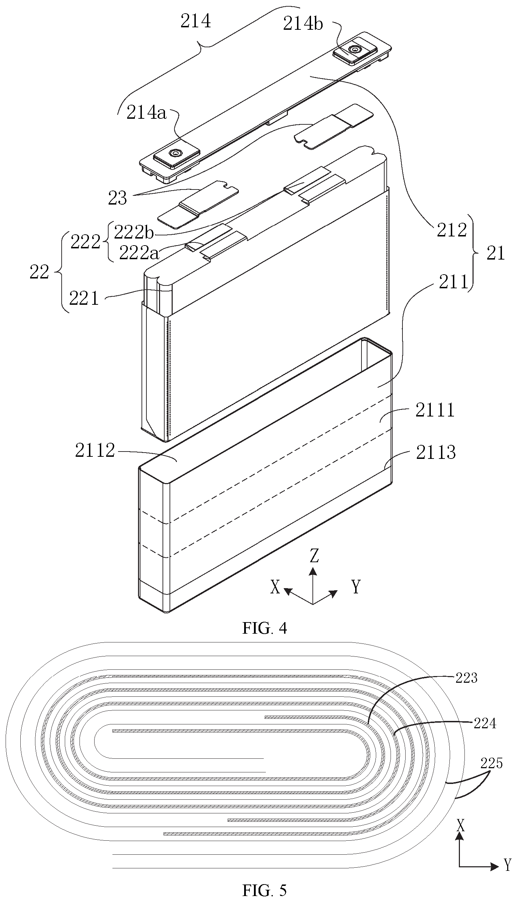

FIG. 3 shows a schematic structural diagram of a battery cell 20 according to one embodiment of the present application. For example, the battery cell 20 shown in FIG. 3 may be any one of the battery cells 20 in the battery 10 shown in FIG. 2. FIG. 4 shows a schematic diagram of a partially exploded structure of a battery cell 20 according to one embodiment of the present application. For example, FIG. 4 may be a schematic diagram of a partially exploded structure of the battery cell 20 shown in FIG. 3.

In the embodiments of the present application, as shown in FIGs. 3 and 4, the battery cell 20 may include an electrode assembly 22 and a shell body 211. Specifically, the electrode assembly 22 includes a positive electrode plate 223; the positive electrode plate 223 includes a positive electrode active material enabling reversible de-intercalation and intercalation of metal ions, and the positive electrode active material includes a nickel element-containing compound; the shell body 211 is configured to accommodate the electrode assembly 22, the melting point of at least a partial region of the shell body 211 is p, and p satisfies that 1200 °C ≤ p ≤ 2000 °C.

As shown in FIGs. 3 and 4, the battery cell 20 according to the embodiments of the present application may include a shell 21. Specifically, the shell 21 may include a shell body 211. The shell body 211 is of a hollow structure having at least one opening. Further, the battery cell 20 may further include a cover plate 212. For example, the shell 21 includes a cover plate 212, and the cover plate 212 is configured to lid the opening of the shell body 211, so that the electrode assembly 22 can be accommodated in the shell 21.

It should be understood that the shell body 211 according to the embodiments of the present application is a component configured to accommodate the electrode assembly 22, and the shell body 211 may be of a hollow structure with an opening formed at one or multiple ends. For example, if the shell body 211 is of a hollow structure with an opening formed at one end, one cover plate 212 may be provided; if the shell body 211 is of a hollow structure with an opening formed at each of two opposite ends, two cover plates 212 may be provided, and the two cover plates 212 respectively lid the openings at the two ends of the shell body 211.

It should be understood that the battery cell 20 according to the embodiments of the present application may be a cylindrical battery cell, a prismatic battery cell, a pouch battery cell, or a battery cell of other shapes. The prismatic battery cell may include a square-shell battery cell, a blade-shaped battery cell, and other polygonal prismatic battery cells, such as a hexagonal prismatic battery cell or an octagonal prismatic battery cell. The embodiments of the present application are not limited thereto.

Based on battery cells 20 of different shapes, the shell body 211 of the battery cell 20 may be in a variety of shapes. For example, the shell body 211 is cylindrical or polygonal prismatic. Illustratively, as shown in FIGs. 3 and 4, in the embodiments of the present application, the description is mainly provided by taking an example where the shell body 211 is of a hollow rectangular parallelepiped structure. In addition, in the embodiments of the present application, an example where the shell body 211 is of a hollow structure with an opening formed at one end is mainly used. However, the related description of the embodiments of the present application is also suitable for battery cells 20 of other shapes, which will not be repeated herein for brevity.

It should be understood that the cover plate 212 according to the embodiments of the present application is a component configured to lid the opening of the shell body 211 and thereby isolate the internal environment of the battery cell 20 from the external environment. The shape of the cover plate 212 may be adapted to the shape of the shell body 211. As shown in FIGs. 3 and 4, the shell body 211 is of a rectangular parallelepiped structure, and the cover plate 212 is of a rectangular plate-shaped structure matching the shell body 211.

In the battery cell 20, the electrode assembly 22 is the component of the battery cell 20 where electrochemical reactions occur, and one or more electrode assemblies 22 may be provided in the shell body 211 based on actual use requirements. For example, as shown in FIGs. 3 and 4, two electrode assemblies 22 are provided in the battery cell 20. The electrode assembly 22 may be cylindrical, rectangular parallelepiped-shaped, or in other shapes. If the electrode assembly 22 is of a cylindrical structure, the shell body 211 may also be of a cylindrical structure, and if the electrode assembly 22 is of a rectangular parallelepiped structure, the shell body 211 may also be of a rectangular parallelepiped structure.

It should be understood that, as shown in FIGs. 3 and 4, the electrode assembly 22 according to the embodiments of the present application may include a tab 222 and an electrode main body part 221. The tab 222 of the electrode assembly 22 may include a positive electrode tab 222a and a negative electrode tab 222b. The positive electrode tab 222a may be formed by stacking portions of the positive electrode plate 223 that are not coated with the positive electrode active material, and the negative electrode tab 222b may be formed by stacking portions of the negative electrode plate 224 that are not coated with the negative electrode active material. The electrode main body part 221 may be formed by stacking the positive electrode plate 223 and the negative electrode plate 224 or winding them together.

The positive electrode plate 223 according to the embodiments of the present application is provided with a positive electrode active material enabling reversible de-intercalation and intercalation of metal ions. The positive electrode active material can be flexibly tailored according to practical applications. For example, the positive electrode active material may include a nickel element-containing compound. This can effectively increase the energy density and long cycle life of the battery cell 20, but this will also increase the temperature and gas generated during the use of the battery cell 20. Particularly, when thermal runaway occurs during the use of the battery cell 20, the internal temperature of the battery cell 20 increases rapidly and a large amount of gas is generated.

Therefore, appropriately increasing the melting point p of at least a partial region of the shell body 211 will make the shell body 211 less prone to melting, reduce the possibility of explosion of the battery cell 20, and further reduce the risk of thermal runaway of adjacent battery cells 20, thereby improving the reliability of the battery 10. However, the melting point p of at least a partial region of the shell body 211 should not be too large, so as to reduce the difficulty in selecting and processing the material of the shell body 211, thereby saving costs and facilitating processing. For example, the melting point p of at least a partial region of the shell body 211 may be usually set to satisfy that 1200 °C ≤ p ≤ 2000 °C.

It should be understood that the value range of the melting point p of at least a partial region of the shell body 211 according to the embodiments of the present application may be adjusted according to practical applications. For example, the melting point p of at least a partial region of the shell body 211 usually satisfies that 1200 °C ≤ p ≤ 2000 °C. For another example, the melting point p of at least a partial region of the shell body 211 may also satisfy that 1300 °C ≤ p ≤ 1800 °C. In one aspect, appropriately increasing the value of the melting point p can improve the resistance to melting of this part of the shell body 211 when thermal runaway occurs in the battery cell 20, making the shell body 211 less prone to melting, thereby reducing the risk of thermal runaway of adjacent battery cells 20, i.e., reducing the risk of thermal propagation, and improving the reliability of the battery 10. Meanwhile, the melting point p cannot be too large, so as to select a suitable material and reduce the processing difficulty, thereby saving costs and facilitating processing.

Further, the melting point p of at least a partial region of the shell body 211 may also be set to satisfy that 1400 °C ≤ p ≤ 1600 °C, which can increase the structural strength of the shell body 211 when thermal runaway occurs in the battery cell 20, making the shell body 211 less prone to melting, maintaining the structural integrity of this part of the shell body 211, and reducing the risk of thermal runaway of adjacent battery cells 20. In addition, the processing difficulty can be reduced, and the costs can be saved.

In some embodiments, the value range of the melting point p of at least a partial region of the shell body 211 may also be set to other values. For example, the value of the melting point p may be any one of the following values or a value between any two of the following values: 1200 °C, 1250 °C, 1300 °C, 1350 °C, 1400 °C, 1450 °C, 1500 °C, 1550 °C, 1600 °C, 1650 °C, 1700 °C, 1750 °C, 1800 °C, 1850 °C, 1900 °C, 1950 °C, and 2000 °C.

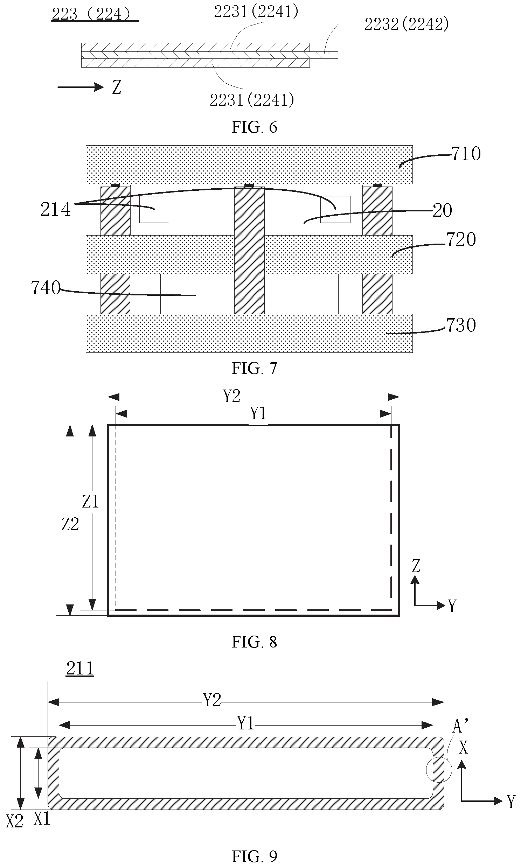

FIG. 5 shows a schematic cutaway diagram of the electrode assembly 22 according to an embodiment of the present application. For example, the schematic cutaway diagram shown in FIG. 5 may be the schematic cutaway diagram of the electrode assembly 22 shown in FIG. 4, and the cutting plane is perpendicular to the height direction Z of the battery cell 20. FIG. 6 shows a partial schematic cutaway diagram of the positive electrode plate 223 or the negative electrode plate 224 according to an embodiment of the present application. For example, FIG. 6 may be a partial schematic cutaway diagram of the negative electrode plate 224 of the electrode assembly 22 shown in FIG. 5 in the thickness direction thereof, or may be a partial schematic cutaway diagram of the positive electrode plate 223 of the electrode assembly 22 shown in FIG. 5 in the thickness direction thereof.

As shown in FIGs. 3-6, the electrode assembly 22 according to the embodiments of the present application includes a positive electrode plate 223 and a negative electrode plate 224. The electrode assembly 22 may be formed by stacking the positive electrode plate 223 and the negative electrode plate 224 or winding them together. For example, the electrode assembly 22 may include a plurality of positive electrode plates 223 and a plurality of negative electrode plates 224. In the thickness direction Y of the electrode assembly 22, the plurality of positive electrode plates 223 and the plurality of negative electrode plates 224 are alternately stacked to form the stacked electrode assembly 22. For another example, the electrode assembly 22 may include a plurality of positive electrode plates 223, and the negative electrode plate 224 includes a plurality of bent sections and a plurality of stacked sections that are connected to each other and alternately disposed. After the bent sections are bent, the plurality of positive electrode plates 223 and the plurality of stacked sections of the negative electrode plate 224 are alternately stacked to form the stacked electrode assembly 22. For another example, for the electrode assembly, the positive electrode plate 223 and the negative electrode plate 224 may be wound around each other to form the wound electrode assembly 22. For convenience of description, the wound electrode assembly 22 is taken as an example in the drawings of the embodiments of the present application, but the embodiments of the present application are not limited thereto. Further, the electrode assembly 22 may further include a separation film 225 for separating the positive electrode plate 223 from the negative electrode plate 224.

In the embodiments of the present application, the positive electrode plate 223 includes a positive electrode active material. For example, the positive electrode active material coated on the positive electrode plate 223 may be used to form a positive electrode active substance layer 2231, and the positive electrode active substance layer 2231 may be disposed on the surface of at least one side of a positive electrode current collector 2232. For example, the positive electrode active substance layer 2241 may be disposed on both sides of the positive electrode current collector 2232 that are perpendicular to the thickness direction thereof. However, the embodiments of the present application are not limited thereto.

In some embodiments, a metal foil or a composite current collector may be used as the positive electrode current collector 2232. As an example of the metal foil, an aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

It should be understood that the positive electrode active material according to the embodiments of the present application may be flexibly tailored according to practical applications. For example, the positive electrode active material may include a nickel element-containing compound. As an example, the nickel element-containing compound includes a layered lithium-containing transition metal oxide, and the molar amount of the nickel element in the layered lithium-containing transition metal oxide accounts for not less than 50% of the total molar amount of the transition metal element in the layered lithium-containing transition metal oxide. Increasing the molar proportion of the nickel element in the layered lithium-containing transition metal oxide to not less than 50% can effectively enhance the energy density and long cycle life of the battery cell 20. However, the proportion should not be set too large, as it would increase the processing difficulty of the electrode assembly 22, thereby increasing the processing costs of the battery cell 20.

Further, the molar proportion of the nickel element in the layered lithium-containing transition metal oxide may be not less than 70%, or not less than 80%, or not less than 90%. In this way, while the energy density of the battery cell 20 can be effectively increased, the processing difficulty of the electrode assembly 22 is also controlled to reduce the processing costs of the battery cell 20.

In some embodiments, the value of the molar proportion of the nickel element in the layered lithium-containing transition metal oxide according to the embodiments of the present application may also be set to other values. For example, the value of the molar proportion of the nickel element in the layered lithium-containing transition metal oxide may be any one of the following values or a value between any two of the following values: 50%, 53%, 55%, 58%, 60%, 63%, 65%, 68%, 70%, 73%, 75%, 78%, 80%, 83%, 85%, 88%, 90%, 92%, 94%, 96%, and 98%.

It should be understood that the test method for the molar amount of the nickel element in the layered lithium-containing transition metal oxide and the total molar amount of the transition metal element in the layered lithium-containing transition metal oxide according to the embodiments of the present application can be selected according to practical applications and can be determined using instruments and methods known in the art. For example, the positive electrode active material may be laid down and adhered to a conductive adhesive to prepare a sample to be tested with a length of 6 cm and a width of 1.1 cm; the morphology of the particles is tested using a scanning electron microscope & energy spectrometer (e.g., ZEISSSigma300). For the test, reference may be made to JY/T010-1996. In order to ensure the accuracy of the test results, 20 different regions may be randomly selected from the sample to be tested for the scanning test, and the content of the layered lithium-containing transition metal oxide in each region is statistically analyzed and calculated at a certain magnification (e.g., not less than 1000-fold). For example, the average value of the test results of 20 test regions may be taken as the amount of the layered lithium-containing transition metal oxide in the positive electrode active material, and the molar amount of the layered lithium-containing transition metal oxide is then determined. Similarly, the molar amount of the nickel element in the layered lithium-containing transition metal oxide may also be determined by using this method.

In some embodiments, the layered lithium-containing transition metal oxide may include one or more of lithium cobaltate and a ternary material. As an example, the layered lithium-containing transition metal oxide includes LiaNibCocMdOeAf, where: 0 < a ≤ 1.2; 0.5 ≤ b < 1, optionally, 0.9 ≤ b < 1; 0 < c < 1; 0 < d < 1; 1 ≤ e ≤ 2; 0 ≤ f ≤ 1; M includes, but is not limited to, one or more of Mn, Al, Zr, Zn, Cu, Cr, Mg, Fe, V, Ti, and B, and A includes, but is not limited to, one or more of N, F, S and Cl. The molar proportion b of the nickel element in the layered lithium-containing transition metal oxide is set to be not less than 50%, that is, the proportion b satisfies that 0.5 ≤ b < 1, which may further satisfy that 0.8 ≤ b < 1 or 0.9 ≤ b < 1, thereby further improving the energy density of the battery cell 20.

As an example, the layered lithium-containing transition metal oxide may include, but is not limited to, one or more of LiNi0.5 Co0.2 Mn0.3 O2 (abbreviated as NCM523), LiNi0.5 Co0.25 Mn0.25 O2 (abbreviated as NCM211), LiNi0.6 Co0.2 Mn0.2 O2 (abbreviated as NCM622), LiNi0.8 Co0.1 Mn0.1 O2 (abbreviated as NCM811), LiNi0.9 Co0.06 Mn0.04 O2, LiNi0.96 Co0.02 Mn0.02 O2, and LiNi0.85 Co0.15 Al0.05 O2.

In some embodiments, the positive electrode active material may further include other materials. For example, the positive electrode active material may further include a positive electrode conductive agent. The present application does not particularly limit the type of the positive electrode conductive agent. As an example, the positive electrode conductive agent may include one or more of superconducting carbon, conductive graphite, acetylene black, carbon black, Ketjen black, a carbon dot, a carbon nanotube, graphene, and a carbon nanofiber.

In some embodiments, the positive electrode active material may further include a positive electrode binder. The present application does not particularly limit the type of the positive electrode binder. As an example, the positive electrode binder may include one or more of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin.

In some embodiments, the positive electrode plate 223 may be prepared by the following method: The positive electrode active substance layer 2231 is usually formed by coating the positive electrode current collector 2232 with a positive electrode slurry, drying, and cold pressing. The positive electrode slurry is usually formed by dispersing a positive electrode active material, a positive electrode binder, a positive electrode conductive agent, and the like in a solvent and uniformly stirring. The solvent may be N-methylpyrrolidone (NMP) or deionized water, but the embodiments of the present application are not limited thereto.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution manufactured above was injected into the dried cell. After procedures including packaging, standing, formation, shaping, capacity testing, and the like, the manufacturing of the lithium-ion battery cell 20 was completed.

In the following examples and comparative examples, the melting point of the shell body 211 of the battery cell 20 is p. To achieve different melting points, different materials are correspondingly selected for the shell body 211; the capacity of the battery cell 20 is C; the wall thickness of the wall with the largest area of the battery cell 20 is T. The specific parameters described above are set as shown in Table 1 below. In addition, in each example and comparative example, all regions of the shell body 211 are made of the same material. In addition, the battery cells 20 in the following examples and comparative examples all have the same settings, except for the different parameter settings shown in Table 1. For example, in each of the examples, the positive electrode active material of the positive electrode plate 223 of the electrode assembly 22 of the battery cell 20 includes a nickel element-containing compound, where the nickel element-containing compound includes a layered lithium-containing transition metal oxide, and the molar amount of the nickel element in the layered lithium-containing transition metal oxide accounts for 95% of the total molar amount of the transition metal element in the layered lithium-containing transition metal oxide.

The battery cells 20 in the following comparative examples and examples were subjected to battery cell test with reference to the short-circuit test method in section 6.2.4 of *GBT31485-2015 Safety Requirements and Test Methods for Traction Battery of Electric Vehicle.* After the test, the integrity of the shell body 211 was observed, that is, whether the shell body 211 melts was observed.

**Table 1**

| | p(°C) | T(mm) | C(Ah) | Material of shell body | Test results |
|---|---|---|---|---|---|
| Comparative Example 1 | 660 | 0.7 | 350 | Aluminum | Shell body melts |
| Comparative Example 2 | 660 | 0.15 | 72 | Aluminum | Shell body melts |
| Example 1 | 1250 | 0.15 | 350 | High carbon ferromanganese | Shell body remains intact |
| Example 2 | 1250 | 0.15 | 72 | High carbon ferromanganese | Shell body remains intact |
| Example 3 | 1425 | 0.15 | 350 | Mild steel | Shell body remains intact |
| Example 4 | 1425 | 0.15 | 72 | Mild steel | Shell body remains intact |
| Example 5 | 1510 | 0.15 | 350 | Stainless steel | Shell body remains intact |
| Example 6 | 1510 | 0.15 | 72 | Stainless steel | Shell body remains intact |

By comparing the two comparative examples with six examples in Table 1 above, it can be seen that in the case that the shell body 211 is made of different materials, different melting points p can be correspondingly determined. In the case that the melting point p satisfies that 1200 °C ≤ p ≤ 2000 °C, for example, in Examples 1-6, the shell body 211 of the battery cell 20 does not melt, and the design requirements of the battery cell 20 can be met. In addition, in the case that other parameters of the battery cell 20 fluctuate to different extents, for example, the capacity C of the battery cell 20 is different, or the thickness of the wall with the largest area of the shell body 211 is different, the battery cell 20 does not melt, and the design requirements of the battery cell 20 can be met. However, in the case that the melting point p does not satisfy that 1200 °C ≤ p ≤ 2000 °C, for example, in Comparative Examples 1-2, the shell body 211 of the battery cell 20 melts, thus failing to meet the design requirements of the battery cell 20.

It should be understood that the battery cell 20 according to the embodiments of the present application may also meet other design requirements. Specifically, the tensile strength of at least a partial region of the shell body 211 at the temperature of 500 °C is Rn, and Rn satisfies that 100 MPa ≤ Rn ≤ 1200 MPa.

The positive electrode plate 223 according to the embodiments of the present application is provided with a positive electrode active material enabling reversible de-intercalation and intercalation of metal ions. The positive electrode active material can be flexibly tailored according to practical applications. For example, the positive electrode active material may include a nickel element-containing compound. This can effectively increase the energy density and long cycle life of the battery cell 20, but this will also increase the gas generated during the use of the battery cell 20. Particularly, when thermal runaway occurs during the use of the battery cell 20, the internal temperature of the battery cell 20 increases rapidly and a large amount of gas is generated.

Therefore, appropriately increasing the tensile strength Rn of at least a partial region of the shell body 211 at the high temperature of 500 °C can improve the deformation ability of this part of the shell body 211 when thermal runaway occurs in the battery cell 20, making the shell body 211 less prone to rapid damage and explosion, thereby reducing the risk of thermal runaway of adjacent battery cells 20 and improving the reliability of the battery 10. However, the tensile strength Rn of at least a partial region of the shell body 211 at high temperature should not be too large, as it would increase the processing difficulty, for example, easily scratching the grinding tool or reducing the service life of the grinding tool. Therefore, appropriately reducing the tensile strength Rn can save costs and facilitate processing. For example, the tensile strength Rn may be usually set to satisfy that 100 MPa ≤ Rn ≤ 1200 MPa.

It should be understood that the value range of the tensile strength Rn of at least a partial region of the shell body 211 according to the embodiments of the present application at the high temperature of 500 °C may be adjusted according to practical applications. For example, the value of the tensile strength Rn at high temperature may satisfy that 100 MPa ≤ Rn ≤ 1200 MPa. For another example, the value of the tensile strength Rn at high temperature may also satisfy that 112 MPa ≤ Rn ≤ 720 MPa. In one aspect, appropriately increasing the value of the tensile strength Rn can improve the deformation ability of this part of the shell body 211 when thermal runaway occurs in the battery cell 20, making the shell body 211 less prone to rapid damage and explosion, thereby reducing the risk of thermal runaway of adjacent battery cells 20 and improving the reliability of the battery 10. In addition, the tensile strength Rn at high temperature of at least a partial region of the shell body 211 is controlled not to be too large to reduce the processing difficulty, thereby saving costs and facilitating processing.

Further, the value of the tensile strength Rn at high temperature may also be set to satisfy that 152 MPa ≤ Rn ≤ 480 MPa, which can improve the deformation ability of this part of the shell body 211 when thermal runaway occurs in the battery cell 20 and thereby improve the structural strength of the shell body 211, making the shell body 211 less prone to rapid damage and explosion, thereby reducing the risk of thermal runaway of adjacent battery cells 20 and improving the reliability of the battery 10. In addition, the processing difficulty can be reduced, and the costs can be saved.

In some embodiments, the value of the tensile strength Rn at high temperature according to the embodiments of the present application may also be set to other values. For example, the value of the tensile strength Rn at high temperature may be any one of the following values or a value between any two of the following values: 100 MPa, 112 MPa, 130 MPa, 150 MPa, 152 MPa, 168 MPa, 180 MPa, 200 MPa, 228 MPa, 250 MPa, 280 MPa, 300 MPa, 320 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 720 MPa, 750 MPa, 780 MPa, 800 MPa, 830 MPa, 850 MPa, 880 MPa, 900 MPa, 930 MPa, 950 MPa, 980 MPa, 1000 MPa, 1050 MPa, 1100 MPa, 1150 MPa, and 1200 MPa.

It should be understood that the tensile strength according to the embodiments of the present application refers to the maximum stress value borne by a material before breaking. The test method for the tensile strength Rn of at least a partial region of the shell body 211 according to the embodiments of the present application at the high temperature of 500 °C may be selected according to practical applications. For example, the tensile strength Rn can be tested at the high temperature of 500 °C in accordance with the national standard GB/T 228.1-2010.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution prepared above was injected into the dried shell. After procedures including packaging, standing, formation, shaping, capacity testing, and the like, the preparation of the lithium-ion battery cell 20 was completed.

In the following examples and comparative examples, the tensile strength of the shell body 211 of the battery cell 20 at the temperature of 500 °C is Rn. To achieve different tensile strengths Rn, different materials are correspondingly selected for the shell body 211; the capacity of the battery cell 20 is C; the wall thickness of the wall with the largest area of the battery cell 20 is T. The specific parameters described above are set as shown in Table 2 below. In addition, in each example and comparative example, all regions of the shell body 211 are made of the same material, and the tensile strength Rn of the shell body 211 at 500 °C is measured by the method specified in GB/T 228.1-2010. In addition, the battery cells 20 in the following examples and comparative examples all have the same settings, except for the different parameter settings shown in Table 2. For example, in each of the examples, the positive electrode active material of the positive electrode plate 223 of the electrode assembly 22 of the battery cell 20 includes a nickel element-containing compound, where the nickel element-containing compound includes a layered lithium-containing transition metal oxide, and the molar amount of the nickel element in the layered lithium-containing transition metal oxide accounts for 95% of the total molar amount of the transition metal element in the layered lithium-containing transition metal oxide.

The battery cells 20 in the following comparative examples and examples were subjected to a battery cell test with reference to the short-circuit test method in section 6.2.4 of *GBT31485-2015 Safety Requirements and Test Methods for Traction Battery of Electric Vehicle.* After the test, the integrity of the shell body 211 was observed, that is, whether the shell body 211 cracks was observed.

**Table 2**

| | Rn(MPa) | T(mm) | C(Ah) | Material of shell body | Test results |
|---|---|---|---|---|---|
| Comparative Example 1 | 13 | 0.7 | 350 | Aluminum | Shell body cracks |
| Comparative Example 2 | 12 | 0.15 | 72 | Aluminum | Shell body cracks |
| Example 1 | 115 | 0.15 | 350 | Mild steel | Shell body remains intact |
| Example 2 | 113 | 0.15 | 72 | Mild steel | Shell body remains intact |
| Example 3 | 129 | 0.15 | 350 | Mild steel | Shell body remains intact |
| Example 4 | 194 | 0.15 | 350 | Stainless steel | Shell body remains intact |
| Example 5 | 191 | 0.15 | 72 | Stainless steel | Shell body remains intact |
| Example 6 | 234 | 0.15 | 350 | Stainless steel | Shell body remains intact |

By comparing the two comparative examples with six examples in Table 2 above, it can be seen that in the case that the shell body 211 is made of different materials, different tensile strengths Rn can be correspondingly determined. In the case that the tensile strength Rn satisfies that 100 MPa ≤ Rn ≤ 1200 MPa, for example, in Examples 1-6, the shell body 211 of the battery cell 20 does not crack, and the design requirements of the battery cell 20 can be met. In addition, in the case that other parameters of the battery cell 20 fluctuate to different extents, for example, the capacity C of the battery cell 20 is different, or the thickness of the wall with the largest area of the shell body 211 is different, the battery cell 20 does not crack, and the design requirements of the battery cell 20 can be met. However, in the case that the tensile strength Rn does not satisfy that 100 MPa ≤ Rn ≤ 1200 MPa, for example, in Comparative Examples 1-2, the shell body 211 of the battery cell 20 cracks, thus failing to meet the design requirements of the battery cell 20.

In some embodiments, the electrode assembly 22 further includes a negative electrode plate 224. The negative electrode plate 224 includes a negative electrode active material enabling reversible de-intercalation and intercalation of metal ions. The negative electrode active material includes a silicon-based material. The tensile strength of at least a partial region of the shell body 211 at the temperature of 25 °C is Rm, and Rm satisfies that 250 MPa ≤ Rm ≤ 2000 MPa. Increasing the tensile strength Rm of at least a partial region of the shell body 211 at the room temperature of 25 °C can improve the deformation ability of this part of the shell body 211, so that this part of the shell body 211 is less prone to damage during the use of the battery cell 20, thereby improving the structural stability and service life of the battery cell 20. However, the tensile strength Rm of at least a partial region of the shell body 211 at room temperature should not be too large, so as to reduce the difficulty in selecting and processing the material of the shell body 211, thereby saving costs and facilitating processing. For example, the tensile strength Rm of at least a partial region of the shell body 211 at room temperature may be usually set to satisfy that 250 MPa ≤ Rm ≤ 2000 MPa.

It should be understood that the value range of the tensile strength Rm of at least a partial region of the shell body 211 according to the embodiments of the present application at the room temperature of 25 °C may be adjusted according to practical applications. For example, the value of the tensile strength Rm at room temperature may satisfy that 250 MPa ≤ Rm ≤ 2000 MPa. For another example, the value of the tensile strength Rm at room temperature may further satisfy that 400 MPa ≤ Rm ≤ 1200 MPa. In one aspect, increasing the tensile strength Rm of at least a partial region of the shell body 211 at room temperature can improve the deformation ability of this part of the shell body 211 to resist the degree of expansion of the electrode assembly 22, making this part of the shell body 211 less prone to damage, thereby improving the structural stability and service life of the battery cell 20. In another aspect, controlling the tensile strength Rm of at least a partial region of the shell body 211 at room temperature not to be too large can reduce the difficulty in selecting and processing the material of the shell body 211, thereby saving costs and facilitating processing.

Further, the tensile strength Rm of at least a partial region of the shell body 211 at room temperature may also be set to satisfy that 450 MPa ≤ Rm ≤ 800 MPa. By allowing the tensile strength Rm of at least a partial region of the shell body 211 at room temperature to be neither too large nor too small, the deformation ability of this part of the shell body 211 can be improved to resist the degree of expansion of the electrode assembly 22, and the implementation is facilitated and costs are saved as well.

In some embodiments, the value of the tensile strength Rm of at least a partial region of the shell body 211 according to the embodiments of the present application at room temperature may be set to other values. For example, the value of the tensile strength Rm at room temperature may be any one of the following values or a value between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength according to the embodiments of the present application refers to the maximum stress value borne by a material before breaking. The test method for the tensile strength Rm of at least a partial region of the shell body 211 according to the embodiments of the present application at the temperature of 25 °C may be selected according to practical applications. For example, the tensile strength Rm can be tested at the room temperature of 25 °C in accordance with the national standard GB/T 228.1-2010.

In the embodiments of the present application, the negative electrode plate 224 includes a negative electrode active material. For example, the negative electrode active material coated on the negative electrode plate 224 may be used to form a negative electrode active substance layer 2241, and the negative electrode active substance layer 2241 may be disposed on the surface of at least one side of a negative electrode current collector 2242. For example, the negative electrode active substance layer 2241 may be disposed on both sides of the negative electrode current collector 2242 that are perpendicular to the thickness direction thereof.

In some embodiments, a metal foil or a composite current collector may be used as the negative electrode current collector 2242. As an example of the metal foil, a copper foil, a copper alloy foil, an aluminum foil, or an aluminum alloy foil may be used. The composite current collector may include a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

It should be understood that the negative electrode active material according to the embodiments of the present application may be flexibly tailored according to practical applications. Specifically, the negative electrode active material according to the embodiments of the present application may include a silicon-based material, thereby improving the energy density of the battery. For example, the silicon-based material may include at least one of elemental silicon, a silicon-oxygen compound, a silicon-carbon composite, a silicon-nitrogen composite, a silicon-containing alloy, and a silicon-oxygen-carbon composite material.

In some embodiments, the silicon-based material may include a silicon element and one or more of an alkali metal element and an alkaline earth metal element. As an example, the alkali metal element may include Li. As an example, the alkaline earth metal element includes Mg. As an example, the silicon-based material may be a silicon-based material pre-embedded with an alkali metal and/or an alkaline earth metal, for example, may be a silicon-based material pre-embedded with Li and/or Mg.

It should be understood that the mass proportion g of the silicon-based material according to the embodiments of the present application may be flexibly tailored according to practical applications.

For example, the value range of the mass proportion g of the silicon-based material may be set to satisfy that 2% ≤ g ≤ 40%. By adding the silicon-based material to the negative electrode active material of the negative electrode plate 224, the energy density of the battery cell 20 can be effectively increased as the silicon-based material can accommodate more metal ions than other elements, for example, the capacity of the silicon-based material is about ten times that of graphite. In addition, the mass proportion g of the silicon-based material should not be set too large, as it would increase the processing difficulty of the electrode assembly 22 and also increase the degree of deformation of the electrode assembly 22 in the battery cell 20 during use. Particularly, during the charging process of the battery cell 20, the metal ions are intercalated into the silicon-based material of the negative electrode plate 224, which will cause the volume expansion of the electrode assembly 22, thereby increasing the pressure of the electrode assembly 22 on the shell body 211 of the battery cell 20, and further increasing the processing difficulty of the battery cell 20.

Further, the value range of the mass proportion g of the silicon-based material may be set to satisfy that 8% ≤ g ≤ 40%. Appropriately reducing the mass proportion g of the silicon-based material can reduce the processing difficulty of the electrode assembly 22 and can also reduce the degree of deformation of the electrode assembly 22 during the charging and discharging processes of the battery cell 20, i.e., reduce the degree of volume expansion of the electrode assembly 22, thereby reducing the pressure of the electrode assembly 22 on the shell body 211 of the battery cell 20, lowering the requirements for the structural strength of the shell body 211, facilitating processing, and reducing costs.

Further, the value range of the mass proportion g of the silicon-based material may be set to satisfy that 10% ≤ g ≤ 30%. Properly adjusting the mass proportion g of the silicon-based material can effectively increase the energy density of the battery cell 20, reduce the processing difficulty of the electrode assembly 22, and also effectively reduce the degree of deformation of the electrode assembly 22 during the charging and discharging processes of the battery cell 20, thereby lowering the requirements for the structural strength of the shell body 211.

In some embodiments, the value of the mass proportion g of the silicon-based material according to the embodiments of the present application may also be set to other values. For example, the value of the mass proportion g of the silicon-based material may be any one of the following values or a value between any two of the following values: 5%, 8%, 10%, 13%, 15%, 18%, 20%, 23%, 25%, 28%, 30%, 33%, 35%, 38%, 40%, 43%, 45%, 48%, and 50%.

It should be understood that the mass proportion g of the silicon-based material in the negative electrode active material according to the embodiments of the present application indicates that the ratio of the mass of the silicon-based material in the negative electrode active material to the total mass of the negative electrode active material is g. The test method for the mass proportion g of the silicon-based material may be selected according to practical applications and may be tested by using a method known in the art.

In the embodiments of the present application, the negative electrode active material may further include other materials. For example, the negative electrode active material may further include a negative electrode binder. For example, the negative electrode binder may include one or more of styrene-butadiene rubber (SBR), water-soluble unsaturated resin SR-1B, aqueous acrylic resin (e.g., polyacrylic acid (PAA), poly(methacrylic acid) (PMAA), and sodium polyacrylate (PAAS)), polyacrylamide (PAM), polyvinyl alcohol (PVA), sodium alginate (SA), and carboxymethyl chitosan (CMCS). This is not limited in the embodiments of the present application.

In some embodiments, the negative electrode active material may further include a negative electrode conductive agent. The present application does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the negative electrode active material may further include other auxiliary agents. As an example, other auxiliary agents may include thickeners, such as sodium carboxymethylcellulose (CMC) and PTC thermistor materials.

The negative electrode plate 224 does not exclude additional functional layers other than the negative electrode active substance layer 2241. For example, in some embodiments, the negative electrode plate 224 may further include a conductive bottom coating (e.g., composed of a conductive agent and a binder) interposed between the negative electrode current collector 2242 and the negative electrode active substance layer 2241 and disposed on the surface of the negative electrode current collector 2242. In some embodiments, the negative electrode plate 224 may further include a protective layer covering the surface of the negative electrode active substance layer 2241.

In some embodiments, the negative electrode plate 224 may be prepared by the following method: A negative electrode active material, optionally a negative electrode binder, optionally a negative electrode conductive agent, and optionally other auxiliary agents are dispersed in a solvent, the mixture is uniformly stirred to form a negative electrode slurry; the negative electrode slurry is coated on the negative electrode current collector 2242, and after procedures including drying, cold pressing, and the like, the negative electrode plate 224 is formed. The solvent may be N-methylpyrrolidone (NMP) or deionized water, but the embodiments of the present application are not limited thereto.

In the embodiments of the present application, the value of the mass proportion g of the silicon-based material and the value of the tensile strength Rm of at least a partial region of the shell body 211 at the temperature of 25 °C may be limited by each other to balance the relationship between the energy density and the structural strength of the battery cell 20. For example, in the negative electrode active material, the mass proportion of the silicon-based material is g, the material of at least a partial region of the shell body 211 includes an iron element, and Rm and g satisfy that 2% < g < 40% and 300 MPa < Rm < 2000 MPa. Allowing the material of at least a partial region of the shell body 211 to include the iron element can increase the structural strength of the material of this partial region of the shell body 211, thus meeting the design requirements.

In some embodiments, the material of at least a partial region of the shell body 211 includes carbon steel or stainless steel, and Rm and g satisfy that 2.5% ≤ g ≤ 15% and 315 MPa ≤ Rm < 800 MPa. For example, the material of at least a partial region of the shell body 211 may include Q195 carbon steel. This not only facilitates processing, but also enables the value of the tensile strength Rm at 25°C to be satisfied.

In some embodiments, the material of at least a partial region of the shell body 211 includes carbon steel or stainless steel, and Rm and g satisfy that 4.5% ≤ g ≤ 40% and 380 MPa ≤ Rm < 2000 MPa. For example, the material of at least a partial region of the shell body 211 may include SPCC carbon steel. This not only facilitates processing, but also enables the value of the tensile strength Rm at 25°C to be satisfied.

In some embodiments, Rm and g satisfy that 8% ≤ g ≤ 40% and 400 MPa ≤ Rm < 2000 MPa. For example, the material of at least a partial region of the shell body 211 may include modified stainless steel. This not only facilitates processing, but also enables the value of the tensile strength Rm at 25°C to be satisfied.

In some embodiments, Rm and g satisfy that 10% ≤ g ≤ 40% and 480 MPa ≤ Rm < 2000 MPa. For example, the material of at least a partial region of the shell body 211 may include 316 stainless steel. This not only facilitates processing, but also enables the value of the tensile strength Rm at 25°C to be satisfied.

In some embodiments, Rm and g satisfy that 15% ≤ g ≤ 40% and 520 MPa ≤ Rm < 2000 MPa. For example, the material of at least a partial region of the shell body 211 may include 304 stainless steel. This not only facilitates processing, but also enables the value of the tensile strength Rm at 25°C to be satisfied.

In some embodiments, Rm and g satisfy that 20% ≤ g ≤ 40% and 600 MPa ≤ Rm < 2000 MPa.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution prepared above was injected into the dried shell. After procedures including packaging, standing, formation, shaping, capacity testing, and the like, the preparation of the lithium-ion battery cell 20 was completed.

In the following examples and comparative examples, the tensile strength of the shell body 211 of the battery cell 20 at the temperature of 25 °C is Rm. To achieve different tensile strengths Rm, different materials are correspondingly selected for the shell body 211. The negative electrode active material of the negative electrode plate 224 of the electrode assembly 22 of the battery cell 20 includes a silicon-based material, and the mass proportion of the silicon-based material is g. The specific parameters described above are set as shown in Table 3 below. In addition, in each example and comparative example, all regions of the shell body 211 are made of the same material, and the tensile strength Rm of the shell body 211 at 25 °C is measured by the method specified in GB/T 228.1-2010. In addition, the battery cells 20 in the following examples and comparative examples all have the same settings, except for the different parameter settings shown in Table 3. For example, the wall thickness of each wall of the shell body 211 of the battery cell 20 in each example is 0.25 mm; for another example, the capacity of the battery cell 20 in each example is 350 Ah.

A cyclic charging fatigue test was performed on the battery cells 20 in the following examples and comparative examples. Specifically, FIG. 7 shows a schematic structural diagram of a fixture 700 for cyclic charging fatigue test according to an embodiment of the present application. As shown in FIG. 7, the fixture 700 includes three 10 mm steel plates, and the steel plates completely cover the wall with the largest area of the battery cell 20. For convenience of description, the three steel plates in the fixture are defined here as a first steel plate 710, a second steel plate 720, and a third steel plate 730 in sequence. The first steel plate 710 and the third steel plate 730 are located at two ends of the fixture 700 and are connected and fixed by bolts. The second steel plate 720 in the middle is constrained by a guide rail, so that the second steel plate 720 can only translate in a direction perpendicular to the large surface of the second steel plate 720; the first steel plate 710 and the second steel plate 720 are configured to clamp the battery cell 20, and the walls with the largest area of the battery cell 20 are in close contact with the first steel plate 710 and the second steel plate 720, respectively; a pressure sensor 740 is disposed between the second steel plate 720 and the third steel plate 730. The adjustment of the initial compressive force of the second steel plate 720 against the battery cell 20 can be achieved by adjusting the position of the second steel plate 720.

Specifically, the battery cell 20 was clamped and fixed in a dedicated fixture 700 to ensure that the two walls with the largest area of the battery cell 20 disposed opposite to each other were clamped, the initial pressure was set to 2000 N, and the electrode terminals 214 of the battery cell 20 were connected to a dedicated battery charging and discharging device.

The fixture 700 with the clamped battery cell 20 was placed in a constant-temperature environment of 25±2 °C, and the test was started after the battery cell 20 reached temperature equilibrium.

The specific test steps were performed with reference to section 6.4 "Standard Cycle Life" of *GBT31484-2015 Cycle Life Requirements and Test Methods for Traction Battery of Electric Vehicle,* and the test cycle cut-off condition was changed to "stop the test until the weld seam 2113 of the battery cell 20 is damaged".

For example, the test may be performed according to the following steps: step a: discharging at 1I(A) until discharge termination conditions specified by the enterprise were met; step b: letting to stand for not less than 30 min or under resting conditions specified by the enterprise; step c: charging according to the method in 6.1.1.3; step d: letting to stand for not less than 30 min or under resting conditions specified by the enterprise; step e: discharging at 1I1(A) until discharge termination conditions specified by the enterprise were met; and step f: repeating steps b-e until the weld seam 2113 was damaged, at which point the test should be stopped.

In the above test process, the weld seam 2113 of the battery cell 20 was continuously observed until liquid leakage occurred at the weld seam 2113. The number of cycles was recorded to obtain the situation of the shell body 211 after 1000 cycles as shown in Table 3 below. In the following examples and comparative examples, the weld seam 2113 is a weld seam between the shell body 211 and the cover plate 212, that is, the weld seam 2113 surrounds the open end of the shell body 211, and the shell body 211 is of an integrally formed structure.

**Table 3**

| | Rm(MPa) | g | Material of shell body | Situation of shell body after 1000 cycles |
|---|---|---|---|---|
| Comparative Example 1 | 178 | 0.03 | Aluminum | Shell body cracks after 656 cycles |
| Comparative Example 2 | 189 | 0.05 | Aluminum | Shell body cracks after 437 cycles |
| Example 1 | 328 | 0.025 | Q195 | Not crack |
| Example 2 | 328 | 0.15 | Q195 | Not crack |
| Example 3 | 396 | 0.045 | SPCC | Not crack |
| Example 4 | 396 | 0.4 | SPCC | Not crack |
| Example 5 | 421 | 0.08 | Modified stainless steel | Not crack |
| Example 6 | 421 | 0.4 | Modified stainless steel | Not crack |
| Example 7 | 459 | 0.1 | SUS430 | Not crack |
| Example 8 | 459 | 0.4 | SUS430 | Not crack |
| Example 9 | 533 | 0.15 | SUS304 | Not crack |
| Example 10 | 533 | 0.4 | SUS304 | Not crack |
| Example 11 | 625 | 0.2 | SUS304 | Not crack |
| Example 12 | 625 | 0.4 | SUS304 | Not crack |

It should be understood that in Table 3 above, the material of the shell body 211 may be Q195 carbon steel, and the tensile strength Rm of the Q195 carbon steel at the room temperature of 25 °C is usually at least 315 MPa to 430 MPa. In the above examples, only 328 MPa is taken as an example, but it is not limited thereto. Similarly, the material of the shell body 211 may be SPCC carbon steel, the tensile strength Rm of the SPCC carbon steel at the room temperature of 25 °C is usually at least 380 MPa to 430 MPa, and only 396 MPa is taken as an example in the above examples; the material of the shell body 211 may be modified stainless steel, the tensile strength Rm of the modified stainless steel at the room temperature of 25 °C is usually at least 400 MPa to 600 MPa, and only 421 MPa is taken as an example in the above examples; the material of the shell body 211 may be SUS430 stainless steel, the tensile strength Rm of the SUS430 stainless steel at the room temperature of 25 °C is usually at least 450 MPa, and only 459 MPa is taken as an example in the above examples; the material of the shell body 211 may be SUS304 stainless steel, the tensile strength Rm of the SUS304 stainless steel at the room temperature of 25°C is usually at least 520 MPa, and only 533 MPa and 625 MPa are taken as examples in the above examples.

By comparing the two comparative examples with 12 examples in Table 3 above, it can be seen that in the case that the shell body 211 is made of different materials, different tensile strengths Rm can be correspondingly determined. In the case that the tensile strength Rm satisfies that 250 MPa ≤ Rm ≤ 2000 MPa, for example, in Examples 1-12, even if the mass proportion g of the silicon-based material in the material of the negative electrode plate 224 of the battery cell 20 is different, the number of fatigue failures of the battery cell 20 can reach 1000 or above, so as to meet the design requirements of the battery cell 20. However, in the case that the tensile strength Rm does not satisfy that 250 MPa ≤ Rm ≤ 2000 MPa, for example, in Comparative Examples 1-2, even if the mass proportion g of the silicon-based material in the material of the negative electrode plate 224 of the battery cell 20 is relatively low, the number of fatigue failures of the battery cell 20 does not reach 1000, thereby failing to meet the design requirements of the battery cell 20.

In some embodiments, the electrode assembly 22 further includes a negative electrode plate 224. The negative electrode plate 224 includes a negative electrode active material enabling reversible de-intercalation and intercalation of metal ions. The negative electrode active material includes a silicon-based material. The yield strength of at least a partial region of the shell body 211 at the temperature of 25 °C is Re, and Re satisfies that 140 MPa ≤ Re ≤ 1000 MPa.

Increasing the yield strength Re of at least a partial region of the shell body 211 at room temperature can improve the deformation ability of the shell body 211, thereby improving the structural stability and service life of the battery cell 20. During the charging and discharging processes of the battery cell 20, in the case that the electrode assembly 22 undergoes cyclical volume expansion and reduction, increasing the yield strength Re of at least a partial region of the shell body 211 at room temperature can enhance the maximum compressive force borne by the shell body 211. In the case that the limit of the yield strength of the shell body 211 is not exceeded, the shell body 211 is less prone to damage, and the deformation of the shell body 211 is recoverable, thereby improving the service life of the shell body 211. However, the yield strength Re of at least a partial region of the shell body 211 at room temperature should not be too large, so as to reduce the difficulty in selecting and processing the material of the shell body 211, thereby saving costs and facilitating processing. For example, the yield strength Re of at least a partial region of the shell body 211 at room temperature may be usually set to satisfy that 140 MPa ≤ Re ≤ 1000 MPa.

It should be understood that the value range of the yield strength Re of at least a partial region of the shell body 211 according to the embodiments of the present application at the room temperature of 25 °C may be adjusted according to practical applications. For example, the value of the yield strength Re at room temperature may satisfy that 140 MPa ≤ Re ≤ 1000 MPa. For another example, the value of the yield strength Re at room temperature may satisfy that 180 MPa ≤ Re ≤ 600 MPa. In one aspect, increasing the yield strength Re of at least a partial region of the shell body 211 at room temperature can improve the deformation ability of this part of the shell body 211 to resist the degree of expansion of the electrode assembly 22, making this part of the shell body 211 less prone to damage; moreover, in the case that the limit of the yield strength of the shell body 211 is not exceeded, if the degree of expansion of the electrode assembly 22 is reduced, the deformation of the shell body 211 is recoverable, thereby improving the structural stability and service life of the battery cell 20. In another aspect, controlling the yield strength Re of at least a partial region of the shell body 211 at room temperature not to be too large can reduce the difficulty in selecting and processing the material of the shell body 211, thereby saving costs and facilitating processing.

Further, the yield strength Re of at least a partial region of the shell body 211 at room temperature may also be set to satisfy that 220 MPa ≤ Re ≤ 400 MPa. By allowing the yield strength Re of at least a partial region of the shell body 211 at room temperature to be neither too large nor too small, the deformation ability of this part of the shell body 211 can be improved to resist the degree of expansion of the electrode assembly 22, and the implementation is facilitated and costs are saved as well.

In some embodiments, the value of the yield strength Re of at least a partial region of the shell body 211 according to the embodiments of the present application at room temperature may also be set to other values. For example, the value of the yield strength Re at room temperature may be any one of the following values or a value between any two of the following values: 140 MPa, 150 MPa, 160 MPa, 180 MPa, 200 MPa, 220 MPa, 250 MPa, 280 MPa, 300 MPa, 330 MPa, 350 MPa, 380 MPa, 400 MPa, 430 MPa, 450 MPa, 480 MPa, 500 MPa, 530 MPa, 550 MPa, 580 MPa, 600 MPa, 630 MPa, 650 MPa, 680 MPa, 700 MPa, 730 MPa, 750 MPa, 780 MPa, 800 MPa, 830 MPa, 850 MPa, 880 MPa, 900 MPa, 930 MPa, 950 MPa, 980 MPa, and 1000 MPa.

It should be understood that the yield strength according to the embodiments of the present application can be understood as the critical stress value at which the material yields. Usually, after the material is subjected to stress, as the stress increases, in addition to elastic deformation, plastic deformation may also occur. The point at which the material plastically deforms may be referred to as the yield point, and the strength corresponding to the yield point is referred to as the yield strength. In addition, the yield strength according to the embodiments of the present application usually refers to an upper yield strength, that is, the upper yield strength of at least a partial region of the shell body 211 at the temperature of 25 °C is Re.

The test method for the yield strength Re of at least a partial region of the shell body 211 according to the embodiments of the present application at the temperature of 25 °C may be selected according to practical applications. For example, the yield strength Re can be tested at the room temperature of 25 °C in accordance with the national standard GB/T 228.1-2010.

In the embodiments of the present application, the value of the mass proportion g of the silicon-based material and the value of the yield strength Re of at least a partial region of the shell body 211 at the temperature of 25 °C may be limited by each other to improve the structural strength of the shell body 211 while improving the energy density of the battery cell 20, thereby improving the structural strength and service life of the battery cell 20.

For example, in the negative electrode active material, the mass proportion of the silicon-based material is g, and g and Re satisfy that 2% < g < 40% and 140 MPa < Re < 600 MPa. By adding the silicon-based material to the negative electrode active material of the negative electrode plate 224, the energy density of the battery cell 20 can be effectively increased as the silicon-based material can accommodate more metal ions than other elements, for example, the capacity of the silicon-based material is about ten times that of graphite. In addition, the mass proportion g of the silicon-based material should not be set too large, as it would increase the processing difficulty of the electrode assembly 22 and also increase the degree of deformation of the electrode assembly 22 in the battery cell 20 during use. Particularly, during the charging process of the battery cell 20, the metal ions are intercalated into the silicon-based material of the negative electrode plate, which will cause the volume expansion of the electrode assembly 22, thereby increasing the pressure of the electrode assembly 22 on the shell body 211 of the battery cell 20, and further increasing the processing difficulty of the battery cell 20. Therefore, appropriately increasing the yield strength Re of at least a partial region of the shell body 211 at room temperature can improve the deformation ability of this part of the shell body 211 to resist the degree of expansion of the electrode assembly 22, making this part of the shell body 211 less prone to damage; moreover, in the case that the limit of the yield strength of the shell body 211 is not exceeded, if the degree of expansion of the electrode assembly 22 is reduced, the deformation of the shell body 211 is recoverable, thereby improving the structural stability and service life of the battery cell 20. In addition, controlling the yield strength Re of at least a partial region of the shell body 211 at room temperature not to be too large can reduce the difficulty in selecting and processing the material of the shell body 211, thereby saving costs and facilitating processing.

In some embodiments, the material of at least a partial region of the shell body 211 includes carbon steel or stainless steel, and g and Re satisfy that 4.5% ≤ g ≤ 40% and 170 MPa ≤ Re < 600 MPa. For example, the material of at least a partial region of the shell body 211 may include SPCC carbon steel. This not only facilitates processing, but also enables the value of the yield strength Re at 25°C to be satisfied.

In some embodiments, g and Re satisfy that 8% ≤ g ≤ 40% and 180 MPa ≤ Re < 600 MPa. For example, the material of at least a partial region of the shell body 211 may include modified stainless steel. This not only facilitates processing, but also enables the value of the yield strength Re at 25°C to be satisfied.

In some embodiments, g and Re satisfy that 10% ≤ g ≤ 40% and 190 MPa ≤ Re < 600 MPa. For example, the material of at least a partial region of the shell body 211 may include 316 stainless steel. This not only facilitates processing, but also enables the value of the yield strength Re at 25°C to be satisfied.

In some embodiments, g and Re satisfy that 15% ≤ g ≤ 40% and 200 MPa ≤ Re < 600 MPa. For example, the material of at least a partial region of the shell body 211 may include 304 stainless steel. This not only facilitates processing, but also enables the value of the yield strength Re at 25°C to be satisfied.

In some embodiments, g and Re satisfy that 20% ≤ g ≤ 40% and 210 MPa ≤ Re < 600 MPa.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution prepared above was injected into the dried shell. After procedures including packaging, standing, formation, shaping, capacity testing, and the like, the preparation of the lithium-ion battery cell 20 was completed.

In the following examples and comparative examples, the yield strength of the shell body 211 of the battery cell 20 at the temperature of 25 °C is Re. To achieve different yield strengths Re, different materials are correspondingly selected for the shell body 211. The negative electrode active material of the negative electrode plate 224 of the electrode assembly 22 of the battery cell 20 includes a silicon-based material, and the mass proportion of the silicon-based material is g. The specific parameters described above are set as shown in Table 4 below. In addition, in each example and comparative example, all regions of the shell body 211 are made of the same material, and the yield strength Re of the shell body 211 at 25 °C is measured by the method specified in GB/T 228.1-2010. In addition, the battery cells 20 in the following examples and comparative examples all have the same settings, except for the different parameter settings shown in Table 4. For example, the wall thickness of each wall of the shell body 211 of the battery cell 20 in each example is 0.25 mm; for another example, the capacity of the battery cell 20 in each example is 350 Ah.

A cyclic charging fatigue test was performed on the battery cells 20 in the following examples and comparative examples. Specifically, a fixture 700 for cyclic charging fatigue test as shown in FIG. 7 can be used for testing.

Specifically, the battery cell 20 was clamped and fixed in a dedicated fixture 700 to ensure that the two walls with the largest area of the battery cell 20 disposed opposite to each other were clamped, the initial pressure was set to 2000 N, and the electrode terminals 214 of the battery cell 20 were connected to a dedicated battery charging and discharging device.

The fixture 700 with the clamped battery cell 20 was placed in a constant-temperature environment of 25±2 °C, and the test was started after the battery cell 20 reached temperature equilibrium.

The specific test steps were performed with reference to section 6.4 "Standard Cycle Life" of *GBT31484-2015 Cycle Life Requirements and Test Methods for Traction Battery of Electric Vehicle,* and the test cycle cut-off condition was changed to "stop the test until the weld seam 2113 of the battery cell 20 is damaged".

For example, the test may be performed according to the following steps: step a: discharging at 1I(A) until discharge termination conditions specified by the enterprise were met; step b: letting to stand for not less than 30 min or under resting conditions specified by the enterprise; step c: charging according to the method in 6.1.1.3; step d: letting to stand for not less than 30 min or under resting conditions specified by the enterprise; step e: discharging at 1I1(A) until discharge termination conditions specified by the enterprise were met; and step f: repeating steps b-e until the weld seam 2113 was damaged, at which point the test should be stopped.

In the above test process, the weld seam 2113 of the battery cell 20 was continuously observed until liquid leakage occurred at the weld seam 2113. The number of cycles was recorded to obtain the fatigue failure situation of the shell body 211 after 1000 cycles as shown in Table 4 below. In the following examples and comparative examples, the weld seam 2113 is a weld seam between the shell body 211 and the cover plate 212, that is, the weld seam 2113 surrounds the open end of the shell body 211, and the shell body 211 is of an integrally formed structure.

**Table 4**

| | Re(MPa) | g | Material of shell body | Fatigue failure situation of shell body after 1000 cycles |
|---|---|---|---|---|
| Comparative Example 1 | 125 | 0.1 | Aluminum | Presence of fatigue failure after 728 cycles |
| Comparative Example 2 | 115 | 0.2 | Aluminum | Presence of fatigue failure after 541 cycles |
| Example 1 | 145 | 0.02 | Modified stainless steel | No fatigue failure |
| Example 2 | 145 | 0.4 | Modified stainless steel | No fatigue failure |
| Example 3 | 173 | 0.045 | Modified stainless steel | No fatigue failure |
| Example 4 | 173 | 0.4 | Modified stainless steel | No fatigue failure |
| Example 5 | 182 | 0.08 | SUS 316 | No fatigue failure |
| Example 6 | 182 | 0.4 | SUS 316 | No fatigue failure |
| Example 7 | 193 | 0.1 | SUS 316 | No fatigue failure |
| Example 8 | 193 | 0.4 | SUS 316 | No fatigue failure |
| Example 9 | 203 | 0.15 | Q195 | No fatigue failure |
| Example 10 | 203 | 0.4 | Q195 | No fatigue failure |
| Example 11 | 212 | 0.2 | SUS304 | No fatigue failure |
| Example 12 | 212 | 0.4 | SUS304 | No fatigue failure |

It should be understood that in Table 4 above, the material of the shell body 211 may be modified stainless steel, and the yield strength Re of the modified stainless steel at the room temperature of 25 °C is usually at least 140 MPa to 180 MPa. In the above examples, only 145 MPa and 173 MPa are taken as examples, but it is not limited thereto. Similarly, the material of the shell body 211 may be SUS316 stainless steel, the yield strength Re of the SUS316 stainless steel at the room temperature of 25°C is usually at least 177 MPa, and only 182 MPa and 193 MPa are taken as examples in the above examples; the material of the shell body 211 may be Q195 carbon steel, the yield strength Re of the Q195 carbon steel at the room temperature of 25°C is usually at least 195 MPa, and only 203 MPa is taken as an example in the above examples; the material of the shell body 211 may be SUS304 stainless steel, the yield strength Re of the SUS304 stainless steel at the room temperature of 25°C is usually at least 205 MPa, and only 212 MPa is taken as an example in the above examples.

By comparing the two comparative examples with 12 examples in Table 4 above, it can be seen that in the case that the shell body 211 is made of different materials, different yield strengths Re can be correspondingly determined. In the case that the yield strength Re satisfies that 140 MPa ≤ Re ≤ 1000 MPa, for example, in Examples 1-12, even if the mass proportion g of the silicon-based material in the material of the negative electrode plate 224 of the battery cell 20 is different, the number of fatigue failures of the battery cell 20 can reach 1000 or above, so as to meet the design requirements of the battery cell 20. However, in the case that the yield strength Re does not satisfy that 140 MPa ≤ Re ≤ 1000 MPa, for example, in Comparative Examples 1-2, even if the mass proportion g of the silicon-based material in the material of the negative electrode plate 224 of the battery cell 20 is relatively low, the number of fatigue failures of the battery cell 20 does not reach 1000, thereby failing to meet the design requirements of the battery cell 20.

It should be understood that at least a partial region of the shell body 211 according to the embodiments of the present application may further include a local region of the shell body 211 or may include all regions of the shell body 211. In some embodiments, the shell body 211 includes a weld seam 2113. At least a partial region of the shell body 211 includes a region of the shell body 211 within a preset distance from the weld seam 2113, the preset distance is L, and L satisfies that L = 10 mm. In the case that the negative electrode active material of the negative electrode plate 224 of the electrode assembly 22 includes a silicon-based material, because the silicon-based material can accommodate more metal ions, the degree of deformation of the electrode assembly 22 in the battery cell 20 during use is increased. As a result, the electrode assembly 22 expands in volume, thereby increasing the pressure of the electrode assembly 22 on the shell body 211 of the battery cell 20. Under the same conditions, the structural strength of the region of the shell body 211 close to the weld seam 2113 is lower than the structural strength of other regions of the shell body 211, and thus the region of the shell body 211 close to the weld seam 2113 is more likely to be damaged during use of the battery cell 20. Therefore, allowing the region within the preset distance L from the weld seam 2113 to be configured to meet the requirements for the tensile strength Rm or yield strength Re at room temperature can improve the deformation ability of the region of the shell body 211 close to the weld seam 2113, making this partial region of the shell body 211 less prone to damage, thereby improving the structural stability and service life of the battery cell 20.

In the case that the positive electrode active material of the positive electrode plate 223 of the electrode assembly 22 includes a nickel element-containing compound, if thermal runaway occurs in the battery cell 20, the internal temperature of the battery cell 20 increases rapidly and a large amount of gas is generated. Under the same conditions, the structural strength of the region of the shell body 211 that is close to the weld seam 2113 is lower than the structural strength of the other regions of the shell body 211, and thus the shell body 211 is prone to cracking at the region close to the weld seam 2113, which may cause thermal runaway in the connected battery cells 20, i.e., cause thermal propagation. Therefore, allowing the region within the preset distance L from the weld seam 2113 to be configured to meet the requirements for the tensile strength Rn at high temperature or the melting point p can improve the deformation ability of this partial region of the shell body 211, making this partial region less prone to rapid damage or complete melting, reducing the risk of thermal propagation between a plurality of battery cells 20 or even explosion, and thereby improving the reliability of the battery 10.

It should be understood that the weld seam 2113 included in the shell body 211 according to the embodiments of the present application may include a weld seam 2113 at any position of the shell body 211. For example, the weld seam 2113 included in the shell body 211 may include a weld seam between the shell body 211 and the cover plate 212. In other words, a region surrounding the open end of the shell body 211 is the weld seam. For another example, the weld seam 2113 of the shell body 211 may further include weld seams between different parts of the shell body 211. For example, the shell body 211 may include at least two parts, and the at least two parts are connected by welding to form the shell body 211. In FIG. 4, taking the shell body 211 including two parts in the height direction Z of the battery cell 20 as an example, there is a weld seam 2113 between the upper half of the shell body and the lower half of the shell body; alternatively, unlike in FIG. 4, other parts of the shell body 211 may also be provided with a weld seam 2113, and the embodiments of the present application are not limited thereto.

In some embodiments, at least a partial region of the shell body 211 includes a surrounding region 2111 of the shell body 211. The surrounding region 2111 surrounds the electrode assembly 22, and the surrounding region 2111 is at least a partial region of a side wall of the shell body 211. In this way, in the case that the negative electrode active material of the negative electrode plate 224 of the electrode assembly 22 includes a silicon-based material, because the silicon-based material can accommodate more metal ions, the degree of deformation of the electrode assembly 22 in the battery cell 20 during use is increased. As a result, the electrode assembly 22 expands in volume, thereby increasing the pressure of the electrode assembly 22 on the shell body 211 of the battery cell 20. Therefore, allowing the surrounding region 2111 to be configured to meet the requirements for the tensile strength Rm or yield strength Re at room temperature can improve the deformation ability of the shell body 211, and allowing the surrounding region 2111 to be disposed surrounding the electrode assembly 22 can limit the compressive force of the internal electrode assembly 22 on the shell body 211 in the radial direction, making the shell body 211 less prone to damage, thereby improving the structural stability and service life of the battery cell 20.

In the case that the positive electrode active material of the positive electrode plate 223 of the electrode assembly 22 includes a nickel element-containing compound, if thermal runaway occurs in the battery cell 20, the internal temperature of the battery cell 20 increases rapidly and a large amount of gas is generated. If the surrounding region 2111 meets the requirements for the tensile strength Rn at high temperature or the melting point p, the deformation ability of the surrounding region 2111 of the shell body 211 can be improved, so that the surrounding region 2111 is less prone to rapid damage or complete melting, which can limit excessive expansion of the electrode assembly 22 inside the shell body 211 in the thickness direction thereof, reduce the possibility of explosion of the battery cell 20, and further reduce the risk of thermal runaway of adjacent battery cells 20, thereby improving the reliability of the battery 10.

It should be understood that the position and dimension of the surrounding region 2111 according to the embodiments of the present application may be flexibly tailored according to practical applications. For example, in the height direction Z of the battery cell 20, the height of the surrounding region 2111 may be less than or equal to the height of the shell body 211. Specifically, if the height of the surrounding region 2111 is less than the height of the shell body 211 in the height direction Z of the battery cell 20, the surrounding region 2111 may be located at any position of the shell body 211 in the height direction Z of the battery cell 20. For example, the surrounding region 2111 may be located in the middle of the shell body 211 in the height direction Z of the battery cell 20 to limit the deformation of the corresponding middle part of the electrode assembly 22.

If the height of the surrounding region 2111 is equal to the height of the shell body 211 in the height direction Z of the battery cell 20, the surrounding region 2111 includes all the side walls of the shell body 211 and can wrap the side surfaces of the electrode assembly 22, thereby improving the structural strength of the side walls of the shell body 211, reducing explosion and the resulting thermal propagation after thermal runaway of the battery cell 20 due to the destruction of the local weakened region of the side wall of the shell body 211, and further improving the reliability of the battery 10.

In some embodiments, at least a partial region of the shell body 211 includes all the walls of the shell body 211. In other words, the at least a partial region of the shell body 211 according to the embodiments of the present application may be the all regions of the shell body 211. In this way, in the case that the negative electrode active material of the negative electrode plate 224 of the electrode assembly 22 includes a silicon-based material, because the silicon-based material can accommodate more metal ions, the degree of deformation of the electrode assembly 22 in the battery cell 20 during use is increased. As a result, the electrode assembly 22 expands in volume, thereby increasing the pressure of the electrode assembly 22 on the shell body 211 of the battery cell 20. Therefore, allowing the all regions of the shell body 211 to be configured to meet the requirements for the tensile strength Rm or yield strength Re at room temperature can improve the overall deformation ability of the shell body 211 and can also limit the compressive force of the internal electrode assembly 22 on the shell body 211 in all directions, making the shell body 211 to be balanced in strength in various parts and less prone to damage in local weakened regions, thereby improving the structural stability and service life of the battery cell 20.

In the case that the positive electrode active material of the positive electrode plate 223 of the electrode assembly 22 includes a nickel element-containing compound, if thermal runaway occurs in the battery cell 20, the internal temperature of the battery cell 20 increases rapidly and a large amount of gas is generated. If all regions of the shell body 211 meet the requirements for the tensile strength Rn at high temperature or the melting point p, the overall deformation ability of the shell body 211 can be improved, so that the shell body 211 is less prone to damage or melting, which can restrain the high-temperature and high-pressure gas inside the shell body 211, reduce the impact on the battery cell 20, and further reduce the risk of thermal runaway of adjacent battery cells 20, thereby improving the reliability of the battery 10.

Further, the cover plate 212 according to the embodiments of the present application may be made of the same material as at least a partial region of the shell body 211 according to the embodiments of the present application, so that the structural strength of the cover plate 212 also meets the design requirements. For example, the cover plate 212 may also meet at least one of the above requirements for the tensile strength Rm and yield strength Re at room temperature, the tensile strength Rn at high temperature, and melting point p to improve the structural strength of the cover plate 212, thereby improving the structural stability of the battery cell 20, but the embodiments of the present application are not limited thereto.

In some embodiments, the tensile strength of at least a partial region of the shell body 211 at the temperature of 25 °C is Rm, at least a part of the shell body 211 includes a third shell body wall 2112, the average thickness of the third shell body wall is T, and Rm and T satisfy that 250 MPa ≤ Rm ≤ 2000 MPa, 0.05 mm ≤ T ≤ 0.5 mm, and 60 mm·MPa ≤ T × Rm ≤ 500 mm·MPa.

It should be understood that the third shell body wall 2112 of the shell body 211 according to the embodiments of the present application may be any one of the walls of the shell body 211. Specifically, the battery cell 20 may be of any polyhedral structure. The shell body 211 may be of a hollow structure with at least one end open, the shell body 211 may include one or more walls, the third shell body wall 2112 is any one of the walls of the shell body 211, and the shell body 211 may include one or more third shell body walls 2112. For example, if the shell body 211 is a polygonal prism, the third shell body wall 2112 may be any one of the walls of the polygonal prism, and the surface of the third shell body wall 2112 may be any polygon. For another example, as shown in FIGs. 3 and 4, if the shell body 211 is a rectangular parallelepiped, the third shell body wall 2112 may be any one of the walls of the shell body 211, and the surface of the third shell body wall 2112 is a rectangle. For another example, if the shell body 211 is a cylinder, the third shell body wall 2112 may be the bottom surface or the side surface of the cylinder. The embodiments of the present application are not limited thereto. In addition, if two adjacent walls of the shell body 211 are connected by a round corner, when the third shell body wall 2112 according to the embodiments of the present application is any one of the walls of the shell body 211, the third shell body wall 2112 does not include a round corner connection region between the wall and a connected wall.

In the embodiments of the present application, at least a partial region of the shell body 211 includes a third shell body wall 2112. In this case, the tensile strength of the third shell body wall 2112 at the room temperature of 25°C is Rm. Increasing the tensile strength Rm of at least a partial region of the shell body 211 at the room temperature of 25 °C can improve the deformation ability of the shell body 211, so that the shell body 211 is less prone to damage during the use of the battery cell 20, thereby improving the structural stability and service life of the battery cell 20. However, the tensile strength Rm of at least a partial region of the shell body 211 at room temperature should not be too large, so as to reduce the difficulty in selecting and processing the material of the shell body 211, thereby saving costs and facilitating processing.

In the case that the average thickness T of the third shell body wall 2112 of the shell body 211 is relatively small, the structural strength of the third shell body wall 2112 can be increased by increasing the tensile strength Rm of the third shell body wall 2112 of the shell body 211 at the room temperature of 25 °C, which can not only increase the energy density of the battery cell 20, but also improve the structural strength and stability of the battery cell 20. Conversely, in the case that the average thickness T of the third shell body wall 2112 of the shell body 211 is relatively large, the structural strength of the shell body 211 can be increased, and the difficulty in selecting a material for the shell body 211 can also be reduced by appropriately reducing the requirements for the tensile strength Rm of the third shell body wall 2112 of the shell body 211 at room temperature, thereby reducing the processing difficulty and processing costs of the battery cell 20. In addition, T × Rm represents the rigidity of the third shell body wall, and the rigidity of the third shell body wall is limited to be neither too small nor too large, so that the third shell body wall can have a relatively good deformation ability, the processing difficulty can be reduced, and costs can be reduced.

It should be understood that the value range of the average thickness T of the third shell body wall 2112 according to the embodiments of the present application may also be flexibly set according to practical applications. For example, the average thickness T of the third shell body wall 2112 satisfies that 0.05 mm ≤ T ≤ 0.5 mm. Further, the average thickness T of the third shell body wall 2112 satisfies that 0.1 mm ≤ T ≤ 0.4 mm. Appropriately reducing the average thickness T of the third shell body wall 2112 can reduce the space occupied by the shell body 211 inside the battery 10, thereby improving the energy density of the battery 10. In addition, the requirements of the shell body 211 for the structural strength can be met by improving the tensile strength Rm of the third shell body wall 2112 at room temperature, so as to maintain the stability of the shell body 211. The processing difficulty of the third shell body wall 2112 can also be reduced by appropriately increasing the average thickness T of the third shell body wall 2112.

Further, the average thickness T of the third shell body wall 2112 satisfies that 0.1 mm ≤ T ≤ 0.3 mm. Allowing the average thickness T of the third shell body wall 2112 to be neither too large nor too small can not only improve the structural strength and structural stability of the shell body 211, but also reduce the space occupied by the shell body 211 inside the battery 10, thereby improving the energy density of the battery 10.

In some embodiments, the value of the average thickness T of the third shell body wall 2112 according to the embodiments of the present application may also be set to other values. For example, the value of the average thickness T of the third shell body wall 2112 may be any one of the following values or a value between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

In some embodiments, the value range of T × Rm may also be adjusted according to practical applications. For example, Rm and T satisfy that 60 mm·MPa ≤ T × Rm ≤ 500 mm·MPa; further, Rm and T may also satisfy that 100 mm·MPa ≤ T × Rm ≤ 500 mm·MPa. By selecting a suitable material, the tensile strength Rm of the third shell body wall 2112 at room temperature can be improved, thereby reducing the average thickness T of the third shell body wall 2112, and enabling the value of the rigidity of the third shell body wall 2112 to meet the design requirements. This can not only improve the structural strength and structural stability of the third shell body wall 2112 of the shell body 211, but also increase the energy density of the battery cell 20 and the battery 10.

Further, the value range of T × Rm may also be set as follows: Rm and T satisfy that 100 mm·MPa ≤ T × Rm ≤ 300 mm·MPa, such that the value of the rigidity of the third shell body wall 2112 is more appropriate. This not only enables the third shell body wall 2112 to have good deformation ability to improve the service life of the battery cell 20, but also can reduce the difficulty in material selection, thereby reducing the processing difficulty and processing costs.

In some embodiments, the value of T × Rm according to the embodiments of the present application may also be set to other values. For example, the value of T × Rm may be any one of the following values or a value between any two of the following values: 60 mm·MPa, 65 mm·MPa, 70 mm·MPa, 75 mm·MPa, 80 mm·MPa, 85 mm·MPa, 90 mm·MPa, 95 mm·MPa, 100 mm·MPa, 130 mm·MPa, 150 mm·MPa, 180 mm·MPa, 200 mm·MPa, 230 mm·MPa, 250 mm·MPa, 280 mm·MPa, 300 mm·MPa, 330 mm·MPa, 350 mm·MPa, 380 mm·MPa, 400 mm·MPa, 430 mm·MPa, 450 mm·MPa, 480 mm·MPa, and 500 mm·MPa.

In the embodiments of the present application, the value of the mass proportion g of the silicon-based material and the value of the average thickness T of the third shell body wall 2112 may be limited by each other, and the value of the mass proportion g of the silicon-based material and the value of the tensile strength Rm of at least a partial region of the shell body 211 at the temperature of 25 °C may also be limited by each other, so as to balance the relationship between the energy density and the structural strength of the battery cell 20. For example, in the negative electrode active material, the mass proportion of the silicon-based material is g, and g and T satisfy that 2% < g < 20% and 0.15 mm ≤ T ≤ 0.4 mm. In the case that the mass proportion g of the silicon-based material is relatively small, the average thickness T of the third shell body wall 2112 can be appropriately reduced to improve the space utilization of the shell body 211, such that the structural strength of the shell body 211 can be balanced while increasing the energy density of the battery cell 20.

In some embodiments, the mass proportion of the silicon-based material in the negative electrode active material is g, and g, T, and Rm satisfy that 15% < g < 40%, 0.2 mm ≤ T ≤ 0.4 mm, and 100 mm·MPa ≤ T × Rm ≤ 500 mm·MPa. Increasing the mass g of the silicon-based material can effectively increase the energy density of the battery cell 20. Meanwhile, increasing the thickness and rigidity T × Rm of the third shell body wall 2112 can improve the structural strength and stability of the battery cell 20.

It should be understood that the average thickness T of the third shell body wall 2112 according to the embodiments of the present application may be the average thickness of at least a partial region of the third shell body wall 2112. For example, the average thickness T of the third shell body wall 2112 may be an average thickness T of all regions of the third shell body wall 2112. Particularly, in the case that the third shell body wall 2112 is relatively flat, that is, the thicknesses of most regions of the third shell body wall 2112 are substantially equal or slightly different, or in the case that the thicknesses of all regions of the third shell body wall 2112 are substantially equal or slightly different, it may be determined that the average thickness of all regions of the third shell body wall 2112 is T.

For another example, the average thickness T of the third shell body wall 2112 may also be an average thickness T of a local region of the third shell body wall 2112, that is, an average thickness T of a remaining region excluding a partial region of the third shell body wall 2112. For example, if a partial special region is present on the third shell body wall 2112 and the thickness of the partial special region is greatly different from the thicknesses of other regions, for example, if convex structures or recessed regions are present on the partial special region and the thickness of the partial special region is greater than or less than the thicknesses of other regions, the partial special region may be excluded in calculating the average thickness of the other regions of the third shell body wall 2112, which is T.

In some embodiments, the third shell body wall 2112 includes a functional region, the average thickness T of the third shell body wall 2112 is the average thickness of the region of the third shell body wall 2112 other than the functional region, and the functional region includes at least one of the following regions: a pressure relief region, a region where the electrode terminal 214 is located, a liquid injection region, and a welding region. The thickness difference between the functional region and other regions of the third shell body wall 2112 is usually large. Therefore, in the case that the functional region is excluded in calculating the average thickness T of the third shell body wall 2112, the design of the third shell body wall 2112 can be made to better meet the strength requirements, so as to improve the structural strength and stability of the battery cell 20.

Specifically, the functional region according to the embodiments of the present application may include a region on the third shell body wall 2112 that is provided with a specific structure or is for specific use. For example, the functional region may include a pressure relief region for providing a pressure relief mechanism. The pressure relief mechanism is an element or component configured to be actuated to relieve internal pressure or temperature when the internal pressure or temperature of the battery cell 20 reaches a preset threshold. The preset threshold may be adjusted according to different design requirements. For example, the preset threshold may depend on the material of one or more of the positive electrode plate, the negative electrode plate, the electrolytic solution, and the separation film in the battery cell 20.

The term "actuate" as used herein means that the pressure relief mechanism generates an action or is activated to a certain state to allow the relief of the internal pressure and temperature of the battery cell 20. The actions generated by the pressure relief mechanism may include, but are not limited to: cracking, fracture, tearing, or opening of at least a part of the pressure relief mechanism. When the pressure relief mechanism is actuated, high-temperature and high-pressure substances inside the battery cell 20 are discharged outwards from the actuated part as emissions. In this way, the battery cell 20 can undergo pressure relief and temperature relief under the condition of controllable pressure or temperature, thereby preventing potentially more severe accidents.

The emissions from the battery cell 20 referred to in the present application include, but are not limited to: electrolytic solution, dissolved or split positive and negative electrode plates, fragments of a separation film, high-temperature and high-pressure gas generated by reaction, flame, and the like.

The pressure relief mechanism according to the embodiments of the present application may be disposed on any one of the walls of the battery cell 20. For example, the pressure relief mechanism may be disposed at the pressure relief region of the third shell body wall 2112 of the battery cell 20. The pressure relief mechanism may be a part of the third shell body wall 2112. Alternatively, the pressure relief mechanism may be a split-type structure from the third shell body wall 2112 and is fixed on the third shell body wall 2112 by means of, for example, welding. For example, when the pressure relief mechanism is a part of the third shell body wall 2112, for example, the pressure relief mechanism may be formed by providing a score on the third shell body wall 2112, that is, a score is disposed on the third shell body wall 2112 at the pressure relief region, and the thickness at the score is significantly less than the thickness of other regions of the third shell body wall 2112. Therefore, the thickness at the score is excluded in calculating the average thickness T of the third shell body wall 2112. The score is where the pressure relief mechanism is weakest. When too much gas generated by the battery cell 20 raises the internal pressure to reach the threshold or heat generated by the internal reaction of the battery cell 20 raises the internal temperature of the battery cell 20 to reach the threshold, the pressure relief mechanism may crack at the score to cause the inside and the outside of the battery elevator 20 to be in communication with each other, and the gas pressure and the temperature are relieved outwards by the cracking of the pressure relief mechanism, thereby preventing the battery cell 20 from exploding.

For another example, the pressure relief mechanism may also be a split-type structure from the third shell body wall 2112, and the pressure relief mechanism may take the form of an anti-explosion valve, a gas valve, a pressure relief valve, a safety valve, or the like, and may specifically adopt a pressure-sensitive or temperature-sensitive element or configuration. For example, a through hole is disposed on the third shell body wall 2112 at the pressure relief region, and the pressure relief mechanism is mounted and fixed to the third shell body wall 2112 through the through hole. The mounted pressure relief mechanism may protrude or recess relative to other regions of the third shell body wall 2112. Therefore, the pressure relief region where the pressure relief mechanism is located may be excluded in calculating the average thickness T of the third shell body wall 2112. When the internal pressure or temperature of the battery cell 20 reaches a preset threshold, the pressure relief mechanism performs an action or a weak structure arranged in the pressure relief mechanism is broken, thereby forming an opening or a channel through which the internal pressure or temperature may be relieved.

In some embodiments, the functional region may further include a region where the electrode terminal 214 is located. Specifically, the electrode terminal 214 according to the embodiments of the present application is configured to be electrically connected to the electrode assembly 22 inside the battery cell 20 to output the electric energy of the battery cell 20. Moreover, the battery cell 20 may include at least two electrode terminals 214. The at least two electrode terminals 214 include at least one first electrode terminal 214a and at least one second electrode terminal 214b, where the first electrode terminal 214a and the second electrode terminal 214b are opposite in polarity. For example, the first electrode terminal 214a may be a positive electrode terminal, and the second electrode terminal 214b is a negative electrode terminal. Alternatively, the first electrode terminal 214a may be a negative electrode terminal, and the second electrode terminal 214b is a positive electrode terminal. The positive electrode terminal is configured to be electrically connected to a positive electrode tab 222a of the electrode assembly 22, and the negative electrode terminal is configured to be connected to a negative electrode tab 222b of the electrode assembly 22. The positive electrode terminal and the positive electrode tab 222a may be directly connected or indirectly connected, and the negative electrode terminal and the negative electrode tab 222b may be directly connected or indirectly connected. Illustratively, the positive electrode terminal may be electrically connected to the positive electrode tab 222a via a connecting member 23, and the negative electrode terminal may be electrically connected to the negative electrode tab 222b via a connecting member 23.

It should be understood that each electrode terminal 214 according to the embodiments of the present application may be disposed on any one wall, and a plurality of electrode terminals 214 may be disposed on the same wall or different walls of the battery cell 20. For example, FIGs. 3 and 4 show an example where each battery cell 20 includes two electrode terminals 214 and the two electrode terminals 214 are located on the same wall. For example, the two electrode terminals 214 may both be located on the cover plate 212.

For another example, similarly, an example where each battery cell 20 includes two electrode terminals 214 and the two electrode terminals 214 are located on the same wall is shown. Unlike those shown in FIGs. 3 and 4, the two electrode terminals 214 may also be located on the shell body 211. For example, the two electrode terminals 214 may both be located on the third shell body wall 2112 of the shell body 211. When the electrode terminal 214 is located on the third shell body wall 2112, the electrode terminal 214 usually protrudes from other regions of the third shell body wall 2112, that is, the thickness of the region where the electrode terminal 214 is located is much greater than the thickness of other regions of the third shell body wall 2112. Thus, the region where the electrode terminal 214 is located may be excluded in calculating the average thickness T of the third shell body wall 2112.

In some embodiments, the functional region may further include a liquid injection region. For example, a liquid injection hole may be disposed in the liquid injection region of the third shell body wall 2112, and an electrolytic solution is injected into the shell body 211 through the liquid injection hole. After the electrolytic solution is injected, the liquid injection hole may be sealed by a sealing member. Considering that the thickness of the liquid injection region where the sealing member is located is usually much greater than the thickness of other regions of the third shell body wall 2112, the liquid injection region may be excluded in calculating the average thickness T of the third shell body wall 2112.

In some embodiments, the functional region may further include a welding region. For example, the third shell body wall 2112 may be fixed to other walls by welding, or the third shell body wall 2112 needs to be processed and formed by welding. In this case, the third shell body wall 2112 may include a welding region. For example, as shown in FIG. 4, the shell body 211 may be splice-welded, and thus the shell body 211 may have a weld seam 2113. Specifically, the shell body 211 may include at least two parts, and the at least two parts are connected by welding to form the shell body 211. In FIG. 4, taking the shell body 211 including two parts in the height direction Z of the battery cell 20 as an example, there is a weld seam 2113 between the upper half of the shell body and the lower half of the shell body; alternatively, unlike in FIG. 4, other parts of the shell body 211 may also be provided with a weld seam 2113, and the embodiments of the present application are not limited thereto. The welding region of the functional region according to the embodiments of the present application may further include the weld seam 2113. Due to manufacturing processes, the thickness of the welding region is usually greater than the thickness of other regions of the third shell body wall 2112. Therefore, the welding region may be excluded in calculating the average thickness T of the third shell body wall 2112.

In the embodiments of the present application, the third shell body wall 2112 of the shell body 211 may be any one of the walls of the shell body 211. For example, the third shell body wall 2112 is a wall with the smallest thickness of the shell body 211. That is, by limiting the thickness T of the wall with the smallest thickness of the shell body 211 to limit the thickness of other walls of the shell body 211, each wall of the shell body 211 can meet the requirements for structural strength, thereby improving the structural strength and stability of the battery cell 20.

In some embodiments, the third shell body wall 2112 is a wall with the largest area of the shell body 211. Considering that a plurality of battery cells 20 usually abut against each other through the wall with the largest area of the shell body 211 in the case that the plurality of battery cells 20 are arranged in the battery 10, the wall with the largest area is usually also the most compressed by the electrode assembly 22. Thus, by limiting the average thickness T and the tensile strength Rm at room temperature of the third shell body wall 2112, the deformation ability of shell body 211 can be effectively improved, thereby improving the structural strength and stability of the battery cell 20.

It should be understood that the position of the wall with the largest area of the shell body 211 according to the embodiments of the present application may be determined according to practical applications. For example, the battery 10 may include a plurality of battery cells 20, and the arrangement direction of the plurality of battery cells 20 may be perpendicular to or parallel to the wall with the largest area of the shell body 211. The embodiments of the present application are not limited thereto.

In some embodiments, the shell body 211 includes a bottom wall and a side wall that intersect with each other, where the bottom wall is configured to support the electrode assembly accommodated in the shell body 211. Specifically, the shell body 211 may be of a hollow structure with at least one end open, and the bottom wall and the side wall of the shell body 211 do not necessarily refer to walls opposite to and adjacent to the opening, respectively. When the electrode assembly 22 is accommodated inside the shell body 211, considering different application scenarios in practical applications, the arrangement direction of the electrode assembly 22 may be different, and the shell body 211 may include a wall for supporting the electrode assembly 22. Therefore, the bottom wall of the shell body 211 according to the embodiments of the present application is a wall for supporting the electrode assembly 22, that is, the bottom wall of the shell body 211 is configured to bear the gravity effect of the electrode assembly 22. Correspondingly, a wall of the shell body 211 that directly intersects with the bottom wall is a side wall of the shell body 211.

In some embodiments, the third shell body wall 2112 is the side wall of the shell body 211. Considering that the uses of the bottom wall and the side wall of the shell body 211 are different, design requirements for the bottom wall and the side wall may also be different. For example, the side wall of the shell body 211 usually has higher requirements for the deformation ability, and thus, in the case that the third shell body wall 2112 is the side wall of the shell body 211, by limiting the tensile strength Rm of the side wall of the shell body 211 at room temperature and the average thickness T of the side wall, the deformation ability of the side wall of the shell body 211 can be effectively improved, thereby improving the structural stability of the battery cell 20.

In some embodiments, the shell body 211 includes a plurality of side walls. The plurality of side walls are equal in thickness to facilitate processing.

In some embodiments, the thickness of the bottom wall of the shell body 211 is equal to the thickness of the side wall of the shell body 211 to facilitate processing and optimize space occupied by the shell body 211.

In some embodiments, the third shell body wall 2112 is perpendicular to the stacking direction of the electrode plates of the electrode assembly 22. The stacking direction of the electrode plates of the electrode assembly 22 is usually the thickness direction of the electrode assembly 22. Considering that the electrode assembly 22 is prone to expansion in the thickness direction of the electrode assembly 22 during the cyclic charging and discharging of the battery cell 20, the deformation requirements on the corresponding wall of the shell body 211 are relatively high. Therefore, as the third shell body wall 2112 is configured as a wall perpendicular to the stacking direction of the electrode plates of the electrode assembly 22, or in other words, the third shell body wall 2112 and the electrode assembly 22 are arranged in the stacking direction of the electrode plates of the electrode assembly 22, by limiting the tensile strength Rm at room temperature and the average thickness T of the third shell body wall 2112, the energy density of the battery cell 20 can be increased, and the deformation ability of the third shell body wall 2112 can also be effectively improved, thereby improving the structural stability of the battery cell 20.

It should be understood that the cover plate 212 according to the embodiments of the present application and the third shell body wall 2112 may adopt the same design or different designs. For example, the cover plate 212 may adopt the same design as the third shell body wall 2112, that is, the average thickness of the cover plate 212 may be T, the tensile strength of the cover plate 212 at room temperature may be b, and the design requirements of b and T are met to improve the deformation ability of the cover plate 212, thereby improving the structural strength and stability of the battery cell 20.

In some embodiments, the ratio of the volume of the internal space of the shell body 211 to the external volume of the shell body 211 is greater than or equal to 93%. That is, the thickness of the shell body 211 is small, so that the shell body 211 itself occupies less space, thereby improving the space utilization and energy density of the battery 10.

It should be understood that the specific calculation methods of the volume of the internal space of the shell body 211 according to the embodiments of the present application and the external volume of the shell body 211 are related to the shape of the shell body 211. For example, taking the shell body 211 being a rectangular parallelepiped as an example, FIG. 8 is a schematic structural diagram from a side view of the shell body 211 according to an embodiment of the present application, and FIG. 9 is a schematic diagram from a top view of the shell body 211 according to an embodiment of the present application. For example, the shell body 211 shown in FIGs. 8 and 9 may be the shell body 211 of the battery cell 20 shown in FIGs. 3 and 4.

As shown in FIGs. 8 and 9, a rectangular parallelepiped-shaped shell body 211 is used as an example here, and the shell body 211 is of a hollow rectangular parallelepiped with one end open. When the volume of the internal space of the shell body 211 and the external volume of the shell body 211 are calculated, the round corner connection between adjacent walls of the shell body 211 may be ignored. As shown in FIGs. 8 and 9, since each wall of the shell body 211 has a specific thickness, in the length direction Y, the inner length of the shell body 211 is Y1 and the outer length is Y2, where Y2 is greater than Y1. Similarly, in the width direction X, the inner width of the shell body 211 is X1 and the outer width is X2, where X2 is greater than X1; in the height direction Z, the inner height of the shell body 211 is Z1 and the outer height is Z2, where Z2 is greater than Z1. Therefore, the volume of the internal space of the shell body 211 is V1 = X1 × Y1 × Z1, the volume of the external space of the shell body 211 is V2 = X2 × Y2 × Z2, and V1/V2 is greater than or equal to 93% to reduce the space occupied by the shell body 211 itself, thereby improving the space utilization and energy density of the battery 10.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution prepared above was injected into the dried shell. After procedures including packaging, standing, formation, shaping, capacity testing, and the like, the preparation of the lithium-ion battery cell 20 was completed.

In the following examples and comparative examples, the tensile strength of the shell body 211 of the battery cell 20 at the temperature of 25 °C is Rm. To achieve different tensile strengths Rm, different materials are correspondingly selected for the shell body 211. The average thickness of the third shell body wall 2112 of the shell body 211 is T. The specific parameters described above are set as shown in Table 5 below. In addition, in each example and comparative example, all regions of the shell body 211 are made of the same material, and the tensile strength Rm of the shell body 211 at 25 °C is measured by the method specified in GB/T 228.1-2010. In addition, the battery cells 20 in the following examples and comparative examples all have the same settings, except for the different parameter settings shown in Table 5. For example, the capacity of the battery cell 20 in the examples is 350 Ah.

A cyclic charging fatigue test was performed on the battery cells 20 in the following examples and comparative examples. Specifically, a fixture 700 for cyclic charging fatigue test as shown in FIG. 7 can be used for testing.

Specifically, the battery cell 20 was clamped and fixed in a dedicated fixture 700 to ensure that the two walls with the largest area of the battery cell 20 disposed opposite to each other were clamped, the initial pressure was set to 2000 N, and the electrode terminals 214 of the battery cell 20 were connected to a dedicated battery charging and discharging device.

The fixture 700 with the clamped battery cell 20 was placed in a constant-temperature environment of 25±2 °C, and the test was started after the battery cell 20 reached temperature equilibrium.

The specific test steps were performed with reference to section 6.4 "Standard Cycle Life" of *GBT31484-2015 Cycle Life Requirements and Test Methods for Traction Battery of Electric Vehicle,* and the test cycle cut-off condition was changed to "stop the test until the weld seam 2113 of the battery cell 20 is damaged".

For example, the test may be performed according to the following steps: step a: discharging at 1I(A) until discharge termination conditions specified by the enterprise were met; step b: letting to stand for not less than 30 min or under resting conditions specified by the enterprise; step c: charging according to the method in 6.1.1.3; step d: letting to stand for not less than 30 min or under resting conditions specified by the enterprise; step e: discharging at 1I1(A) until discharge termination conditions specified by the enterprise were met; and step f: repeating steps b-e until the weld seam 2113 was damaged, at which point the test should be stopped.

In the above test process, the weld seam 2113 of the battery cell 20 was continuously observed until liquid leakage occurred at the weld seam 2113. The number of cycles was recorded to obtain the situation of the shell body 211 after 1000 cycles as shown in Table 5 below. In the following examples and comparative examples, the weld seam 2113 is a weld seam between the shell body 211 and the cover plate 212, that is, the weld seam 2113 surrounds the open end of the shell body 211, and the shell body 211 is of an integrally formed structure.

**Table 5**

| | T(mm) | Rm(MPa) | T×Rm (mm·MPa) | Material of shell body | Situation of shell body after 1000 cycles |
|---|---|---|---|---|---|
| Comparative Example 1 | 0.1 | 170 | 17 | Aluminum | Shell body cracks after 656 cycles |
| Comparative Example 2 | 0.3 | 170 | 51 | Aluminum | Shell body cracks after 437 cycles |
| Example 1 | 0.2 | 328 | 65.6 | Q195 | Not crack |
| Example 2 | 0.3 | 328 | 98.4 | Q195 | Not crack |
| Example 3 | 0.16 | 396 | 63.36 | SPCC | Not crack |
| Example 4 | 0.3 | 396 | 118.8 | SPCC | Not crack |
| Example 5 | 0.14 | 459 | 64.26 | SUS430 | Not crack |
| Example 6 | 0.3 | 459 | 137.7 | SUS430 | Not crack |
| Example 7 | 0.12 | 533 | 63.96 | SUS304 | Not crack |
| Example 8 | 0.3 | 533 | 159.9 | SUS304 | Not crack |
| Example 9 | 0.1 | 625 | 62.5 | SUS304 | Not crack |
| Example 10 | 0.3 | 625 | 187.5 | SUS304 | Not crack |
| Example 11 | 0.1 | 763 | 76.3 | SUS304 | Not crack |
| Example 12 | 0.3 | 763 | 228.9 | SUS304 | Not crack |

It should be understood that in Table 5 above, the material of the shell body 211 may be Q195 carbon steel, and the tensile strength Rm of the Q195 carbon steel at the room temperature of 25 °C is usually at least 315 MPa to 430 MPa. In the above examples, only 328 MPa is taken as an example, but it is not limited thereto. Similarly, the material of the shell body 211 may be SPCC carbon steel, the tensile strength Rm of the SPCC carbon steel at the room temperature of 25 °C is usually at least 380 MPa to 430 MPa, and only 396 MPa is taken as an example in the above examples; the material of the shell body 211 may be SUS430 stainless steel, the tensile strength Rm of the SUS430 stainless steel at the room temperature of 25 °C is usually at least 450 MPa, and only 459 MPa is taken as an example in the above examples; the material of the shell body 211 may be SUS304 stainless steel, the tensile strength Rm of the SUS304 stainless steel at the room temperature of 25 °C is usually at least 520 MPa, and only 533 MPa, 625 MPa, and 763 MPa are taken as examples in the above examples.

As can be seen from Table 5 above, in the above Examples 1-12, Rm and T of the third shell body wall 2112 of the shell body 211 satisfy that 250 MPa ≤ Rm ≤ 2000 MPa, 0.05 mm ≤ T ≤ 0.5 mm, and 60 mm·MPa ≤ T × Rm ≤ 500 mm·MPa, and the number of fatigue failures of the battery cell 20 can reach 1000 or above, thereby meeting the design requirements of the battery cell 20. Moreover, even if the average thickness T of the third shell body wall 2112 is set small, the number of fatigue failures of the battery cell 20 can reach 1000 or above, and the small average thickness T of the third shell body wall 2112 can also increase the energy density of the battery 10. However, in both comparative examples, the structural strength of the third shell body wall 2112 is insufficient, and both Rm and T × Rm fall outside the above value ranges. Even if the average thickness T of the third shell body wall 2112 is large, the number of fatigue failures of the battery cell 20 does not reach 1000, thereby failing to meet the design requirements of the battery cell 20.

In some embodiments, the capacity of the battery cell is C, and the tensile strength of at least a partial region of the shell body 211 at the temperature of 25 °C is Rm. Rm and C satisfy that 250 MPa ≤ Rm ≤ 2000 MPa and 25 Ah ≤ C ≤ 550Ah. In one aspect, increasing the capacity C of the battery cell 20 can increase the capacity density of the battery 10 including a plurality of the battery cells 20. Alternatively, if the capacity C of a single battery cell 20 is increased in the case that the total capacity of the battery 10 remains unchanged, the number of battery cells 20 provided can be reduced, and correspondingly, the number of electrical connections between the plurality of battery cells 20 can also be reduced, thereby reducing the probability of electrical connection failures and helping to improve the reliability of the battery. Moreover, in the case that the capacity C of the battery cell 20 is large, the tensile strength Rm of at least a partial region of the shell body 211 at the room temperature of 25 °C can also be increased to meet the structural strength requirements of the high-capacity battery cell 20 for the shell body 211, thereby improving the reliability and service life of the battery cells 20. In another aspect, if the battery cell 20 has a large capacity, the reactions inside the battery cell will become more intense, thus placing higher demands on the structural strength of the shell body 211. Therefore, the capacity C of the battery cell 20 should not be too large, so as to limit the design requirements for the structural strength of the shell body 211. This can reduce the difficulty in material selection and processing of the battery cell 20, reduce costs, and improve the processing efficiency.

It should be understood that the value range of the capacity C of the battery cell 20 according to the embodiments of the present application may be adjusted according to practical applications. For example, the capacity C of the battery cell 20 may be reasonably selected based on the actual requirements of the battery 10. In some embodiments, the capacity C of the battery cell 20 may be set to further satisfy that 100 Ah ≤ C ≤ 300 Ah. Appropriately increasing the capacity C of the battery cell 20 can increase the energy density of the battery 10. Meanwhile, the capacity C of the battery cell 20 should not be too large, so as to balance the relationship between the capacity C of the battery cell 20 and the structural strength of the shell body 211, thereby improving the reliability and service life of the battery cell 20.

Further, the capacity C of the battery cell 20 may further satisfy that 150 Ah ≤ C ≤ 250 Ah. Further limiting the capacity C of the battery cell 20 can not only increase the energy density of the battery 10, but also improve the structural strength of the shell body 211, thereby improving the reliability and service life of both the battery cell 20 and the battery 10.

In some embodiments, the value of the capacity C of the battery cell 20 according to the embodiments of the present application may also be set to other values. For example, the capacity C of the battery cell 20 may be any one of the following values or a value between any two of the following values: 25 Ah, 30 Ah, 35 Ah, 40 Ah, 45 Ah, 50 Ah, 55 Ah, 60 Ah, 65 Ah, 70 Ah, 75 Ah, 80 Ah, 85 Ah, 90 Ah, 95 Ah, 100 Ah, 130 Ah, 150 Ah, 180 Ah, 200 Ah, 230 Ah, 250 Ah, 280 Ah, 300 Ah, 330 Ah, 350 Ah, 380 Ah, 400 Ah, 430 Ah, 450 Ah, 480 Ah, 500 Ah, 530 Ah, and 550 Ah.

It should be understood that the capacity C of the battery cell 20 according to the embodiments of the present application represents the amount of power output when the battery cell 20, in a fully charged state, is discharged to the cut-off voltage under specified discharge conditions. The test method for the capacity C of the battery cell 20 may be selected according to practical applications. For example, GB/T 31467.1 may be used for the discharge test to determine the capacity C of the battery cell 20, but the embodiments of the present application are not limited thereto.

A plurality of comparative examples and a plurality of examples are provided below for comparison and illustration. Specifically, the battery cell 20 in each of the following examples and comparative examples is exemplified by the square-shell battery shown in FIGs. 3 and 4, where the shell body 211 is of a hollow structure with one end open.

In the following examples and comparative examples, the preparation methods for the positive electrode plate 223, the negative electrode plate 224, the electrolytic solution, and the separator 225 of the battery cell 20 are as follows.

### 1. Preparation of the positive electrode plate 223

A positive electrode active material LiNi_{0.95}Co_{0.04}Mn_{0.01}O₂, a conductive agent Super P, and a binder polyvinylidene difluoride (PVDF) were prepared into a positive electrode slurry in N-methylpyrrolidone (NMP), where the solid content of the positive electrode slurry was 50 wt%, and the mass ratio of LiNi_{0.7}Co_{0.1}Mn_{0.1}O₂ to Super P to PVDF in the solid component was 8:1:1. The upper surface and lower surface of the current collector aluminum foil were coated with the positive electrode slurry and dried at 85 °C, followed by cold pressing, edge trimming, plate cutting, and slitting. Drying was then performed at 85 °C for 4 h under vacuum to prepare the positive electrode plate 223.

### 2. Preparation of the negative electrode plate 224

A negative electrode active material, a conductive agent Super P, a thickener carboxymethyl cellulose (CMC), and a binder styrene-butadiene rubber (SBR) were uniformly mixed in deionized water to prepare a negative electrode slurry, where the negative electrode active material included graphite and a silicon-based material, the silicon-based material is a silicon-oxygen compound, the solid content of the negative electrode slurry was 30 wt%, and the mass ratio of the negative electrode active material to silicon(II) oxide to Super P to CMC to the binder styrene-butadiene rubber (SBR) in the solid component was 88:7:3:2. The upper surface and lower surface of the current collector copper foil were coated with the negative electrode slurry and dried at 85 °C, followed by cold pressing, edge trimming, plate cutting, and slitting. Drying was then performed at 120 °C for 12 h under vacuum to prepare the negative electrode plate 224.

### 3. Preparation of the electrolytic solution

In a glove box under argon atmosphere (H2O < 0.1 ppm, and O2 < 0.1 ppm), a fully dried electrolyte salt LiPF6 was dissolved in a mixed solvent (the mixed solvent included ethylene carbonate (EC) and diethyl carbonate (DEC), and the ethylene carbonate (EC) and the diethyl carbonate (DEC) were mixed in a mass ratio of 50:50), and the mixture was uniformly mixed to obtain an electrolytic solution with a concentration of 1 mol/L.

### 4. Preparation of the separator 225

A 16 µm polyethylene film was used as the separator 225.

### 5. Preparation of the lithium-ion battery cell 20

The positive electrode plate 223, the separator 225, and the negative electrode plate 224 were stacked in sequence, so that the separator 225 was positioned between the positive electrode plate 223 and the negative electrode plate 224 to separate the positive electrode from the negative electrode. The stack was wound to obtain a bare cell. The bare cell was welded to tabs and then placed in shells made of different materials, and the electrolytic solution prepared above was injected into the dried shell. After procedures including packaging, standing, formation, shaping, capacity testing, and the like, the preparation of the lithium-ion battery cell 20 was completed.

In the following examples and comparative examples, the tensile strength of the shell body 211 of the battery cell 20 at the temperature of 25 °C is Rm. To achieve different tensile strengths Rm, different materials are correspondingly selected for the shell body 211. The capacity of the battery cell 20 is C. The specific parameters described above are set as shown in Table 6 below. In addition, in each example and comparative example, all regions of the shell body 211 are made of the same material, and the tensile strength Rm of the shell body 211 at 25 °C is measured by the method specified in GB/T 228.1-2010. In addition, the battery cells 20 in the following examples and comparative examples all have the same settings, except for the different parameter settings shown in Table 6. For example, the wall thickness of the wall with the largest area of the battery cell 20 in each example is 0.15 mm; for another example, the chemical system of the battery cell 20 in each example is a nickel-cobalt-manganese ternary system.

**Table 6**

| | Rm(MPa) | C(Ah) | Material of shell body | Test results |
|---|---|---|---|---|
| Comparative Example 1 | 177 | 500 | Aluminum | Shell body cracks |
| Comparative Example 2 | 190 | 100 | Aluminum | Shell body cracks |
| Example 1 | 393 | 500 | Mild steel | Shell body remains intact |
| Example 2 | 394 | 300 | Mild steel | Shell body remains intact |
| Example 3 | 390 | 100 | Mild steel | Shell body remains intact |
| Example 4 | 851 | 500 | Stainless steel | Shell body remains intact |
| Example 5 | 854 | 300 | Stainless steel | Shell body remains intact |
| Example 6 | 845 | 100 | Stainless steel | Shell body remains intact |

By comparing the two comparative examples with six examples in Table 6 above, it can be seen that in the case that the shell body 211 is made of different materials, different tensile strengths Rm can be correspondingly determined. In the case that the tensile strength Rm satisfies that 250 MPa ≤ Rm ≤ 2000 MPa and the capacity C of the battery cell 20 satisfies that 25 Ah ≤ C ≤ 550 Ah, for example, in Examples 1-6, the shell body 211 of the battery cell 20 does not crack, indicating that the structural strength of the shell body 211 is applicable to the battery cell 20 with a large capacity and can meet the design requirements of the battery cell 20. However, in the case that the tensile strength Rm does not satisfy that 250 MPa ≤ Rm ≤ 2000 MPa, for example, in Comparative Examples 1-2, the shell body 211 of the battery cell 20 cracks, thus failing to meet the design requirements of the battery cell 20.

It should be understood that, to meet the above design requirements, the material of at least a partial region of the shell body 211 according to the embodiments of the present application may be flexibly selected according to practical applications.

In some embodiments, the material of at least a partial region of the shell body 211 includes at least one of the following: steel, copper alloy, titanium alloy, and nickel alloy. These materials have high strength and can meet the strength requirements of the shell body 211, and they offer ease of processing and low cost.

In some embodiments, the material of at least a partial region of the shell body 211 includes at least one of the following: stainless steel, carbon steel, and high-strength alloy steel. For example, if the shell body 211 is made of stainless steel material, the shell body has high structural strength and can usually meet the requirements for the tensile strength Rm at room temperature, the yield strength Re at room temperature, the tensile strength Rn at high temperature, and the melting point p described above. For example, the melting point of stainless steel is usually 1400 °C to 1500 °C. In addition, the shell body 211 is made of stainless steel, which is not prone to rusting and can improve the service life of the shell body 211 compared to other materials.

If the shell body 211 is made of carbon steel, the shell body has high structural strength and can easily meet the requirements for the tensile strength Rm at room temperature, the yield strength Re at room temperature, the tensile strength Rn at high temperature, and the melting point p described above. For example, the melting point of carbon steel is usually 1425 °C to 1525 °C. In addition, considering that the carbon steel material may be prone to corrosion during use, the outer surface of the carbon steel shell body 211 may be plated with nickel. For example, the thickness of the nickel plating layer is usually 1 µm to 10 µm to protect the surface of the shell body 211 from being corroded due to oxidation, thereby improving the service life of the shell body 211.

The shell body 211 may also be made of other high-strength alloy steel materials to effectively improve the structural strength of the shell body 211. For example, when high structural strength is required for the shell body 211, a high-strength alloy steel material may be selected to easily meet the requirements for the tensile strength Rm at room temperature, the yield strength Re at room temperature, the tensile strength Rn at high temperature, and the melting point p.

In some embodiments, in the case that steel is used for at least a partial region of the shell body 211, the steel model may include at least one of the following: SPCC, Q195, Q215, Q235, SUS 304, SUS 316, and other modified stainless steels. These steels are readily available, exhibit sufficient strength to meet design requirements, and offer cost-effective solutions. For example, the approximate values of the tensile strength Rm at the room temperature of 25 °C, the yield strength Re at the room temperature of 25 °C, the tensile strength Rn at the high temperature of 500 °C, and the melting point p of different steels can be found in Table 7 below.

**Table 7**

| Material | Yield strength Re (MPa) | Tensile strength Rm (MPa) | Tensile strength Rn (MPa) | Melting point p (°C) |
|---|---|---|---|---|
| | 25 °C | 25 °C | 500 °C | |
| SPCC | 270-320 | 380-430 | 230-280 | 1400 |
| Q195 | >195 | 315-430 | 140-180 | 1400-1460 |
| Q215 | >215 | 335-450 | 150-280 | 1420-1480 |
| Q235 | >235 | 375-500 | 160-300 | 1460-1530 |
| SUS 304 | >205 | >520 | 210-450 | 1380-1450 |
| SUS 316 | >177 | >480 | 200-450 | 1375-1450 |
| Modified stainless steel | 140-180 | 400-600 | 180-350 | 1400-1600 |

It should be understood that the material of at least a partial region of the shell body 211 according to the embodiments of the present application may also be selected from other materials. For example, different materials may be reasonably selected based on the mass content of different elements in the material and the functions of the elements.

In some embodiments, the mass content of the chromium element in the material of at least a partial region of the shell body 211 is m, and m satisfies that 10% ≤ m ≤ 30%. Appropriately increasing the amount of chromium element in the material of at least a partial region of the shell body 211 can increase the melting point and strength of the material, thereby making it easy to meet the requirements for the tensile strength Rm at room temperature, the yield strength Re at room temperature, the tensile strength Rn at high temperature, and the melting point p in the embodiments of the present application. In addition, since the chromium element can react with oxygen to generate a dense chromium oxide film, a corrosion-resistant protective film can be further formed on the surface of the shell body 211, thereby improving the corrosion resistance of the shell body 211.

In some embodiments, the mass content of the nickel element in the material of at least a partial region of the shell body 211 is n, and n satisfies that 8% ≤ n ≤ 25%. Appropriately increasing the amount of nickel element in the material of at least a partial region of the shell body 211 can improve the structural strength and plasticity of the shell body 211. For example, the tensile strength Rm at room temperature, the yield strength Re at room temperature, and the tensile strength Rn at high temperature can be improved, and the corrosion resistance of the material can also be provided.

In some embodiments, taking the shell body 211 made of steel as an example, different types of steel contain various elements with different mass contents. For example, for the stainless steel material, the mass content of the iron element is one of the basic elements of stainless steel, and its mass content is usually 60% to 70%. For another example, Table 8 shows the mass contents of various elements in different types of steel. The values in Table 8 represent the maximum mass percentages of the elements in the materials, that is, the mass percentages of the elements in the corresponding application are usually not greater than the values shown in Table 8.

**Table 8**

| | Carbon C | Silicon Si | Manganese Mn | Phosphorus P | Sulfur S | Nickel Ni | Chromium Cr | Molybdenum Mo |
|---|---|---|---|---|---|---|---|---|
| SPCC | 0.12 | / | 0.5 | 0.04 | 0.045 | / | / | / |
| Q195 | 0.12 | 0.3 | 0.5 | 0.035 | 0.035 | 0.3 | 0.3 | / |
| Q215 | 0.15 | 0.35 | 1.2 | 0.035 | 0.035 | 0.3 | 0.3 | / |
| Q235 | 0.22 | 0.35 | 1.4 | 0.035 | 0.035 | 0.3 | 0.3 | / |
| SUS 304 | 0.08 | 1.0 | 2.0 | 0.045 | 0.03 | 8.0-10.5 | 18.0-20.0 | / |
| SUS 316 | 0.08 | 1.0 | 2.0 | 0.045 | 0.03 | 10.0-14.0 | 16.0-18.0 | 2.0-3.0 |
| Modified stainless steel | 0.08 | 1 | 2 | 0.045 | 0.03 | 7.5-10 | 16.5-18.5 | 0.1 |

It should be understood that in the case that steel is used in at least a partial region of the shell body 211, if the mass content of the carbon element in the steel is increased, the strength and hardness of the steel can be improved. For example, a higher carbon content usually results in higher hardness and strength of the steel, but may reduce the corrosion resistance.

If the mass content of the chromium element in the steel is increased, the chromium element can react with oxygen to form a dense chromium oxide film, so that a corrosion-resistant protective film is formed on the surface of the steel, thereby improving the corrosion resistance of the steel.

If the mass content of the nickel element in the steel is increased, the corrosion resistance, strength, and plasticity of the steel can be improved.

If the mass content of the molybdenum element in the steel is increased, the corrosion resistance and strength of the steel can be improved, especially in corrosive media such as acids and salts.

If the mass content of the manganese element in the steel is increased, the toughness and fatigue resistance of the steel can be increased.

If the mass content of the silicon element in the steel is increased, the corrosion resistance and strength of the stainless steel can be improved.

If the mass content of the phosphorus element and the sulfur element in the steel is reduced, the negative effect of these two elements on the corrosion resistance, plasticity, and toughness of the steel can be reduced.

In addition, other elements may also be included in the steel. For example, the steel may further contain a copper element. For example, the mass content of the copper element in Q195, Q215, and Q235 is generally not greater than 0.3%, while that in the modified stainless steel is generally not greater than 2% to 3.5%. For another example, the steel may further contain a nitrogen element. For example, the mass content of the nitrogen element in Q195, Q215, and Q235 is generally not greater than 0.12%.

It should be understood that the method for testing the mass content of the elements of the steel described above according to the embodiments of the present application may be selected according to practical applications. For example, the inductively coupled plasma atomic emission spectrometry, i.e., inductively coupled plasma (ICP) testing, may be used, but the embodiments of the present application are not limited thereto.

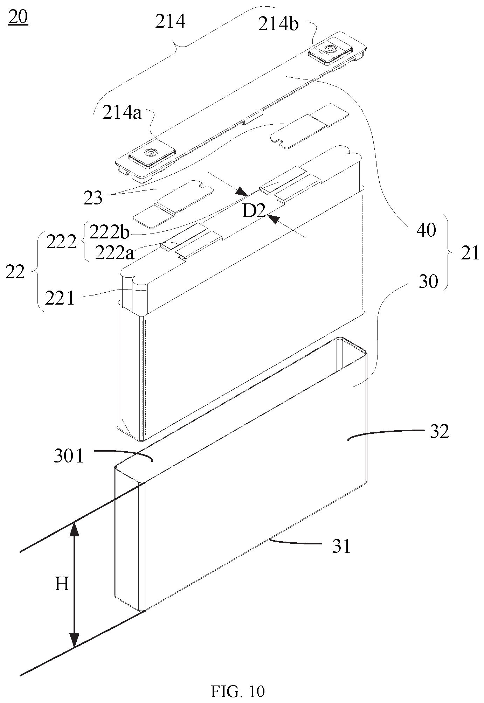

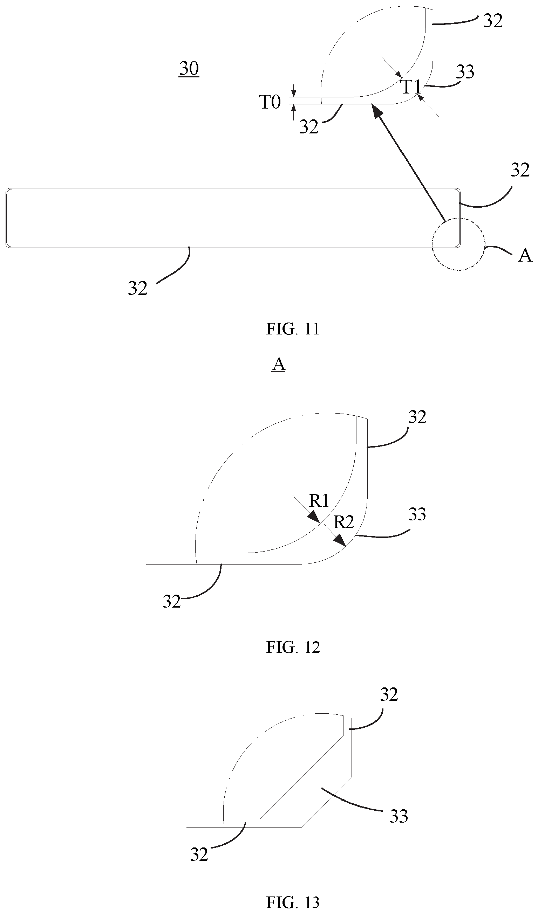

FIG. 10 shows another schematic diagram of an exploded structure of the battery cell 20 according to an embodiment of the present application, and FIG. 11 shows a schematic cross-sectional diagram of the shell body 30 according to an embodiment of the present application. It should be noted that the shell body 30 shown in FIGs. 10 and 11 may be applied to the battery cell 20. For example, the shell body 30 may be applied to the battery cell 20 shown in FIGs. 3 and 4, and the shell body 30 shown in FIGs. 10 and 11 may be the shell body 211 shown in FIGs. 3 and 4 and is applicable to the related description above. For brevity, details are not repeated here.

As shown in FIGs. 10 and 11, the shell body 30 is provided with an opening 301. The shell body 30 includes a first shell body wall 31 disposed opposite to the opening 301 and at least two second shell body walls 32. The first shell body wall 31 intersects with the second shell body walls 32.

As shown in the partially enlarged diagram of portion A in FIG. 11, a transition region 33 is disposed between two adjacent second shell body walls 32 among the at least two second shell body walls 32 of the shell body 30. The maximum thickness of the transition region 33 is T1, and the maximum thickness of the second shell body wall 32 with the largest thickness among the two adjacent second shell body walls 32 is T0, where T1 is greater than T0.

In some embodiments, the second shell body walls 32 may be perpendicular to the first shell body wall 31.

In some embodiments, at least two second shell body walls 32 may be connected end to end to define, in an enclosing manner, a hollow structure with openings at two ends, where the first shell body wall 31 lids an opening at an end of the hollow structure.

In some embodiments, the shell body 30 may be placed in a manner as shown in FIG. 10, so the first shell body wall 31 may serve as the bottom wall of the shell body 30 for supporting the electrode assembly 22, and the second shell body wall 32 may serve as the side wall of the shell body 30 and be disposed around the electrode assembly 22.

Generally, the second shell body walls 32 are not manufactured independently, that is, the at least two second shell body walls 32 may be integrally formed. In some other embodiments, the at least two second shell body walls 32 and the first shell body wall 31 are integrally formed, that is, the shell body 30 is of an integrally formed structure. For example, a plate-shaped structure is punched by a mold into a hollow structure with an opening, and the shell body 30 thus formed after punching may have an opening of various shapes. For example, the opening 301 may be circular, polygonal, or track-shaped. The polygon is, for example, a square, a pentagon, a hexagon, or another irregular shape.

In some embodiments, the thickness of the transition region 33 may be uniform or non-uniform. The following defines the maximum thickness T1 of the transition region 33 based on the example where the thickness of the transition region 33 is uniform.

As can be seen from FIG. 10, the transition region 33 has two surfaces, namely an inner surface and an outer surface. In some embodiments, the inner surface and the outer surface may be arc surfaces, and the inner surface and the outer surface are coaxially disposed. The maximum thickness T1 of the transition region 33 may thus be defined as the length, within the transition region 33, of an extension line of a connecting line between the center of the circle where the inner arc is located and the center of the circle where the outer arc is located measured along any cross section in the direction of an axis perpendicular to the inner surface and the outer surface. In some other embodiments, the inner surface and the outer surface may be planes, and the inner surface and the outer surface are parallel to each other. The maximum thickness T1 of the transition region 33 may be defined as the perpendicular distance between the inner surface and the outer surface. Similarly, the second shell body wall 32 also has two surfaces, namely an inner surface and an outer surface. The maximum value of the perpendicular distance between the inner surface and the outer surface is the maximum thickness of the second shell body wall 32.

If at least two second shell body walls 32 of the shell body 30 are not equal in wall thickness, for example, the two second shell body walls 32 adjacent to one transition region 33 are not equal in wall thickness, in the embodiments of the present application, T0 refers to the second shell body wall 32 with the largest wall thickness among the two second shell body walls 32 adjacent to the transition region 33 in the shell body 30. However, if at least two second shell body walls 32 of the shell body 30 are equal in wall thickness, for example, the two second shell body walls 32 adjacent to one transition region 33 are equal in wall thickness, in the embodiments of the present application, T0 refers to the thickness of any one of the second shell body walls 32 of the shell body 30.

It should be noted that if a second shell body wall 32 includes a functional region, the maximum thickness of the second shell body wall 32 actually refers to the maximum thickness of the region of the second shell body wall 32 other than the functional region. The functional region includes at least one of the following: a pressure relief region, a region where the electrode terminal is located, a liquid injection region, and a welding region.

In the embodiments, by providing the transition region 33 between two adjacent second shell body walls 32, the stress concentration between the two adjacent second shell body walls 32 can be reduced, thereby reducing the risk of structural failure caused by such stress concentration. In addition, by setting the maximum thickness T1 of the transition region 33 to be greater than the maximum thickness T0 of the second shell body wall with the largest thickness among the two adjacent second shell body walls, the thickened transition region 33 can enhance the structural strength of the shell body 30. This is beneficial for solving the problem of deformation of the shell body 30 during the production and assembly process of the battery cell 20 and the deformation of the shell body 30 due to gas generation-induced expansion during the use of the battery cell 20.

In some embodiments, the maximum thickness T1 of the transition region 33 and the maximum thickness T0 of the second shell body wall 32 with the largest thickness among the two adjacent second shell body walls 32 satisfy that 1.5 ≤ T1/T0 ≤ 7.

In the embodiments, by setting the ratio of the maximum thickness T1 of the transition region 33 to the maximum thickness T0 of the second shell body wall 32 with the largest thickness among the two adjacent second shell body walls 32 within the range of [1.5, 7], in one aspect, the strength of the shell body can be enhanced by a relatively thick transition region 33, and in another aspect, the difficulty in manufacturing the shell body 30 due to excessive thickening of the transition region 33 can be limited, thereby achieving a balance between the strength of the shell body 30 and the difficulty in manufacturing the shell body 30.

In practical applications, the ratio of T1 to T0 may be adjusted. For example, the maximum thickness T1 of the transition region 33 and the maximum thickness T0 of the second shell body wall 32 with the largest thickness among the two adjacent second shell body walls 32 may satisfy that 2 ≤ T1/T0 ≤ 4.

For example, T1/T0 may be equal to 2, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, or the like.

In the embodiments, by setting the ratio of the maximum thickness T1 of the transition region 33 to the maximum thickness T0 of the second shell body wall 32 with the largest thickness among the two adjacent second shell body walls 32 within the range of [2, 4], an optimal balance can be achieved between the strength of the shell body 30 and the manufacturing difficulty of the shell body 30.

Optionally, as shown in FIGs. 11 and 12, two adjacent second shell body walls 32 are connected by a first round corner 331, and the transition region 33 includes the first round corner 331. In other words, the transition region 33 is formed by means of a round corner.

In the embodiments, forming the transition region 33 between the two adjacent second shell body walls 32 by means of a round corner enables the shell body 30 to be more easily formed and exhibit better surface smoothness. Meanwhile, this design helps to reduce the risk of cracking of the shell body 30 due to the stress concentration at sharp points under the influence of internal gas generation from the battery cell 20.

As shown in FIG. 12, the inner diameter of the first round corner 331 is R1, and the outer diameter of the first round corner 331 is R2.

In some embodiments, the first round corner 331 has an inner surface and an outer surface, and both the inner surface and the outer surface are arc surfaces. The inner diameter R1 of the first round corner 331 may be understood as the radius of the circle where the inner arc of the first round corner 331 is located, and the outer diameter R2 of the first round corner 331 may be understood as the radius of the circle where the outer arc of the first round corner 331 is located.

In some embodiments, the inner diameter R1 of the first round corner 331 satisfies that 2 mm ≤ R1 ≤ 4 mm. For example, R1 is 2 mm, 2.1 mm, 2.2 mm, 2.3 mm, 2.4 mm, 2.5 mm, 2.6 mm, 2.7 mm, 2.8 mm, 2.9 mm, 3.0 mm, 3.1 mm, 3.2 mm, 3.3 mm, 3.4 mm, 3.5 mm, 3.6 mm, 3.7 mm, 3.8 mm, 3.9 mm, 4.0 mm, or the like.

In the embodiments, by setting the inner diameter of the first round corner 331 between the two adjacent second shell body walls 32 within the range of [2 mm, 4 mm], in one aspect, the internal space of the shell body 30 will not be occupied due to an excessively large inner diameter, so that the gas production pressure inside the shell body 30 will not be increased, and in another aspect, the wall thickness increment of the first round corner 331 will not be insufficient due to an excessively small inner diameter, thereby avoiding the insufficient strength of the shell body 30. This enables a balance between the internal space utilization of the shell body 30 and the strength of the shell body 30 to be achieved.

In some embodiments, the outer diameter R2 of the first round corner 331 satisfies that 1.5 mm ≤ R2 ≤ 3.5 mm. For example, R2 is 1.5 mm, 2 mm, 2.5 mm, 3.0 mm, 3.5 mm, or the like.

In the embodiments, in the case that the cover plate 40 is fixedly connected to the shell body 30 through side welding, a larger outer diameter R2 of the first round corner 331 between the two adjacent second shell body walls 32 makes it harder to control the welding quality, thus increasing the likelihood of false welding. Conversely, a smaller outer diameter R2 of the first round corner 331 makes the shell body 30 more difficult to form. Therefore, controlling the outer diameter R2 of the first round corner 331 within the range of [1.5 mm, 3.5 mm] can balance the welding quality and the forming difficulty of the shell body.

In some other embodiments, as shown in FIG. 13, two adjacent second shell body walls 32 are connected by a C-shaped corner. For example, the included angle between the C-shaped corner and each of the two adjacent second shell body walls 32 is 45°.

In an embodiment, the shell body 30 may be of an integrally formed structure. As shown in FIG. 10, the depth of the shell body 30 is H. The depth H of the shell body 30 and the inner diameter R1 of the first round corner 331 satisfy that 2.5 mm ≤ R1 ≤ 20 mm and 50 mm < H ≤ 250 mm.

In the embodiments of the present application, the depth may be understood as the distance from the opening inward to the bottom. For example, the depth H of the shell body 30 may be understood as the distance from the opening 301 to the first shell body wall 31.

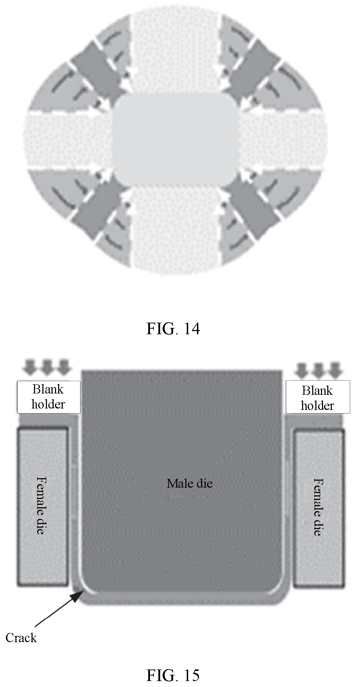

FIG. 14 shows a schematic diagram of the material flow of the shell body 30 during the integral forming process. FIG. 15 shows a schematic diagram illustrating the force bearing of the shell body 30 during the integral forming process. As can be seen from FIGs. 14 and 15, during the forming of the shell body 30, the material of the shell body 30 tends to accumulate at the position of the first round corner 331, resulting in a large friction force between the shell body 30 and the mold, which in turn makes the shell body 30 prone to cracking. Therefore, in the embodiments, by setting the depth H of the shell body 30 and the inner diameter R1 of the first round corner 331 to satisfy that 2.5 mm ≤ R1 ≤ 20 mm and 50 mm < H ≤ 250 mm, the risk of cracking of the shell body 30 due to force bearing during the integral forming process can be minimized without affecting the energy density of the battery cell 20, thereby reducing the difficulty in forming the shell body 30.

For example, R1 is 2.5 mm, 5 mm, 7.5 mm, 10 mm, 12.5 mm, 15 mm, 17.5 mm, or 20 mm; and/or, H is 50 mm, 100 mm, 150 mm, 200 mm, or 250 mm.

In some embodiments, H and R1 satisfy that 75 mm ≤ H ≤ 180 mm and 4 mm ≤ R1 ≤ 15 mm.

For example, H is 75 mm, 100 mm, 125 mm, 150 mm, 175 mm, or 180 mm. For example, R1 is 4 mm, 6 mm, 8 mm, 10 mm, 12 mm, 14 mm, or 15 mm.

In the embodiments, by setting H and R1 to satisfy that 4 mm ≤ R1 ≤ 15 mm and 75 mm ≤ H ≤ 180 mm, in one aspect, the energy density of the battery cell 20 will not be reduced due to an excessively small H or an excessively large R, and in another aspect, the shell body 30 will not be prone to material accumulation during the forming process due to an excessively large H or an excessively small R and thus cracking of the shell body 30 caused by excessive force bearing will be avoided.

In some other embodiments, H and R1 satisfy that 5 mm ≤ R1 ≤ 10 mm and 90 mm ≤ H ≤ 140 mm; for example, R1 is 5 mm, 6 mm, 7 mm, 8 mm, 9 mm, or 10 mm. For another example, H is 90 mm, 100 mm, 110 mm, 120 mm, 130 mm, or 140 mm.

In some other embodiments, the shell body 30 is of an integrally formed structure, and the yield strength of the shell body 30 at the temperature of 25 °C is Re. The yield strength Re and the inner diameter R1 of the first round corner 331 satisfy that 140 MPa ≤ Re ≤ 1000 MPa and 2.5 mm ≤ R1 ≤ 20 mm.

For example, Re is 140 MPa, 180 MPa, 200 MPa, 230 MPa, 250 MPa, 280 MPa, 300 MPa, 320 MPa, 350 MPa, 380 MPa, 400 MPa, 430 MPa, 450 MPa, 480 MPa, 500 MPa, 550 MPa, 600 MPa, 650 MPa, 700 MPa, 750 MPa, 800 MPa, 850 MPa, 900 MPa, 950 MPa, or 1000 MPa.

For example, R1 is 2.5 mm, 5 mm, 7.5 mm, 10 mm, 12.5 mm, 15 mm, 17.5 mm, or 20 mm.

The yield strength may be understood as the critical stress value at which the material yields. Usually, after the material is subjected to stress, as the stress increases, in addition to elastic deformation, plastic deformation may also occur. The point at which the material plastically deforms may be referred to as the yield point, and the strength corresponding to the yield point is referred to as the yield strength. The test method for the yield strength Re of the shell body 30 according to the embodiments of the present application at the temperature of 25 °C may be selected according to practical applications. For example, the yield strength Re can be tested at the room temperature of 25 °C in accordance with GB/T 228.1-2010.

To solve the problem that the proneness of the material to accumulating at the first round corner 331 results in a high friction force between the shell body 30 and the mold and thereby makes the shell body 30 prone to cracking during the integral forming of the shell body 30, the embodiments of the present application further provide another solution. That is, for the shell body 30 with the yield strength Re satisfying that 140 MPa ≤ Re ≤ 1000 MPa, the inner diameter R1 of the first round corner 331 is set to 2.5 mm ≤ R1 ≤ 20 mm, such that it can prevent R1 from being too small so as to reduce the difficulty in forming the shell body 30 and prevent R1 from being too large so as to reduce the force bearing-induced deformation of the shell body 30.

In the embodiments, by using a material having a yield strength Re satisfying that 140 MPa ≤ Re ≤ 1000 MPa to manufacture the shell body 30, the wall thickness of the shell body can be reduced without reducing the strength of the shell body 30, thereby increasing the capacity space of the battery cell 20. In addition, by setting the inner diameter R1 of the first round corner 331 between the adjacent second shell body walls 32 to satisfy that 2.5 mm ≤ R1 ≤ 20 mm, the risk of cracking of the shell body 30 due to force bearing during the integral forming process can be minimized, while reducing the difficulty in forming the shell body 30.

In some embodiments, the yield strength Re and R1 of the shell body 30 may satisfy that 150 MPa ≤ Re ≤ 400 MPa and 4 mm ≤ R1 ≤ 15 mm.

For example, Re is 150 MPa, 170 MPa, 190 MPa, 210 MPa, 230 MPa, 260 MPa, 290 MPa, 310 MPa, 330 MPa, 370 MPa, 390 MPa, or 400 MPa.

For example, R1 is 4 mm, 6 mm, 8 mm, 10 mm, 12 mm, 14 mm, or 15 mm.

In the embodiments, by defining 150 MPa ≤ Re ≤ 400 MPa and 4 mm ≤ R1 ≤ 15 mm, it helps to achieve a balance between the forming difficulty and the degree of deformation of the shell body 30.

In some embodiments, the yield strength Re and R1 of the shell body 30 may satisfy that 160 MPa ≤ Re ≤ 300 MPa and 5 mm ≤ R1 ≤ 10 mm.

For example, Re is 160 MPa, 170 MPa, 180 MPa, 190 MPa, 200 MPa, 210 MPa, 220 MPa, 230 MPa, 240 MPa, 250 MPa, 260 MPa, 270 MPa, 280 MPa, 290 MPa, or 300 MPa.

For example, R1 is 5 mm, 6 mm, 7 mm, 8 mm, 9 mm, or 10 mm.

In the embodiments, by defining 160 MPa ≤ Re ≤ 300 MPa and 5 mm ≤ R1 ≤ 10 mm, the force bearing-induced deformation of the shell body 30 during use can be minimized without affecting the forming difficulty of the shell body 30.

In some embodiments, the tensile strength of the shell body 30 at the temperature of 25 °C is Rm, and Rm and R1 satisfy that 250 MPa ≤ Rm ≤ 2000 MPa and 2.5 mm ≤ R1 ≤ 20 mm.

The tensile strength may be understood as the maximum stress value that a material endures between stretching and breaking. The test method for the tensile strength Rm of the shell body 30 according to the embodiments of the present application at the temperature of 25 °C may be selected according to practical applications. For example, the tensile strength Rm can be tested at the room temperature of 25 °C in accordance with ISO 6892-2:2018.

For example, Rm is 250 MPa, 300 MPa, 350 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1100 MPa, 1200 MPa, 1300 MPa, 1400 MPa, 1500 MPa, 1600 MPa, 1700 MPa, 1800 MPa, 1900 MPa, or 2000 MPa.

In the embodiments, by setting 250 MPa ≤ Rm ≤ 1000 MPa and 2.5 mm ≤ R1 ≤ 20 mm, the force applied on the mold during the manufacturing process of the shell body 30 can be minimized without affecting the strength of the shell body 30, thereby ensuring that the dimension or the surface of the shell body 30 remain unaffected.

In some embodiments, Rm and R1 satisfy that 280 MPa ≤ Rm ≤ 800 MPa and 4 mm ≤ R1 ≤ 15 mm.

For example, Rm is 280 MPa, 310 MPa, 340 MPa, 370 MPa, 390 MPa, 430 MPa, 470 MPa, 510 MPa, 540 MPa, 580 MPa, 610 MPa, 630 MPa, 660 MPa, 690 MPa, 720 MPa, 740 MPa, 780 MPa, or 800 MPa.

In some other embodiments, Rm and R1 satisfy that 380 MPa ≤ Rm ≤ 600 MPa and 5 mm ≤ R1 ≤ 10 mm.

For example, Rm is 380 MPa, 390 MPa, 410 MPa, 440 MPa, 480 MPa, 520 MPa, 535 MPa, 570 MPa, 596 MPa, or 600 MPa.

In some embodiments, the maximum wall thicknesses of at least two second shell body walls 32 of the shell body 30 are equal.

Further optionally, the wall thickness of each of the at least two second shell body walls 32 of the shell body 30 is uniform, and the wall thicknesses of the at least two second shell body walls 32 are equal.

In the embodiments, by setting the wall thicknesses of the at least two second shell body walls 32 to be equal, in one aspect, the processing difficulty of the shell body 30 can be reduced, and in another aspect, the minimum processing wall thickness can be set for the at least two second shell body walls 32, which helps to fully improve the space utilization of the shell body 30.

In some other embodiments, a transition region 33 is disposed between any two adjacent second shell body walls 32 among the at least two second shell body walls 32, and the maximum thicknesses of at least two transition regions 33 corresponding to the at least two second shell body walls 32 are equal.

In the embodiments, by setting the maximum thicknesses of the at least two transition regions 33 between the at least two second shell body walls 32 of the shell body 30 to be equal, it helps to manufacture the shell body 30 into a symmetrical structure, which is easy to process. In addition, this eliminates the risk of incorrect orientation when the shell body 30 is assembled with the cover plate 40, thereby providing a fool-proof function.

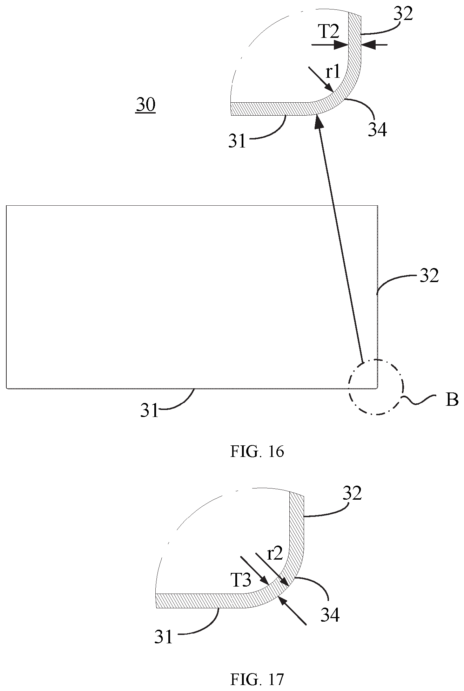

FIG. 16 shows another schematic cross-sectional diagram of the shell body 30 according to an embodiment of the present application. As shown in the partially enlarged diagram of portion B in FIG. 16, the first shell body wall 31 is connected to the second shell body wall 32 by a second round corner 34. As shown in the enlarged schematic diagram of the portion B in FIG. 16, the inner diameter of the second round corner 34 is r1, and the minimum thickness of the second shell body wall 32 with the smallest thickness among the at least two second shell body walls 32 is T2. The inner diameter r1 of the second round corner 34 and the minimum thickness T2 of the second shell body wall 32 with the smallest thickness among the at least two second shell body walls 32 satisfy that 2.0 ≤ r1/T2 ≤ 30.

It should be understood that the first shell body wall 31 is connected to the at least two second shell body walls 32. Optionally, any one of the second shell body walls 32 is connected to the first shell body wall 31 by the second round corner 34 shown in FIG. 16. In addition, the implementation of the second round corner 34 herein is similar to that of the first round corner 331 in FIG. 12. That is, the second round corner 34 has an inner surface and an outer surface, and both the inner surface and the outer surface are arc surfaces. The inner diameter r1 of the second round corner 34 may be understood as the radius of the circle where the inner arc is located.

It should be noted that if the thickness of each second shell body wall 32 is uniform, the minimum thickness T2 of the second shell body wall 32 may refer to the thickness of the thinnest second shell body wall 32 among the at least two second shell body walls 32. If the thickness of each second shell body wall 32 is non-uniform, the minimum thickness T2 of the second shell body wall 32 may refer to the thickness of the thinnest region among all the second shell body walls 32.

It should also be noted that if a second shell body wall 32 includes a functional region, the minimum thickness of the second shell body wall 32 actually refers to the minimum thickness of the region of the second shell body wall 32 other than the functional region. The functional region includes at least one of the following regions: a pressure relief region, a region where the electrode terminal is located, a liquid injection region, and a welding region.

In the embodiments, by setting the ratio of the inner diameter r1 of the second round corner 34 between the first shell body wall 31 and the second shell body wall 32 to the minimum thickness T2 of the second shell body wall 32 with the smallest thickness within the range of [2.0, 30], it helps to balance the processing difficulty of the shell body 30 and the space capacity and strength of the battery cell 20.

In some embodiments, the inner diameter r1 of the second round corner 34 and the minimum thickness T2 of the second shell body wall 32 with the smallest thickness among the at least two second shell body walls 32 satisfy that 2.5 ≤ r1/T2 ≤ 10. For example, r1/T2 is 2.5, 3.0, 3.5, 4.0, 4.5, 5.0, 5.5, 6.0, 6.5, 7.0, 7.5, 8.0, 8.5, 9.0, 9.5, 10, or the like.

Optionally, the inner diameter r1 of the second round corner 34 may satisfy that 0.8 mm ≤ r1 ≤ 1.5 mm. For example, r1 is 0.8 mm, 0.9 mm, 1.0 mm, 1.1 mm, 1.2 mm, 1.3 mm, 1.4 mm, or 1.5 mm.

In the embodiments, by setting the inner diameter r1 of the second round corner 34 within the range of [0.8 mm, 1.5 mm], in one aspect, the manufacturing difficulty of the shell body 30 will not be increased due to an excessively small r1, and in another aspect, the interference between the electrode assembly 22 and the second round corner 34 will not be reduced due to an excessively large r1. That is, the assembly of the shell body 30 and the electrode assembly 22 is satisfied without reducing the height of the electrode assembly 22 and compromising the capacity of the electrode assembly 22. In addition, if r1 is too large, the shell body 30 is also prone to deformation.

FIG. 17 shows another partially enlarged schematic diagram of the portion B in FIG. 16. As shown in FIG. 17, the outer diameter of the second round corner 34 is r2, where r2 satisfies that 1 mm ≤ r2 ≤ 2.5 mm. For example, r2 is 1.0 mm, 1.1 mm, 1.2 mm, 1.3 mm, 1.4 mm, 1.5 mm, 1.6 mm, 1.7 mm, 1.8 mm, 1.9 mm, 2.0 mm, 2.1 mm, 2.2 mm, 2.3 mm, 2.4 mm, or 2.5 mm.

Similar to the definition of the inner diameter r1 of the second round corner 34, the outer diameter r2 of the second round corner 34 may be understood as the radius of the circle where the outer arc of the second round corner 34 is located.

In the embodiments, by setting the outer diameter r2 of the second round corner 34 within the range of [1.0 mm, 2.5 mm], in one aspect, the insulating film outside the battery cell 20 will not be punctured by sharp points due to an excessively small r2 and thus insulation failure will be avoided, and in another aspect, the thickness of the second round corner 34 will not be too thin due to an excessively large r2 and thus the strength of the shell body 30 will not be affected.

In some embodiments, H and T2 satisfy that 300 ≤ H/T2 ≤ 800. For example, H/T2 is 300, 350, 400, 450, 500, 550, 600, 650, 700, 750, 800, or the like.

In the embodiments, by setting the ratio of the depth H of the shell body 30 to the minimum thickness T2 of the second shell body wall 32 with the smallest thickness within the range of [300, 800], the volume utilization and the strength of the battery cell 20 can be balanced.

As shown in FIG. 17, the maximum thickness of the second round corner 34 is T3, where the ratio of T3 to T2 satisfies that 0.8 ≤ T3/T2 ≤ 2. For example, T3/T2 is 0.8, 0.9, 1.0, 1.1, 1.2, 1.3, 1.4, 1.5, 1.6, 1.7, 1.8, 1.9, or 2.0.

The thickness of the second round corner 34 may be uniform or non-uniform. The following defines the maximum thickness T3 of the second round corner 34 based on the example where the thickness of the second round corner 34 is uniform. In some embodiments, the maximum thickness T3 of the second round corner 34 may be defined as the length, within the second round corner 34, of an extension line of a connecting line between the center of the circle where the inner arc is located and the center of the circle where the outer arc is located measured along any cross section in the direction of an axis perpendicular to the inner surface and the outer surface.

In the embodiments, by setting the ratio of the maximum thickness T3 of the second round corner 34 to the minimum thickness T2 of the second shell body wall 32 with the smallest thickness within the range of [0.8, 2], a balance between the strength and the manufacturability of the shell body 30 can be achieved. That is, it avoids the case where the strength of the shell body 30 will be insufficient due to excessive thinning of the second round corner 34, and also avoids the case where the shell body 30 will be difficult to manufacture due to insufficient thinning of the second round corner 34.

In some embodiments, the wall thickness of the shell body 30 is uniform, that is, all walls of the shell body 30 have an equal wall thickness.

In the embodiments, by setting the wall thickness of the shell body 30 to be uniform, in one aspect, the processing difficulty of the shell body 30 can be reduced, and in another aspect, the minimum processing wall thickness can be set for each wall of the shell body 30, which helps to fully improve the space utilization of the shell body 30.

In some embodiments, the battery cell 20 further includes a cover plate 40. The cover plate is configured to lid the opening 301 of the shell body 30 to enclose the electrode assembly 22 inside the cavity of the shell body 30.

In the embodiments, by setting the depth H of the shell body and the inner diameter R1 of the first round corner between the second shell body walls to satisfy that 2.5 mm ≤ R1 ≤ 20 mm and 50 mm ≤ H ≤ 250 mm, the risk of cracking of the shell body due to force bearing during the integral forming process can be minimized without affecting the energy density of the battery cell, thereby reducing the difficulty in forming the shell body.

In some embodiments, the battery cell 20 is substantially in the shape of a rectangular parallelepiped. For example, the battery cell 20 is a rectangular parallelepiped-shaped battery cell. For another example, the battery cell 20 is a track-shaped battery cell, and the thickness of the battery cell 20 is D1, where H, R1, and D1 satisfy that 0.15 mm ≤ R1 × D1/H ≤ 36 mm.

For example, R1 × D1/H is 0.15, 0.5, 1, 5, 10, 15, 17.5, 20, 22.5, 25, 27.5, 30, 32.5, 35, or 36.

In some embodiments, D2 may be the dimension of the battery cell 20 in the expansion direction of the electrode assembly 22.

In the embodiments, by setting 0.15 mm ≤ R1 × D1/H ≤ 36 mm, it can reduce the risk of material accumulation during the forming process of the shell body 30 due to an excessively small value of R1 × D1/H and thus the cracking of the shell body 30 due to excessive force bearing will be avoided, and it can also reduce the impact on the energy density of the battery cell 20 due to an excessively large value of R1 × D1/H.

In the embodiments, D1 satisfies that 15 mm ≤ D1 ≤ 90 mm. For example, D1 is 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, or 90 mm.

In the embodiments, H and R1 satisfy that 50 mm ≤ H ≤ 250 mm and 2.5 mm ≤ R1 ≤ 20 mm.

In some embodiments, H, R1, and D1 satisfy that 0.34 mm ≤ R1 × D1/H ≤ 18 mm.

In the embodiments, by setting 0.34 mm ≤ R1 × D1/H ≤ 18 mm, a balance between the forming difficulty of the shell body 30 and the energy density can be achieved.

For example, R1 × D1/H is 0.34, 0.5, 1, 3, 5, 8, 11, 13, 16, or 18.

Similarly, in the embodiments, D1 satisfies that 15 mm ≤ D1 ≤ 90 mm.

In the embodiments, H and R1 satisfy that 75 mm ≤ H ≤ 180 mm and 4 mm ≤ R1 ≤ 15 mm.

In some embodiments, H, R1, and D1 satisfy that 0.9 mm ≤ R × D/H ≤ 6.6 mm.

For example, R1 × D1/H is 0.9, 1, 1.3, 1.5, 1.8, 2.0, 2.3, 2.6, 2.8, 3.0, 3.3, 3.5, 3.8, 4.0, 4.3, 4.5, 4.7, 4.9, 5.1, 5.4, 5.7, 6.0, 6.2, 6.5, or 6.6.

In the embodiments, D1 satisfies that 25 mm ≤ D1 ≤ 60 mm. For example, D1 is 25 mm, 28 mm, 31 mm, 34 mm, 37 mm, 39 mm, 41 mm, 43 mm, 46 mm, 49 mm, 51 mm, 54 mm, 58 mm, or 50 mm.

Moreover, in the embodiments, H and R1 satisfy that 90 mm ≤ H ≤ 140 mm and 3 mm ≤ R ≤ 10 mm.

It should be noted that the value ranges of R1, H, D1, and R1 × D1/H may be associated with each other. For example, in the case that 15 mm ≤ D1 ≤ 90 mm, 50 mm ≤ H ≤ 250 mm, and 2.5 mm ≤ R1 ≤ 20 mm, 0.15 mm ≤ R1 × D1/H ≤ 36 mm. For another example, in the case that 15 mm ≤ D1 ≤ 90 mm, 75 mm ≤ H ≤ 180 mm, and 4 mm ≤ R1 ≤ 15 mm, 0.34 mm ≤ R × D/H ≤ 18 mm. For another example, in the case that 25 mm ≤ D1 ≤ 60 mm, 90 mm ≤ H ≤ 140 mm, and 3 mm ≤ R1 ≤ 10 mm, 0.9 mm ≤ R1 × D1/H ≤ 6.6 mm.

In some embodiments, the thickness of the electrode assembly 22 is D2, and R1 and D2 satisfy that 0.125 ≤ R1/D2 ≤ 0.45.

For example, R1/D2 is 0.125, 0.15, 0.175, 0.2, 0.225, 0.25, 0.275, 0.3, 0.325, 0.35, 0.375, 0.4, 0.425, or 0.45.

Optionally, D2 may be the dimension of the electrode assembly 22 in the expansion direction.

In the embodiments, by setting 0.125 ≤ R1/D2 ≤ 0.45, in one aspect, it prevents the interference with the electrode assembly 22 or insufficient residual space inside the battery cell 20 due to an excessively large R1, and thus the performance of the battery cell 20 will not be affected; in another aspect, it will not be difficult to form the shell body 30 due to an excessively small R1.

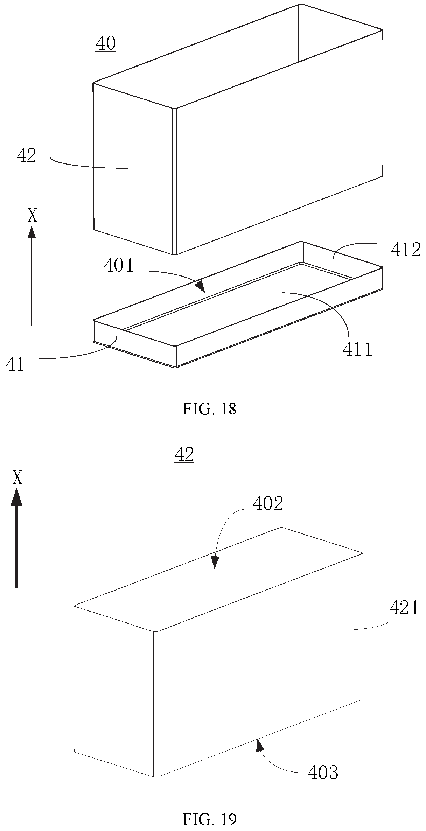

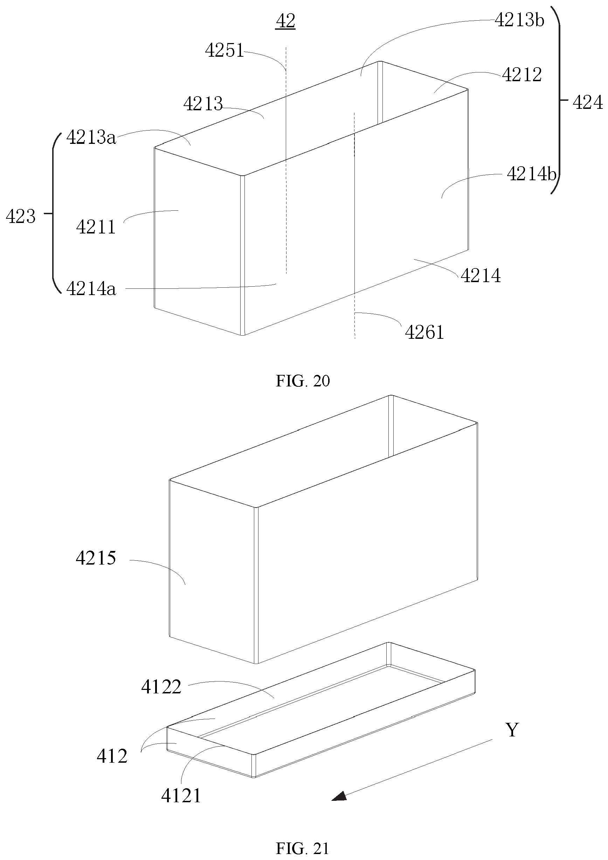

FIG. 18 shows an exploded schematic diagram of the shell body 40 according to an embodiment of the present application. FIG. 19 shows a schematic structural diagram of a second shell body part 42 according to an embodiment of the present application. FIG. 20 shows another schematic structural diagram of the second shell body part 42 according to an embodiment of the present application. FIG. 21 shows another exploded schematic diagram of the shell body 40 according to an embodiment of the present application. It should be noted that the shell body 40 may be applied to the battery cell 20. For example, the shell body 40 shown in FIGs. 18-21 may be applied to the battery cell 20 shown in FIGs. 3 and 4, and the shell body 40 may include only the shell body 211 shown in FIG. 4, or may include both the shell body 211 shown in FIG. 4 and the cover plate 212 shown in FIG. 4. In addition, the shell body 40 may also be placed in a manner as shown in FIG. 3 or 4.

As shown in FIG. 18, the shell body 40 includes: a first shell body part 41 provided with an opening 401, where the first shell body part 41 includes a first wall 411 opposite to the opening 401 and a second wall 412 connected to the first wall 411, and the first wall 411 and the second wall 412 are integrally formed; and a second shell body part 42 fixedly connected to the second wall 412. In the depth direction X of the first shell body part 41, at least a partial region of the shell body 40 is jointly formed by the first shell body part 41 and the second shell body part 42.

It should be explained that the first wall 411 and the second wall 412 in the first shell body part 41 being of an integrally formed structure may mean that the first shell body part 41 is made by using an integral deep drawing forming process. For example, the first shell body part 41 may be manufactured by the following steps: step 1: selecting a steel suitable for deep drawing forming; step 2: preparing a suitable stamping mold according to the design and process requirements of the shell body, where the mold is usually made of mold steel, carbon steel, or hard alloy, and includes components such as a punch, a die, and a blank holder; step 3: fixing the steel between a fixture and the mold to ensure that the steel remains stable during the deep drawing process; step 4: moving the punch downward into the mold to apply a tensile stress to the steel, causing it to deform and fill the shape of the mold; step 5: controlling the speed and pressure of the punch to ensure that the steel deforms uniformly during the deep drawing process and is deep-drawn to a certain depth to obtain the desired shape; step 6: performing auxiliary operations such as perforation, trimming, and marking as needed during the deep drawing forming process; and step 7: after the completion of the deep drawing forming, taking the product out of the mold and performing necessary treatments, such as cleaning and deburring, to obtain the first shell body part 41.

Since the first shell body part 41 is integrally formed through deep drawing, the first shell body part is usually provided with an opening 401. The opening 401 may be circular, polygonal, or track-shaped. The polygon is, for example, a square, a pentagon, a hexagon, or another irregular shape.

The first shell body part 41 is of a hollow structure defined, in an enclosing manner, by the first wall 411 opposite to the opening 401 and the second wall 412. The second wall 412 intersects with the first wall 411. For example, the first wall 411 and the second wall 412 are disposed perpendicularly. In some embodiments, the first shell body part 41 includes one second wall 412. The second wall 412 is connected end to end and defines, in an enclosing manner, a cylindrical hollow structure together with the first wall 411. In some other embodiments, the first shell body part 41 includes four second walls 412. The four second walls 412 are disposed opposite to each other in pairs, and two adjacent second walls 412 perpendicularly intersect with each other. Therefore, the four second walls 412 and the first wall 411 jointly define, in an enclosing manner, a hollow structure in the shape of a square column.

Since the first wall 411 and the opening 401 of the first shell body part 41 are disposed opposite to each other, the depth direction X of the first shell body part 41 may be understood as the direction perpendicular to the first wall 411, and the distance of the first shell body part 41 from the opening 401 to the first wall 411 is the depth of the first shell body part 41.

In the embodiments of the present application, the second shell body part 42 being fixedly connected to the second wall 412 excludes the scenario where the second shell body part 42 is of a flat-plate structure and the second shell body part 42 is fitted in the opening 401 of the first shell body part 41. In other words, in the embodiments of the present application, the second shell body part 42 includes at least one third wall 421. The at least one third wall 421 jointly defines, in an enclosing manner, a hollow structure having at least one opening. For example, the second shell body part 42 includes at least the opening 402 shown in FIG. 19, and the opening 402 of the second shell body part 42 and the opening 401 of the first shell body part 41 are disposed opposite to each other, and the second wall 412 is fixedly connected to the third wall 421, so that the second wall 412 and the third wall 421 jointly form at least a partial region of the shell body 40 in the depth direction X of the first shell body part 41, that is, the depth H of the shell body 40 is at least greater than the depth of the first shell body part 41. The depth H of the shell body 40 may be understood as the dimension of the shell body 40 in the depth direction of the first shell body part 41. Generally, the wall of the shell body 40 has a certain thickness, but the wall thickness of the shell body 40 is negligible here.

In the embodiments, the shell body 40 includes a first shell body part 41 and a second shell body part 42. The first shell body part 41 is provided with an opening 401 and includes a first wall 411 opposite to the opening 401 and a second wall 412 connected to the first wall 411. The first wall 411 and the second wall 412 are integrally formed. In the depth direction X of the first shell body part 41, at least a partial region of the shell body 40 is jointly formed by the first shell body part 41 and the second shell body part 42. Compared with the technical solution in which the shell body 40 is directly integrally formed, manufacturing the shell body 40 in this manner can reduce the risk of cracking of the shell body 40 during the integral deep drawing forming process.

In some embodiments, the dimensions of the second wall 412 are equal in the depth direction X of the first shell body part 41. Similarly, the dimensions of the third wall 421 are equal in the depth direction X of the first shell body part 41. Then, in the depth direction X of the first shell body part 41, all regions of the shell body 40 are jointly formed by the first shell body part 41 and the second shell body part 42.

In some other embodiments, the dimensions of the second wall 412 are not exactly equal in the depth direction X of the first shell body part 41. For example, the unfolded second wall 412 may have a semi-circular or triangular shape. Similarly, the dimensions of the third wall 421 are not exactly equal in the depth direction X of the first shell body part 41. For example, the unfolded third wall 421 may have a semi-circular or triangular shape. Then, in the depth direction X of the first shell body part 41, a partial region of the shell body 40 may be jointly formed by the first shell body part 41 and the second shell body part 42.

In an embodiment, the first shell body part 41 and the second shell body part 42 are fixedly connected through welding. In this way, compared with the shell body formed by splice-welding a flat-plate structure to a tubular structure having an opening, the shell body 40 manufactured according to the embodiments of the present application avoids weld seams at the right-angle edge, so that the shell body 40 is not prone to cracking or damage.

Optionally, the second shell body part 42 is provided with two openings in communication with each other in the depth direction X of the first shell body part 41. For example, the second shell body part 42 includes the opening 402 and the opening 403 as shown in FIG. 19, and the opening 402 and the opening 403 are disposed opposite to each other in the depth direction X of the first shell body part 41.

In this embodiment, by providing the second shell body part 42 with two openings in communication with each other in the depth direction X of the first shell body part 41, the cover plate can be provided independently from the shell body 40, thereby allowing assemblies such as an electrode terminal to be better disposed on the cover plate, and enabling the shell body 40 to be manufactured more simply.

In other embodiments, the second shell body part 42 may be provided with only one opening. For example, the second shell body part 42, like the first shell body part 41, is also manufactured by the integral deep drawing forming process. In addition to the above third wall 421, the second shell body part 42 further includes a wall intersecting with the third wall 421 and opposite to the opening of the second shell body part 42, for example, a cover plate.

In an embodiment, the second shell body part 42 is of an integrally formed structure.

In this embodiment, by providing the second shell body part 42 as an integrally formed structure, the number of weld seams of the shell body 40 can be reduced, so that the reliability of the shell body 40 is improved, thereby reducing the risk of deformation, cracking, or damage of the shell body 40.

In another embodiment, in the case that the second shell body part 42 is provided with only one opening, the second shell body part 42 may be formed by splice-welding at least two parts.

It should be noted that when the second shell body part 42 is formed by splice-welding at least two parts, the weld seam of the second shell body part 42 should not be located at the edges, that is, the so-called right-angle edges. For example, as shown in FIG. 20, the second shell body part 42 includes four third walls 421, namely a fourth wall 4211, a fifth wall 4212, a sixth wall 4213, and a seventh wall 4214. The fourth wall 4211 and the fifth wall 4212 are disposed opposite to each other, and the sixth wall 4213 and the seventh wall 4214 are disposed opposite to each other. The sixth wall 4213 includes a first sub-wall 4213a and a second sub-wall 4213b, and the first sub-wall 4213a and the second sub-wall 4213b are symmetrical with respect to a first center line 4251. The seventh wall 4214 includes a third sub-wall 4214a and a fourth sub-wall 4214b, and the third sub-wall 4214a and the fourth sub-wall 4214b are symmetrical with respect to a second center line 4261. The second shell body part 42 is formed by splice-welding a first part 423 to a second part 424. The first part 423 includes the first sub-wall 4213a, the fourth wall 4211, and the third sub-wall 4214a. The second part 424 includes the second sub-wall 4213b, the fifth wall 4212, and the fourth sub-wall 4214b. The first center line 4251 and the second center line 4261 are where the weld seam of the second shell body part 42 is located.

In this embodiment, configuring the second shell body part 42 to be formed by splice-welding at least two parts facilitates processing, allows easier dimensional control, and improves the assembly precision of the shell body 40.

In some embodiments, a surface 4121 of the second wall 412 facing away from the first wall 411 is welded to the second shell body part 42, and the wall thickness of the shell body 40 should be taken into account here. It can be understood as that the second wall 412 is welded to the third wall 421 and the inner surface of the second wall 412 and the inner surface of the third wall 421 are spliced to form a plane.

In other words, the depth of the shell body 40 is equal to the sum of the depth of the first shell body part 41 and the depth of the second shell body part 42.

In the embodiments, the surface 4121 of the second wall 412 facing away from the first wall 411 is welded to the second shell body part 42, which can improve the space utilization of the shell body 40.

In some other embodiments, the surface of the second wall 412 perpendicular to the thickness direction Y of the second wall 412 is welded to the second shell body part 42. For example, as shown in FIG. 21, an inner surface 4122 of the second wall 412 and the second shell body part 42 are welded to an outer surface 4215 of the third wall 421 of the second shell body part 42 at the opening 401 of the first shell body part 41.

In the embodiments, by welding the surface of the second wall 412 perpendicular to the thickness direction Y of the second wall 412 to the second shell body part 42, the welding area between the first shell body part 41 and the second shell body part 42 can be increased, thereby improving the welding strength therebetween.

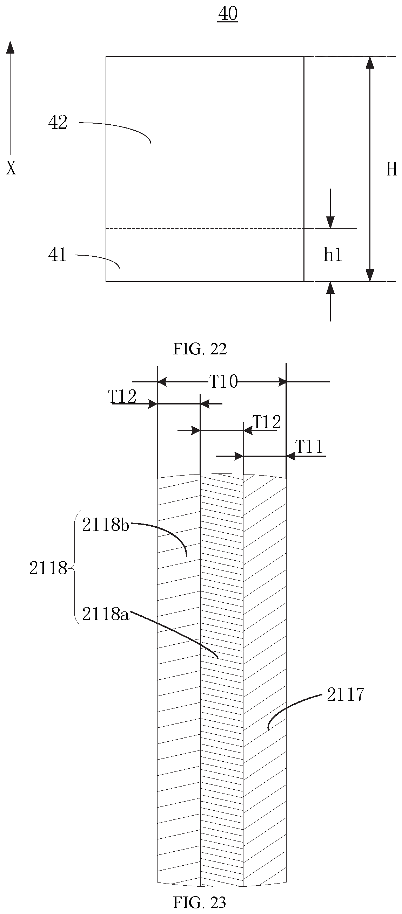

FIG. 22 shows a schematic cross-sectional diagram of the shell body 40 according to an embodiment of the present application. As shown in FIG. 22, in the depth direction X of the first shell body part 41, the maximum dimension of the first shell body part 41 is h1, and the maximum dimension of the shell body 40 is H, where H and h1 satisfy that 3 ≤ H/h1 ≤ 80.

It should be explained that, without considering the wall thickness, the dimension of the first shell body part 41 may be non-uniform in the depth direction X of the first shell body part 41, and the maximum dimension h1 of the first shell body part 41 may refer to the maximum distance between the first wall 411 and an end of the second wall 412 distal to the first wall 411. Similarly, without considering the wall thickness, the dimension of the shell body 40 may also be non-uniform in the depth direction X of the first shell body part 41, and the maximum dimension H of the shell body 40 may refer to the maximum distance between the first wall 411 and an end of the second shell body part 42 distal to the first wall 411.

In some embodiments, in the depth direction X of the first shell body part 41, the dimension of the first shell body part 41 is uniform, and the dimension of the shell body 40 is also uniform.

For example, H/h1 is 3, 5, 10, 15, 20, 25, 30, 35, 40, 45, 50, 55, 60, 65, 70, 75, or 80.

In the embodiments, setting the ratio of H to h1 within the range of [3, 80] avoids the case where the welding position of the first shell body part 41 and the second shell body part 42 is too close to the first shell body part 41 due to an excessively large ratio and thus the weld seam is prone to cracking due to excessive force bearing during the use of the battery cell, and also avoids the case where the shell body 40 cracks under excessive force during deep drawing due to an excessively small ratio and thus the difficulty in manufacturing the first shell body part 41 is increased.

Further optionally, H and h1 satisfy that 5 ≤ H/h1 ≤ 20. For example, H/h1 is 5, 6, 7, 8, 9, 10, 11, 12, 13, 14, 15, 16, 17, 18, 19, or 20.

In some embodiments, h1 satisfies that 3 mm ≤ h1 ≤ 50 mm.

For example, h1 is 3 mm, 5 mm, 10 mm, 15 mm, 20 mm, 25 mm, 30 mm, 35 mm, 40 mm, 45 mm, or 50 mm.

In the embodiments, by setting h1 within the range of [3 mm, 50 mm], it avoids the case where the weld seam is too close to the first shell body part 41 due to excessively small h1 and thus the battery cell is likely to crack during the charging and discharging processes, and also avoids the case where the first shell body part 41 cracks due to excessively large h1 during the integral deep drawing process and thus the difficulty in manufacturing the first shell body part 41 is increased.

Further optionally, h1 satisfies that 5 mm ≤ h1 ≤ 30 mm.

It should be noted that in the case that h1 satisfies the above condition, H can satisfy that H is greater than or equal to 100 mm. For example, H equals to 400 mm.

In some embodiments, the yield strength of the shell body 40 at the temperature of 25 °C is Re, and Re satisfies that 125 MPa ≤ Re ≤ 1000 MPa.

The yield strength may be understood as the critical stress value at which the material yields. Usually, after the material is subjected to stress, as the stress increases, in addition to elastic deformation, plastic deformation may also occur. The point at which the material plastically deforms may be referred to as the yield point, and the strength corresponding to the yield point is referred to as the yield strength. The test method for the yield strength Re of the shell body 40 according to the embodiments of the present application at the temperature of 25 °C may be selected according to practical applications. For example, the yield strength Re can be tested at the room temperature of 25 °C in accordance with GB/T 228.1-2010.

For example, Re is 125 MPa, 130 MPa, 150 MPa, 180 MPa, 200 MPa, 230 MPa, 250 MPa, 280 MPa, 300 MPa, 320 MPa, 350 MPa, 380 MPa, 400 MPa, 430 MPa, 450 MPa, 480 MPa, 500 MPa, 530 MPa, 550 MPa, 570 MPa, 600 MPa, 610 MPa, 640 MPa, 680 MPa, 700 MPa, 720 MPa, 750 MPa, 780 MPa, 800 MPa, 830 MPa, 850 MPa, 880 MPa, 900 MPa, 920 MPa, 950 MPa, 980 MPa, or 1000 MPa.

In the embodiments, by manufacturing the first shell body part with a material having a yield strength Re satisfying that 125 MPa ≤ Re ≤ 1000 MPa, the wall thickness of the first shell body part can be reduced without compromising the strength of the first shell body part, thereby increasing the capacity space of the battery cell.

FIG. 23 shows a schematic diagram of a partial structure of the shell body 211 according to an embodiment of the present application. For example, FIG. 23 may be a partially enlarged diagram of region A' shown in FIG. 9. As shown in FIG. 23, the shell body 211 according to the embodiments of the present application is of a multi-layer structure. The material of the outermost shell body 2117 of the shell body 211 includes at least one of the following: aluminum, aluminum alloy, copper, copper alloy, and chromium.

It should be understood that the shell body 211 according to the embodiments of the present application is of a multi-layer structure. That is, for any one of the walls of the shell body 211, multiple layers are stacked in the thickness direction of the wall, so that the shell body 211 is of the multi-layer structure. In addition, the installation manner between the multiple layers of the multi-layer structure of the shell body 211 may be flexibly selected according to practical applications. For example, multiple single-layer shell body structures that are different in size but basically the same in shape may be first obtained through processing. For example, each single-layer shell body structure is of a hollow structure with an opening. Then, the larger shell body structures among the multiple single-layer shell body structures are sequentially sleeved on the outside of the smaller shell body structures, so that the multiple single-layer shell body structures can be combined into a multi-layer shell body 211. For another example, an approximately plate-shaped structure having a multi-layer structure may be first obtained through processing, and then a plurality of plate-shaped structures are spliced and combined with each other to form the multi-layer shell body 211. However, the embodiments of the present application are not limited thereto.

It should be understood that the outermost shell body 2117 of the shell body 211 according to the embodiments of the present application includes the outermost structure of each wall of the shell body 211. That is, the outermost shell body 2117 is a layer of shell body structure including the outer surface of the shell body 211.

In the embodiments of the present application, the material of the outermost shell body 2117 of the shell body 211 may include at least one of the following: aluminum, aluminum alloy, copper, copper alloy, and chromium. In the case that the material of the outermost shell body 2117 includes aluminum, the aluminum is oxidized into dense aluminum oxide, such that corrosion resistance can be achieved; in the case that the material of the outermost shell body 2117 includes copper, the copper is oxidized into copper oxide, namely verdigris, such that corrosion resistance can be achieved; in the case that the material of the outermost shell body 2117 includes chromium, the chromium is oxidized into chromium oxide, which also offers corrosion resistance. Therefore, when the outermost shell body 2117 is made of the above anti-corrosion materials, the other shell body layers located at the inner side of the outermost shell body can be protected by the outermost shell body 2117, which can improve the structural stability of the shell body 211 and improve the service life of the shell body 211.

It should be understood that the specific thickness of the outermost shell body 2117 according to the embodiments of the present application may also be flexibly set according to practical applications. For example, the thickness of the outermost shell body 2117 may be set proportionally based on the thickness of the shell body 211.

In some embodiments, the average thickness of the outermost shell body 2117 is T11, the average thickness of the shell body 211 is T10, and T11 and T10 satisfy that 0.15 ≤ T11/T10 ≤ 0.5. If the ratio T11/T10 is set too small, since the average thickness T10 of the shell body 211 is limited, the average thickness T11 of the outermost shell body 2117 will be small. In this case, in one aspect, the processing difficulty is increased, and in another aspect, the corrosion resistance effect of the outermost shell body 2117 is reduced, thereby affecting the structural reliability of the shell body 211. Conversely, if the ratio T11/T10 is set too large, the average thickness T11 of the outermost shell body 2117 will be large, while the thickness of the other layers of the shell body 211 other than the outermost shell body 2117 will be small. However, the structural strength of the outermost shell body 2117 may be insufficient, especially after the outermost shell body is oxidized, resulting in poor deformation ability. In the case that the average thickness T11 of the outermost shell body is large, the overall structural strength of the shell body 211 is affected, thereby reducing the stability of the shell body 211.

Further, T11 and T10 satisfy that 0.15 ≤ T11/T10 ≤ 0.4. Appropriately reducing the maximum value of the ratio T11/T10 and increasing the minimum value of the ratio T11/T10 can limit the average thickness T11 of the outermost shell body 2117 to be neither too large nor too small, which can not only improve the corrosion resistance effect, but also improve the structural strength and structural stability of the shell body 211.

Further, T11 and T10 satisfy that 0.2 ≤ T11/T10 ≤ 0.3, thereby further improving the corrosion resistance effect and improving the stability and reliability of the shell body 211.

In some embodiments, the value of the ratio T11/T10 of the average thickness T11 of the outermost shell body 2117 according to the embodiments of the present application to the average thickness T10 of the shell body 211 may also be set to other values. For example, the value of the ratio T11/T10 may be any one of the following values or a value between any two of the following values: 0.15, 0.18, 0.2, 0.23, 0.25, 0.28, 0.3, 0.33, 0.35, 0.38, 0.4, 0.43, 0.45, 0.48, and 0.5.

It should be understood that the value range of the average thickness T10 of the shell body 211 according to the embodiments of the present application may also be flexibly set according to practical applications. For example, the average thickness T10 of the shell body 211 satisfies that 0.05 mm ≤ T10 ≤ 0.5 mm. The value of the average thickness T10 of the shell body 211 should not be too small, so as to reduce the processing difficulty of the multi-layer shell body 211 and improve the structural strength of the shell body 211. For example, the shell body 211 is not prone to cracking, thereby improving the service life of the shell body 211. Conversely, the value of the average thickness T10 of the shell body 211 should not be too large, so that the shell body 211 occupies less space, which improves the space utilization of the battery cell 20, thereby improving the energy density of the battery 10 provided with a plurality of battery cells 20.

Further, the average thickness T10 of the shell body 211 satisfies that 0.075 mm ≤ T10 ≤ 0.4 mm. Appropriately reducing the average thickness T10 of the shell body 211 can reduce the space occupied by the shell body 211 inside the battery 10, thereby improving the energy density of the battery 10; while appropriately increasing the average thickness T10 of the shell body 211 can also reduce the processing difficulty of the shell body 211.

Further, the average thickness T10 of the shell body 211 satisfies that 0.1 mm ≤ T10 ≤ 0.3 mm. The average thickness T10 of the shell body 211 is neither too large nor too small, which can not only improve the structural strength and structural stability of the shell body 211, but also reduce the space occupied by the shell body 211 inside the battery 10, thereby improving the energy density of the battery 10.

In some embodiments, the value of the average thickness T10 of the shell body 211 according to the embodiments of the present application may also be set to other values. For example, the average thickness T10 of the shell body 211 may be any one of the following values or a value between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

It should be understood that the value range of the average thickness T11 of the outermost shell body 2117 according to the embodiments of the present application may also be flexibly set according to practical applications. For example, T11 satisfies that 0.015 mm ≤ T11 ≤ 0.25 mm. The average thickness T11 of the outermost shell body 2117 should not be too small, so as to reduce the processing difficulty and improve the corrosion resistance effect of the outermost shell body 2117, thereby improving the structural reliability of the shell body 211. Conversely, the average thickness T11 of the outermost shell body 2117 should not be too large. Considering that the outermost shell body 2117 has a poor deformation ability after being oxidized, in the case that the average thickness T11 is too large, the deformation ability of the overall structure of the shell body 211 is affected, thereby reducing the reliability and stability of the shell body 211.

Further, the average thickness T11 of the outermost shell body 2117 may further satisfy that 0.05 mm ≤ T11 ≤ 0.2 mm. Appropriately increasing the minimum value of the average thickness T11 of the outermost shell body 2117 can improve the corrosion resistance effect of the outermost shell body 2117; appropriately reducing the maximum value of the average thickness T11 of the outermost shell body 2117 can improve the deformation ability of the overall structure of the shell body 211, thereby improving the reliability and stability of the shell body 211.

Further, the average thickness T11 of the outermost shell body 2117 may further satisfy that 0.075 mm ≤ T11 ≤ 0.15 mm. This can not only improve the corrosion resistance effect of the outermost shell body 2117, but also improve the deformation ability of the overall structure of the shell body 211, thereby improving the reliability and stability of the shell body 211.

In some embodiments, the value of the average thickness T11 of the outermost shell body 2117 according to the embodiments of the present application may also be set to other values. For example, the average thickness T11 of the outermost shell body 2117 may be any one of the following values or a value between any two of the following values: 0.015 mm, 0.02 mm, 0.025 mm, 0.03 mm, 0.035 mm, 0.04 mm, 0.045 mm, 0.05 mm, 0.055 mm, 0.06 mm, 0.065 mm, 0.07 mm, 0.075 mm, 0.08 mm, 0.085 mm, 0.09 mm, 0.095 mm, 0.1 mm, 0.11 mm, 0.12 mm, 0.13 mm, 0.14 mm, 0.15 mm, 0.16 mm, 0.17 mm, 0.18 mm, 0.19 mm, 0.2 mm, 0.21 mm, 0.22 mm, 0.23 mm, 0.24 mm, and 0.25 mm.

It should be understood that the thickness of an inner shell body 2118 of the shell body 211 according to the embodiments of the present application may also be flexibly set according to practical applications. The inner shell body 2118 refers to any layer of the shell body 211 other than the outermost shell body 2117. In addition, the shell body 211 may include one or a plurality of layers of inner shell bodies 2118. In the case that the shell body 211 includes a plurality of layers of inner shell bodies 2118, the thicknesses of the plurality of layers of inner shell bodies 2118 may be the same to facilitate processing, or may be different to flexibly adjust the thicknesses of the inner shell bodies 2118 at different positions according to practical applications. For example, as shown in FIG. 23, taking the shell body 211 being of a three-layer shell body structure as an example here, the three-layer shell body structure includes an outermost shell body 2117 located at the outermost side and two inner shell bodies 2118 located inside. The two inner shell bodies 2118 include an innermost shell body 2118b and a middle shell body 2118a. The average thickness of the innermost shell body 2118b and the average thickness of the middle shell body 2118a may be the same or different. For example, both the average thickness of the innermost shell body 2118b and the average thickness of the middle shell body 2118a may be set to T12, and the value of T12 may be set according to applications. For example, T12 may be greater than, equal to, or less than T11. The embodiments of the present application are not limited thereto.

It should be understood that the average thickness T10 of the shell body 211 according to the embodiments of the present application may be the average thickness of at least a partial region of the shell body 211. The average thickness T11 of the outermost shell body 2117 of the shell body 211 may also be the average thickness of at least a partial region of the outermost shell body 2117. The average thickness T12 of the inner shell body 2118 of the shell body 211 may also be the average thickness of at least a partial region of the inner shell body 2118. In addition, the calculation region of the average thickness T10 of the shell body 211 is usually consistent with the calculation region of the average thickness T11 of the outermost shell body 2117, and is also consistent with the calculation region of the average thickness T12 of the inner shell body 2118. For example, if a partial region is excluded in calculating the average thickness T10 of the shell body 211, the same region needs to be correspondingly excluded in calculating the average thickness T11 of the outermost shell body 2117, and the same region also needs to be excluded in calculating the average thickness T12 of the inner shell body 2118. For convenience of description, the following description is provided by taking an example where the average thickness T10 of the shell body 211 is calculated. However, the related descriptions are also applicable to the determination of the average thickness T11 of the outermost shell body 2117 and the average thickness T12 of the inner shell body 2118, and thus details are not repeated here.

For example, the average thickness T10 of the shell body 211 may be an average thickness T10 of all regions of the shell body 211. Particularly, in the case that the overall surface of the shell body 211 is relatively flat, that is, the thicknesses of most regions of the shell body 211 are substantially equal or slightly different, or in the case that the thicknesses of all regions of the shell body 211 are substantially equal or slightly different, it may be determined that the average thickness of all regions of the shell body 211 is T10.

For another example, the average thickness T10 of the shell body 211 may also be an average thickness T10 of a local region of the shell body 211, that is, an average thickness T10 of a remaining region excluding a partial region of the shell body 211. For example, if a partial special region is present on the shell body 211 and the thickness of the partial special region is greatly different from the thicknesses of other regions, for example, if convex structures or recessed regions are present on the partial special region in the thickness direction and the thickness of the partial special region is greater than or less than the thicknesses of other regions, the partial special region may be excluded in calculating the average thickness of the other regions of the shell body wall 211, which is T10.

In some embodiments, the shell body 211 may include a functional region, and the average thickness T10 of the shell body 211 is the average thickness of the region of the shell body 211 other than the functional region. For example, the functional region includes at least one of the following regions: a pressure relief region, a region where the electrode terminal 214 is located, a liquid injection region, and a welding region. The thickness difference between the functional region and other regions of the shell body 211 is usually large. Therefore, in the case that the functional region is excluded in calculating the average thickness T10 of the shell body 211, the design of the shell body 211 can be made to better meet the strength requirements, so as to improve the structural strength and stability of the battery cell 20.

It should be understood that the functional region according to the embodiments of the present application may include a region on the shell body 211 that is provided with a specific structure or is for specific use, and is applicable to the "functional region" described above. For brevity, details are not repeated here. For example, the functional region may include a pressure relief region, which is configured to be provided with a pressure relief mechanism. The pressure relief mechanism according to the embodiments of the present application may be disposed on any one of the walls of the battery cell 20. For example, the pressure relief mechanism may be disposed at the pressure relief region of the shell body 211 of the battery cell 20. The pressure relief mechanism may be a part of the shell body 211. Alternatively, the pressure relief mechanism may be a split-type structure from the shell body 211 and is fixed on the shell body 211 by means of, for example, welding. For example, when the pressure relief mechanism is a part of the shell body 211, for example, the pressure relief mechanism may be formed by providing a score on the shell body 211, that is, a score is disposed on the shell body 211 at the pressure relief region, and the thickness at the score is significantly less than the thickness of other regions of the shell body 211. Therefore, the thickness at the score is excluded in calculating the average thickness T10 of the shell body 211. The score is where the pressure relief mechanism is weakest. When too much gas generated by the battery cell 20 raises the internal pressure to reach the threshold or heat generated by the internal reaction of the battery cell 20 raises the internal temperature of the battery cell 20 to reach the threshold, the pressure relief mechanism may crack at the score to cause the inside and the outside of the battery elevator 20 to be in communication with each other, and the gas pressure and the temperature are relieved outwards by the cracking of the pressure relief mechanism, thereby preventing the battery cell 20 from exploding.

For another example, the pressure relief mechanism may also be a split-type structure from the shell body 211, and the pressure relief mechanism may take the form of an anti-explosion valve, a gas valve, a pressure relief valve, a safety valve, or the like, and may specifically adopt a pressure-sensitive or temperature-sensitive element or configuration. For example, a through hole is disposed on the shell body 211 at the pressure relief region, and the pressure relief mechanism is mounted and fixed to the shell body 211 through the through hole. The mounted pressure relief mechanism may protrude or recess relative to other regions of the shell body 211. Therefore, the pressure relief region where the pressure relief mechanism is located may be excluded in calculating the average thickness T10 of the shell body 211. When the internal pressure or temperature of the battery cell 20 reaches a preset threshold, the pressure relief mechanism performs an action or a weak structure arranged in the pressure relief mechanism is broken, thereby forming an opening or a channel through which the internal pressure or temperature may be relieved.

In some embodiments, the functional region may further include a region where the electrode terminal 214 is located. Each electrode terminal 214 according to the embodiments of the present application may be disposed on any one of the walls, and a plurality of electrode terminals 214 may be disposed on the same wall or different walls of the battery cell 20. For example, FIGs. 3 and 4 show an example where each battery cell 20 includes two electrode terminals 214 and the two electrode terminals 214 are located on the same wall. For example, the two electrode terminals 214 may both be located on the cover plate 212.

For another example, similarly, an example where each battery cell 20 includes two electrode terminals 214 and the two electrode terminals 214 are located on the same wall is shown. Unlike those shown in FIGs. 3 and 4, the two electrode terminals 214 may also be located on any one of the walls of the shell body 211. For example, the two electrode terminals 214 may both be located on the wall with the smallest area of the shell body 211. When one or a plurality of electrode terminals 214 are located on the shell body 211, each electrode terminal 214 usually protrudes from other regions of the shell body 211, that is, the thickness of the region where the electrode terminal 214 is located is much greater than the thickness of the other regions of the shell body 211. Thus, the regions where all electrode terminals 214 are located may be excluded in calculating the average thickness T10 of the shell body 211.

In some embodiments, the functional region may further include a liquid injection region. For example, a liquid injection hole may be disposed in the liquid injection region of the shell body 211, and an electrolytic solution is injected into the shell body 211 through the liquid injection hole. After the electrolytic solution is injected, the liquid injection hole may be sealed by a sealing member. Considering that the thickness of the liquid injection region where the sealing member is located is usually much greater than the thickness of other regions of the shell body 211, the liquid injection region may be excluded in calculating the average thickness T10 of the shell body 211.

In some embodiments, the functional region may further include a welding region. For example, the shell body 211 and the cover plate 212 may be fixed by welding. Alternatively, the shell body 211 needs to be processed and formed by welding. For example, any two walls of the shell body 211 may be welded together, or the shell body 211 is formed by splicing at least two parts. In this case, the shell body 211 may include a welding region. For example, the shell body 211 may be splice-welded, and in this case the shell body 211 may have a weld seam 2113. Specifically, the shell body 211 may include at least two parts, and the at least two parts are connected by welding to form the shell body 211. According to the embodiments of the present application, taking the shell body 211 including two parts in the height direction Z of the battery cell 20 as an example, there is a weld seam 2113 between the upper half of the shell body and the lower half of the shell body; alternatively, unlike in FIG. 4, other parts of the shell body 211 may also be provided with a weld seam 2113, and the embodiments of the present application are not limited thereto. The welding region of the functional region according to the embodiments of the present application may further include the weld seam 2113. Due to manufacturing processes, the thickness of the welding region is usually greater than the thickness of other regions of the shell body 211. Therefore, the welding region may be excluded in calculating the average thickness T10 of the shell body 211.

It should be understood that, to further improve the structural strength and reliability of the shell body 211, the inner shell body 2118 of the shell body 211 may be tailored according to practical applications. In some embodiments, the tensile strength of the inner shell body 2118 of the shell body 211 at 25 °C is Rml, and Rm1 satisfies that 250 MPa ≤ Rm1 ≤ 2000 MPa. By improving the tensile strength Rm1 of the inner shell body 2118 of the shell body 211 at the room temperature of 25 °C, the overall structural strength and stability of the shell body 211 are enhanced. However, the tensile strength Rm1 of the inner shell body 2118 at room temperature should not be too large, so as to reduce the difficulty in selecting the material for the inner shell body 2118, thereby reducing the processing difficulty and processing costs of the battery cell 20.

It should be understood that the value range of the tensile strength Rm1 of the inner shell body 2118 according to the embodiments of the present application at the room temperature of 25 °C may be adjusted according to practical applications. For example, the value of the tensile strength Rm1 at room temperature may further satisfy that 400 MPa ≤ Rm1 ≤ 1200 MPa. In one aspect, increasing the tensile strength Rm1 of the inner shell body 2118 at room temperature can improve the deformation ability of this inner shell body 2118 to resist the degree of expansion of the electrode assembly 22, making this inner shell body 2118 less prone to damage, thereby improving the structural stability and service life of the shell body 211 and the battery cell 20. In another aspect, controlling the tensile strength Rm1 of the inner shell body 2118 at room temperature not to be too large can reduce the material selection difficulty and processing difficulty of the inner shell body 2118, thereby saving costs and facilitating processing.

Further, the tensile strength Rm1 of the inner shell body 2118 at room temperature may also be set to satisfy that 450 MPa ≤ Rm1 ≤ 800 MPa. By allowing the tensile strength Rm1 of the inner shell body 2118 at room temperature to be neither too large nor too small, the deformation ability of this inner shell body 2118 can be improved to resist the degree of expansion of the electrode assembly 22, and the implementation is facilitated and costs are saved as well.

In some embodiments, the value of the tensile strength Rm1 of the inner shell body 2118 according to the embodiments of the present application at room temperature may also be set to other values. For example, the value of the tensile strength Rm1 at room temperature may be any one of the following values or a value between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength according to the embodiments of the present application refers to the maximum stress value borne by a material before breaking. The test method for the tensile strength Rm1 of the inner shell body 2118 according to the embodiments of the present application at the temperature of 25 °C may be selected according to practical applications. For example, the tensile strength Rm1 can be tested at the room temperature of 25 °C in accordance with GB/T 228.1-2010.

The rectangular parallelepiped-shaped battery cell 20 is mainly described above as an example. Hereinafter, a cylindrical battery cell 20 will be described as an example with reference to the drawings. The descriptions are equally applicable to the cylindrical battery cell 20 according to the embodiments of the present application and the rectangular battery cell 20 described above, except for their difference in shape, and thus details are not repeated here.

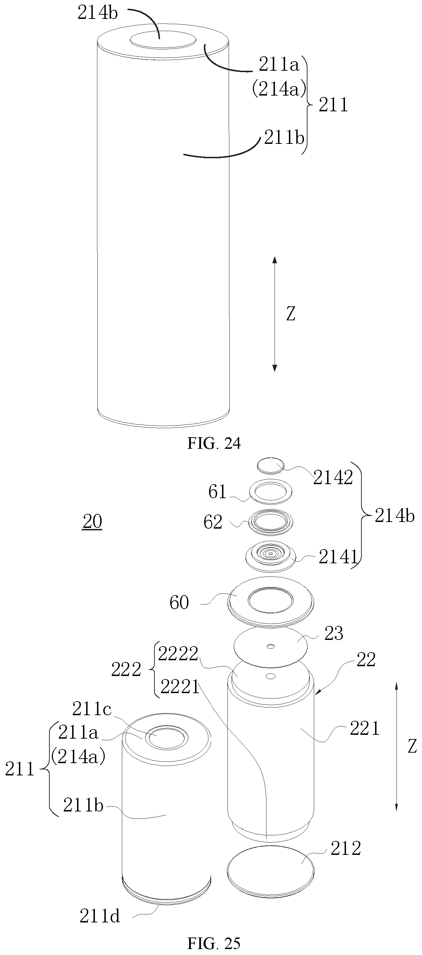

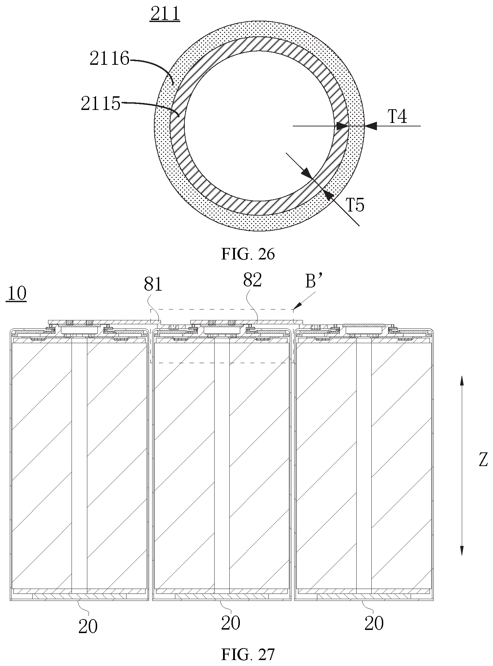

FIG. 24 shows a schematic structural diagram of a battery cell 20 according to one embodiment of the present application. For example, the battery cell 20 shown in FIG. 3 may be any one of the battery cells 20 in the battery 10. FIG. 25 shows a schematic diagram of a partially exploded structure of a battery cell 20 according to one embodiment of the present application. For example, FIG. 25 may be a schematic diagram of a partially exploded structure of the battery cell 20 shown in FIG. 24. FIG. 26 shows a schematic cutaway diagram of a shell body 211 of a battery cell 20 according to one embodiment of the present application. For example, FIG. 26 may be a cutaway diagram of the shell body 211 of the battery cell 20 shown in FIGs. 24 and 25, and the cutting plane is a cross section of the shell body 211.

In the embodiments of the present application, as shown in FIGs. 24-26, the battery cell 20 includes: an electrode assembly 22, where the electrode assembly 22 includes a first tab 2221; a first electrode terminal 214a; and a shell body 211, where the shell body 211 includes a cylindrical body 211b and a cover body 211a connected to the cylindrical body 211b. The cylindrical body 211b is arranged around the outer periphery of the electrode assembly 22. The cover body 211a includes the first electrode terminal 214a. The first tab 2221 is electrically connected to the first electrode terminal 214a through the cylindrical body 211b. The shell body 211 is of a multi-layer structure, and the resistivity of the multi-layer structure varies across the layers.

The shell body 211 may be in various shapes, such as a cylinder, a rectangular parallelepiped, or other polyhedrons. Illustratively, as shown in FIGs. 24-26, the description is provided by taking an example where the shell body 211 is of a hollow cylindrical structure. In addition, in the embodiments of the present application, an example where the shell body 211 is of a hollow structure with one end open is mainly used, and the corresponding cover plate 212 is of a circular plate-shaped structure adapted to the shell body 211. For the cylindrical shell body 211, correspondingly, the cylindrical body 211b is a cylinder, and the cover body 211a is of a circular plate-shaped structure.

The electrode assembly 22 according to the embodiments of the present application may include a first tab 2221. The first tab 2221 may be electrically connected to the first electrode terminal 214a through the cylindrical body 211b of the shell body 211, which can simplify the structure of the battery cell 20. By configuring the shell body 211 as a multi-layer structure and allowing the resistivity of the multi-layer structure to vary across the layers, the current passage capacity of the battery cell 20 can be improved by a layer with lower resistivity, and the structural strength of the shell body 211 can be improved by a layer with higher resistivity. This can not only improve the performance of the battery cell 20, but also improve the structural strength of the battery cell 20, thereby prolonging the service life of the battery cell 20.

In the embodiments of the present application, the electrode assembly 22 further includes a second tab 2222, and the polarity of the second tab 2222 is opposite to that of the first tab 2221. Specifically, in terms of the appearance of the electrode assembly 22, the electrode assembly 22 includes a main body part 221 and tabs 222. The tabs 222 include a first tab 2221 and a second tab 2222. The first tab 2221 and the second tab 2222 protrude from the main body part 221. The first tab 2221 is a part of the first electrode plate that is not coated with the active substance layer, and the second tab 2222 is a part of the second electrode plate that is not coated with the active substance layer. The first tab 2221 and the second tab 2222 are configured to lead out the current in the main body part 221.

The first tab 2221 and the second tab 2222 may extend from the same side of the main body part 221, that is, the first tab 2221 and the second tab are located on the same end surface of the electrode assembly 22. Alternatively, the first tab 2221 and the second tab 2222 may extend from different sides of the main body part 221, that is, the first tab 2221 and the second tab are located on different end surfaces of the electrode assembly 22. For example, the first tab 2221 and the second tab 2222 may also extend from two opposite sides, respectively, that is, the first tab 2221 and the second tab 2222 are located on the opposite end surfaces of the electrode assembly 22, respectively, so as to facilitate processing. As shown in FIGs. 24-26, the first tab 2221 and the second tab 2222 may be disposed on two sides of the main body part 221, respectively, in the first direction Z. In other words, the first tab 2221 and the second tab 2222 are disposed on two ends of the electrode assembly 22, respectively, in the first direction Z. The first direction Z may be the height direction Z of the electrode assembly 22.

It should be understood that the electrode assembly 22 includes a first electrode plate, a second electrode plate, and a separator. The separator is configured to separate the first electrode plate from the second electrode plate. The polarity of the first electrode plate is opposite to that of the second electrode plate. In other words, one of the first electrode plate and the second electrode plate is the positive electrode plate 223, and the other of the first electrode plate and the second electrode plate is the negative electrode plate 224.

The first electrode plate, the second electrode plate, and the separator are all of a strip structure. The first electrode plate, the second electrode plate, and the separator are wound as a whole to form a wound structure. The wound structure may be a cylindrical structure, a flat structure, or a structure of another shape.

Optionally, the first tab 2221 is wound for a plurality of turns around the central axis of the electrode assembly 22, and the first tab 2221 includes a plurality of turns of tab layers. After the winding is completed, the first tab 2221 is substantially cylindrical, and a gap is left between two adjacent turns of tab layers. In the embodiments of the present application, the first tab 2221 may be processed to reduce the gap between the tab layers, thereby facilitating the connection between the first tab 2221 and other conductive structures. For example, in the embodiments of the present application, the first tab 2221 may be subjected to smoothing treatment, so that end part regions of the first tab 2221 distal to the main body part 221 are converged and gathered together. After the smoothing, a dense end surface is formed at an end of the first tab 2221 distal to the main body part 221 to reduce the gap between the tab layers, thereby facilitating the connection between the first tab 2221 and other conductive structures. Alternatively, in the embodiments of the present application, a conductive material may be filled between two adjacent turns of tab layers to reduce the gap between the tab layers.

Optionally, the second tab 2222 is wound for a plurality of turns around the central axis of the electrode assembly 22, and the second tab 2222 includes a plurality of turns of tab layers. Illustratively, the second tab 2222 is also subjected to smoothing treatment to reduce the gap between the tab layers of the second tab 2222.

In the embodiments of the present application, the battery cell 20 further includes a second electrode terminal 214b. The second electrode terminal 214b is electrically connected to the second tab 2222. The first electrode terminal 214a and the second electrode terminal 214b are located on the same wall of the battery cell 20, so as to improve the integration of the battery cell 20, improve the space utilization of the battery cell 20 in the battery 10, and facilitate processing and assembly.

It should be understood that the cover body 211a according to the embodiments of the present application includes the first electrode terminal 214a. For example, the first electrode terminal 214a may be disposed on the cover body 211a, or the cover body 211a may directly serve as the first electrode terminal 214a.

In some embodiments, the cover body 211a is the first electrode terminal 214a, and the cover body 211a is provided with an electrode lead-out hole 211c. The second electrode terminal 214b is insulatedly disposed on the cover body 211a and mounted at the electrode lead-out hole 211c. One of the cover body 211a and the second electrode terminal 214b is a positive output pole of the battery cell, and the other is a negative output pole of the battery cell. At least a part of the shell body 211 itself may serve as an output electrode of the battery cell 20, thereby eliminating the need for a conventional electrode terminal and simplifying the structure of the battery cell 20. When a plurality of battery cells 20 are assembled into a group, the shell body 211 may be electrically connected to the busbar component, which can not only increase the current passage area, but also make the structural design of the busbar component more flexible.

For ease of description, the following is mainly provided by taking the cover body 211a being the first electrode terminal 214a as an example. However, the embodiments of the present application are not limited thereto.

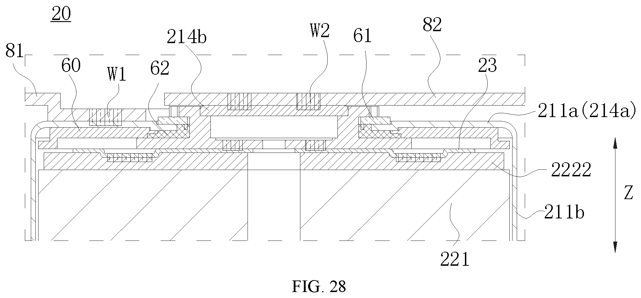

FIG. 27 is a partial schematic cutaway diagram of a battery 10 according to some embodiments of the present application, and the battery 10 may include a plurality of battery cells 20. FIG. 28 is another partial schematic cutaway diagram of a battery 10 according to some embodiments of the present application. For example, FIG. 28 may be an enlarged schematic diagram of the battery 10 shown in FIG. 27 at region B'.

As shown in FIGs. 24-28, the cover body 211a is provided with an electrode lead-out hole 211c. At least a part of the cover body 211a is configured to electrically connect a first connecting member 81 of the battery 10 and the first tab 2221. The second electrode terminal 214b is configured to electrically connect a second connecting member 82 of the battery 10 and the second tab 2222. The second electrode terminal 214b is insulatedly disposed on the cover body 211a and mounted at the electrode lead-out hole 211c. One of the cover body 211a and the second electrode terminal 214b is a positive output pole of the battery cell 20, and the other is a negative output pole of the battery cell 20.

The cover body 211a is electrically connected to the cylindrical body 211b, and the cover body 211a and the cylindrical body 211b may have the same polarity.

It should be understood that the cover body 211a and the cylindrical body 211b according to the embodiments of the present application may be of an integrally formed structure, that is, the shell body 211 is an integrally formed member. Thus, the process of connecting the cover body 211a and the cylindrical body 211b can be omitted. For example, the shell body 211 may be formed by a stretching process. Certainly, the cover body 211a and the cylindrical body 211b may also be two separate members, and then connected together by welding, riveting, bonding, or the like. In the embodiments of the present application, an example where the cover body 211a and the cylindrical body 211b are of an integrally formed structure is mainly used.

The shell body 211 according to the embodiments of the present application may be of a hollow structure with one end open. Specifically, an opening 211d is formed at an end of the cylindrical body 211b facing away from the cover body 211a. The battery cell 20 further includes a cover plate 212. The cover plate 212 lids the opening 211d of the cylindrical body 211b to close the opening 211d of the cylindrical body 211b. The cover plate 212 may be of various structures. For example, the cover plate 212 is of a plate-shaped structure.

In some embodiments, the cover body 211a is provided with an electrode lead-out hole 211c, and the region of the cover body 211a other than the electrode lead-out hole 211c includes a region for welding to the first connecting member 81, that is, the cover body 211a may be welded to the first connecting member 81 to form a first welding part W1. Illustratively, during welding, a laser acts on the surface of the first connecting member 81 facing away from the cover body 211a, and the laser melts and connects a part of the first connecting member 81 and a part of the cover body 211a to form the first welding part W1.

The electrode lead-out hole 211c penetrates through the cover body 211a, so that the electric energy in the electrode assembly 22 is led out to the outside of the shell body 211. Illustratively, the electrode lead-out hole 211c penetrates through the cover body 211a in the first direction Z.

The electrode lead-out hole 211c according to the embodiments of the present application is made after the shell body 211 is formed by stretching. For example, in the embodiments, the electrode lead-out hole 211c for mounting the second electrode terminal 214b is formed in the cover body 211a by using a hole-forming process, so that the positive output pole and the negative output pole are disposed at an end of the battery cell 20 facing away from the opening of the shell body 211. The cover body 211a is formed during the forming process of the shell body 211, and the flatness can still be ensured after the electrode lead-out hole 211c is formed, thereby ensuring the connection strength between the cover body 211a and the first connecting member 81. Meanwhile, the flatness of the cover body 211a is not constrained by its own size, so the cover body 211a may have a large size, thereby improving the current passage capacity of the battery cell 20.

In some embodiments, the cylindrical body 211b has a cylindrical shape, the electrode lead-out hole 211c is a circular hole, and the central axis of the cylindrical body 211b is arranged to be in coincidence with the central axis of the electrode lead-out hole 211c. The "coincidence arrangement" does not require that the central axis of the cylindrical body 211b should absolutely and completely coincide with the central axis of the electrode lead-out hole 211c, and deviations within the allowable process tolerance are acceptable.

The electrode lead-out hole 211c may be configured to define the position of the second electrode terminal 214b. In the embodiments, the central axis of the electrode lead-out hole 211c coincides with the central axis of the cylindrical body 211b, so that at least a part of the second electrode terminal 214b can be located at the center position of the cover body 211a. In this way, when the plurality of battery cells 20 are assembled into a group, the requirement for the positional precision of the second electrode terminal 214b can be reduced, thereby simplifying the assembly process and improving the assembly efficiency.

The central axis of the electrode assembly 22 is a virtual straight line that is parallel to the first direction Z. The central axis of the electrode assembly 22 may pass through the electrode lead-out hole 211c, or may be staggered relative to the electrode lead-out hole 211c. This is not limited in the embodiments of the present application.

The first tab 2221 is electrically connected to the cover body 211a. The first tab 2221 may be directly electrically connected to the cover body 211a, or may be indirectly electrically connected to the cover body 211a through other conductive structures. For example, the first tab 2221 may be electrically connected to the cover body 211a through the cylindrical body 211b.

The second tab 2222 is electrically connected to the second electrode terminal 214b. The second tab 2222 may be directly electrically connected to the second electrode terminal 214b, or may be indirectly electrically connected to the second electrode terminal 214b through other conductive structures. For example, the second tab 2222 may be electrically connected to the second electrode terminal 214b through a current collecting member 23.

The second electrode terminal 214b is insulatedly disposed on the cover body 211a. Therefore, the second electrode terminal 214b and the cover body 211a may have different polarities, and the second electrode terminal 214b and the cover body 211a may serve as different output poles.

The second electrode terminal 214b is fixed to the cover body 211a. The second electrode terminal 214b may be integrally fixed on the outer side of the cover body 211a, or may extend into the shell body 211 through the electrode lead-out hole 211c.

When the first tab 2221 is a negative electrode tab and the second tab 2222 is a positive electrode tab, the cover body 211a serves as the negative output pole of the battery cell 20, and the second electrode terminal 214b serves as the positive output pole of the battery cell 20. When the first tab 2221 is a positive electrode tab and the second tab 2222 is a negative electrode tab, the cover body 211a serves as the positive output pole of the battery cell 20, and the second electrode terminal 214b serves as the negative output pole of the battery cell 20.

In the battery 10, the plurality of battery cells 20 are electrically connected through the busbar component. The busbar component includes a first connecting member 81 and a second connecting member 82. The first connecting member 81 is configured to connect to the cover body 211a of the battery cell 20, while the second connecting member 82 is configured to connect to the second electrode terminal 214b of the battery cell 20.

The first connecting member 81 may be connected to the cover body 211a by welding, bonding, or the like to achieve the electrical connection between the first connecting member 81 and the cover body 211a. The second connecting member 82 may be connected to the second electrode terminal 214b by welding, bonding, riveting, or the like to achieve the electrical connection between the second connecting member 82 and the second electrode terminal 214b.

Illustratively, the first connecting member 81 connects the cover body 211a of one battery cell 20 to the second electrode terminal 214b of another battery cell 20, while the second connecting member 82 connects the second electrode terminal 214b of the one battery cell 20 to the cover body 211a of yet another battery cell 20. In this way, the first connecting member 81 and the second connecting member 82 connect three battery cells 20 in series.

In the embodiments, by using the cover body 211a and the second electrode terminal 214b as the output poles, the structure of the battery cell 20 can be simplified, and the current passage capacity of the battery cell 20 can be ensured. The cover body 211a and the second electrode terminal 214b are located at the same end of the battery cell 20, so that the first connecting member 81 and the second connecting member 82 can be assembled on the same side of the battery cell 20, which can simplify the assembly process and improve the efficiency in assembling a plurality of battery cells 20 into a group.

It should be understood that, as shown in FIGs. 24-28, the second electrode terminal 214b according to the embodiments of the present application includes a terminal body 2141. Further, the terminal body 2141 may be fixed to the cover body 211a by riveting. For example, at least a part of the terminal body 2141 is located in the electrode lead-out hole 211c, and both ends of the terminal body 2141 are riveted to the electrode lead-out hole 211c.

In some embodiments, the terminal body 2141 may be provided with a recess that is recessed from the outer surface of the terminal body 2141 in a direction facing the electrode assembly 22. The bottom of the recess is used for welding to the current collecting member 23.

After the electrode assembly 22 and the current collecting member 23 are mounted into the shell body 211 through the opening 211d of the cylindrical body 211b and the current collecting member 23 is pressed against the cover body 211a, the external welding device can weld the bottom of the recess to the current collecting member 23 from a side of the bottom of the recess facing away from the current collecting member 23.

In the embodiments, by providing the recess, the thickness of the terminal body 2141 is reduced, thereby reducing the welding power required to weld the bottom of the recess to the current collecting member 23, reducing heat generation, and reducing the risk of burning other members (for example, a first insulating member 61 and a second insulating member 60).

In some embodiments, the second electrode terminal 214b further includes a sealing plate 2142. The sealing plate 2142 is configured to close the opening of the recess. The sealing plate 2142 may be entirely located outside the recess, or may be partially accommodated inside the recess, as long as the sealing plate 2142 can close the opening of the recess. The sealing plate 2142 can protect the recess from the outside, thereby reducing the entry of external impurities into the recess, reducing the risk of damage to the bottom of the recess by external impurities, and improving the sealing performance of the battery cell 20.

In some embodiments, the sealing plate 2142 is configured to be welded to the second connecting member 82 to form a second welding part W2. The second welding part W2 can reduce the contact resistance between the sealing plate 2142 and the second connecting member 82, thereby improving the current passage capacity.

In some embodiments, at least a part of the sealing plate 2142 protrudes from the outer surface of the terminal body 2141. When the second connecting member 82 needs to be welded to the sealing plate 2142, the second connecting member 82 is first attached to the upper surface of the sealing plate 2142 (i.e., the surface of the sealing plate 2142 facing away from the recess), and then the second connecting member 82 is welded to the sealing plate 2142. At least a part of the sealing plate 2142 protrudes from the outer surface of the terminal body 2141 to prevent the outer surface of the terminal body 2141 from interfering with the attachment of the sealing plate 2142 and the second connecting member 82, thereby ensuring that the second connecting member 82 and the sealing plate 2142 are tightly attached.

In the embodiments of the present application, the battery cell 20 further includes a first insulating member 61. The first insulating member 61 is configured to insulate and separate at least a part of the second electrode terminal 214b from the cover body 211a. Illustratively, at least a part of the first insulating member 61 is sandwiched between the cover body 211a and the second electrode terminal 214b to insulate and separate the cover body 211a from the second electrode terminal 214b, thereby reducing the risk of short circuits.

In the embodiments of the present application, the battery cell 20 further includes a second insulating member 60. The second insulating member 60 is located between the cover body 211a and the electrode assembly 22. Specifically, the second insulating member 60 can separate the electrode assembly 22 from the cover body 211a, thereby reducing the risk of contact and electrical conduction between the electrode assembly 22 and the cover body 211a during the vibration of the battery cell 20, and improving the safety performance.

In some embodiments, at least one of the first insulating member 61 and the second insulating member 60 may be configured to seal the electrode lead-out hole 211c. In some other embodiments, the battery cell 20 further includes a seal ring 62. The seal ring 62 is sleeved on the second electrode terminal 214b and is configured to seal the electrode lead-out hole 211c. Optionally, a part of the seal ring 62 extends into the electrode lead-out hole 211c to separate the hole wall of the electrode lead-out hole 211c from the second electrode terminal 214b.

In some embodiments, the second tab 2222 is disposed at an end of the electrode assembly 22 facing the cover body 211a, and the first tab 2221 is disposed at the other end of the electrode assembly 22 facing away from the cover body 211a. The cylindrical body 211b is configured to connect the first tab 2221 and the cover body 211a, so that the first tab 2221 is electrically connected to the cover body 211a.

The cylindrical body 211b may be directly electrically connected to the first tab 2221, or may be electrically connected to the first tab 2221 through other members. For example, the first tab 2221 is electrically connected to the cylindrical body 211b through the cover plate 212.

In the embodiments of the present application, by disposing the first tab 2221 and the second tab 2222 at two ends of the electrode assembly 22, respectively, the risk of electrical connection between the first tab 2221 and the second tab 2222 can be reduced, and the current passage area of the first tab 2221 and the current passage area of the second tab 2222 can be increased.

In some embodiments, the first tab 2221 is a negative electrode tab, and the substrate material of the shell body 211 is steel. The shell body 211 is electrically connected to the negative electrode tab, that is, the shell body 211 is at a low potential state. The shell body 211 made of steel is less prone to corrosion by the electrolytic solution at the low potential state, thereby reducing the safety risk.

In some embodiments, the battery cell 20 further includes a current collecting member 23 for connecting the second tab 2222 and the second electrode terminal 214b. The current collecting member 23 may be connected to the second tab 2222 by welding, abutting, bonding, or the like, and connected to the second electrode terminal 214b by welding, abutting, bonding, riveting, or the like, thereby achieving the electrical connection between the second tab 2222 and the second electrode terminal 214b.

In the first direction Z, the second electrode terminal 214b and the middle region of the second tab 2222 are disposed opposite to each other. If the second electrode terminal 214b is directly connected to the second tab 2222, it will lead to a long conductive path between the edge region of the second tab 2222 and the second electrode terminal 214b, resulting in non-uniform current density of the second electrode plate of the electrode assembly 22, which increases the internal resistance and affects the current passage capacity and charging efficiency of the battery cell 20.

According to the embodiments of the present application, there may be a large connection area between the current collecting member 23 and the second tab 2222, and the current of the second tab 2222 can be collected by the current collecting member 23 and transmitted to the second electrode terminal 214b. In this way, the current collecting member 23 can reduce the difference in the conductive path between different regions of the second tab 2222 and the second electrode terminal 214b, improve the uniformity of the current density of the second electrode plate, reduce the internal resistance, and improve the current passage capacity and charging efficiency of the battery cell 20.

It should be understood that the shell body 211 according to the embodiments of the present application is of a multi-layer structure, that is, both the cylindrical body 211b and the cover body 211a of the shell body 211 are of a multi-layer structure. For ease of description, the shell body 211 mentioned below includes both the cylindrical body 211b and the cover body 211a.

In the embodiments of the present application, the shell body 211 includes a first shell body layer 2115. The resistivity of the first shell body layer 2115 is K1, and K1 satisfies that 1 × 10^-8 Ω·m ≤ K1 ≤ 6 × 10^-8 Ω·m. The first shell body layer 2115 is any layer of the multi-layer shell body 211. For example, in FIG. 26, an example where the innermost shell body is the first shell body layer 2115 is used. However, the embodiments of the present application are not limited thereto. By setting the resistivity K1 of the first shell body layer 2115 included in the shell body 211 to be small, the current passage capacity of the shell body 211 can be improved, thereby improving the performance of the battery cell 20.

In some embodiments, the resistivity K1 of the first shell body layer 2115 may further satisfy that 1 × 10^-8 Ω·m ≤ K1 ≤ 2.8 × 10^-8 Ω·m. This can improve the current passage capacity and performance of the shell body 211, and the implementation is facilitated. In some embodiments, the value of the resistivity K1 of the first shell body layer 2115 may also be set to other values. For example, the value of the resistivity K1 of the first shell body layer 2115 may be any one of the following values or a value between any two of the following values: 1 × 10^-8 Ω·m, 1.3 × 10^-8 Ω·m, 1.5 × 10^-8 Ω·m, 1.8 × 10^-8 Ω·m, 2 × 10^-8 Ω·m, 2.3 × 10^-8 Ω·m, 2.5 × 10^-8 Ω·m, 2.8 × 10^-8 Ω·m, 3 × 10^-8 Ω·m, 3.3 × 10^-8 Ω·m, 3.5 × 10^-8 Ω·m, 3.8 × 10^-8 Ω·m, 4 × 10^-8 Ω·m, 4.3 × 10^-8 Ω·m, 4.5 × 10^-8 Ω·m, 4.8 × 10^-8 Ω·m, 5 × 10^-8 Ω·m, 5.3 × 10^-8 Ω·m, 5.5 × 10^-8 Ω·m, 5.8, and 6 × 10^-8 Ω·m.

It should be understood that the specific thickness of the first shell body layer 2115 according to the embodiments of the present application may also be flexibly set according to practical applications. For example, the thickness of the first shell body layer 2115 may be set proportionally based on the thickness of the shell body 211.

In some embodiments, the average thickness of the first shell body layer 2115 is T13, the average thickness of the shell body 211 is T10, and T13 and T10 satisfy that 0.15 ≤ T13/T10 ≤ 0.85. If T13/T10 is set too small, in the case that the average thickness T10 of the shell body 211 is fixed, T13 will be too small, thereby increasing the processing difficulty and causing excessive current-induced heat, which may easily lead to thermal runaway. Conversely, if T13/T10 is set too large, in the case that the average thickness T10 of the shell body 211 is fixed, T13 will be too large, and the thickness of other structural layers will be too small, which will affect the structural strength of the shell body 211.

Further, T13 and T10 satisfy that 0.2 ≤ T13/T10 ≤ 0.6. This can improve the current passage capacity of the shell body 211 and improve the structural strength of the shell body 211 as well. In some embodiments, the value of the ratio T13/T10 may also be set to other values. For example, the value of the ratio T13/T10 may be any one of the following values or a value between any two of the following values: 0.15, 0.2, 0.25, 0.3, 0.35, 0.4, 0.45, 0.5, 0.55, 0.6, 0.65, 0.7, 0.75, 0.8, and 0.85.

It should be understood that the value range of the average thickness T10 of the shell body 211 according to the embodiments of the present application may also be flexibly set according to practical applications. For example, the average thickness T10 of the shell body 211 satisfies that 0.05 mm ≤ T10 ≤ 0.5 mm. The value of the average thickness T10 of the shell body 211 should not be too small, so as to reduce the processing difficulty of the multi-layer shell body 211 and improve the structural strength of the shell body 211. For example, the shell body 211 is not prone to cracking, thereby improving the service life of the shell body 211. Conversely, the value of the average thickness T10 of the shell body 211 should not be too large, so that the shell body 211 occupies less space, which improves the space utilization of the battery cell 20, thereby improving the energy density of the battery 10 provided with a plurality of battery cells 20.

Further, the average thickness T10 of the shell body 211 satisfies that 0.075 mm ≤ T10 ≤ 0.4 mm. Appropriately reducing the average thickness T10 of the shell body 211 can reduce the space occupied by the shell body 211 inside the battery 10, thereby improving the energy density of the battery 10; while appropriately increasing the average thickness T10 of the shell body 211 can also reduce the processing difficulty of the shell body 211.

Further, the average thickness T10 of the shell body 211 satisfies that 0.1 mm ≤ T10 ≤ 0.3 mm. The average thickness T10 of the shell body 211 is neither too large nor too small, which can not only improve the structural strength and structural stability of the shell body 211, but also reduce the space occupied by the shell body 211 inside the battery 10, thereby improving the energy density of the battery 10.

In some embodiments, the value of the average thickness T10 of the shell body 211 according to the embodiments of the present application may also be set to other values. For example, the average thickness T10 of the shell body 211 may be any one of the following values or a value between any two of the following values: 0.05 mm, 0.075 mm, 0.1 mm, 0.125 mm, 0.15 mm, 0.175 mm, 0.2 mm, 0.225 mm, 0.25 mm, 0.275 mm, 0.3 mm, 0.325 mm, 0.35 mm, 0.375 mm, 0.4 mm, 0.425 mm, 0.45 mm, 0.475 mm, and 0.5 mm.

In the embodiments of the present application, the material of the first shell body layer 2115 may be flexibly selected according to practical applications. For example, the material of the first shell body layer 2115 includes at least one of the following: silver, copper, aluminum, magnesium, and brass, so as to meet the design requirements for the resistivity K1 of the first shell body layer 2115.

In the embodiments of the present application, the shell body 211 includes a second shell body layer 2116. The tensile strength of the second shell body layer 2116 at the temperature of 25 °C is Rm2, and Rm2 satisfies that 250 MPa ≤ Rm2 ≤ 2000 MPa. The second shell body layer 2116 is any layer of the multi-layer shell body 211. For example, in FIG. 26, an example where the outermost shell body is the second shell body layer 2116 is used. However, the embodiments of the present application are not limited thereto. By setting the tensile strength Rm2 of the second shell body layer 2116 included in the shell body 211 at the temperature of 25 °C to be large, the structural strength and deformation ability of the shell body 211 can be improved, so that the shell body 211 is less prone to damage during the use of the battery cell 20, thereby improving the structural stability and service life of the battery cell 20. However, the tensile strength Rm2 of the second shell body layer 2116 at the room temperature of 25 °C should not be too large, so as to reduce the difficulty in selecting and processing the material of the shell body 211, thereby saving costs and facilitating processing.

It should be understood that the value range of the tensile strength Rm2 of the second shell body layer 2116 of the shell body 211 according to the embodiments of the present application at the room temperature of 25 °C may be adjusted according to practical applications. For example, the value of the tensile strength Rm2 at room temperature may further satisfy that 400 MPa ≤ Rm2 ≤ 1200 MPa. In one aspect, increasing the tensile strength Rm2 of the second shell body layer 2116 at room temperature can improve the deformation ability of this second shell body layer 2116 to resist the degree of expansion of the electrode assembly 22, making the second shell body layer 2116 less prone to damage, thereby improving the structural stability and service life of the battery cell 20. In another aspect, controlling the tensile strength Rm2 of the second shell body layer 2116 at room temperature not to be too large can reduce the difficulty in selecting and processing the material of the second shell body layer 2116, thereby saving costs and facilitating processing.

Further, the tensile strength Rm2 of the second shell body layer 2116 at room temperature may also be set to satisfy that 450 MPa ≤ Rm2 ≤ 800 MPa. By allowing the tensile strength Rm2 of the second shell body layer 2116 at room temperature to be neither too large nor too small, the deformation ability of this part of the shell body 211 can be improved to resist the degree of expansion of the electrode assembly 22, and the implementation is facilitated and costs are saved as well.

In some embodiments, the value of the tensile strength Rm2 of the second shell body layer 2116 of the shell body 211 according to the embodiments of the present application at room temperature may also be set to other values. For example, the value of the tensile strength Rm2 at room temperature may be any one of the following values or a value between any two of the following values: 250 MPa, 280 MPa, 300 MPa, 330 MPa, 350 MPa, 380 MPa, 400 MPa, 450 MPa, 500 MPa, 550 MPa, 600 MPa, 650 MPa, 700 MPa, 750 MPa, 800 MPa, 850 MPa, 900 MPa, 950 MPa, 1000 MPa, 1050 MPa, 1100 MPa, 1150 MPa, 1200 MPa, 1250 MPa, 1300 MPa, 1350 MPa, 1400 MPa, 1450 MPa, 1500 MPa, 1550 MPa, 1600 MPa, 1650 MPa, 1700 MPa, 1750 MPa, 1800 MPa, 1850 MPa, 1900 MPa, 1950 MPa, and 2000 MPa.

It should be understood that the tensile strength according to the embodiments of the present application refers to the maximum stress value borne by a material before breaking. The test method for the tensile strength Rm2 of the second shell body layer 2116 of the shell body 211 according to the embodiments of the present application at the temperature of 25 °C may be selected according to practical applications. For example, the tensile strength Rm2 can be tested at the room temperature of 25 °C in accordance with GB/T 228.1-2010.

In the embodiments of the present application, the average thickness of the second shell body layer 2116 is T14, the average thickness of the shell body 211 is T10, and T14 and T10 satisfy that 0.15 ≤ T14/T10 ≤ 0.85. If T14/T10 is set too small, in the case that the average thickness T10 of the shell body 211 is fixed, T14 will be too small, which will affect the structural strength of the shell body 211. Conversely, if T14/T10 is set too large, in the case that the average thickness T10 of the shell body 211 is fixed, T14 will be too large, and the thickness of other structural layers will be too small. For example, the thickness T13 of the first shell body layer 2115 will be too small, thereby increasing the processing difficulty and causing excessive current-induced heat, which may easily lead to thermal runaway.

Further, T14 and T10 satisfy that 0.2 ≤ T14/T10 ≤ 0.6. This can improve the current passage capacity of the shell body 211 and improve the structural strength of the shell body 211 as well. In some embodiments, the value of the ratio T14/T10 may also be set to other values. For example, the value of the ratio T14/T10 may be any one of the following values or a value between any two of the following values: 0.15, 0.2, 0.25, 0.3, 0.35, 0.4, 0.45, 0.5, 0.55, 0.6, 0.65, 0.7, 0.75, 0.8, and 0.85.

In addition, the average thickness T14 of the second shell body layer 2116 and the average thickness T13 of the first shell body layer 2115 according to the embodiments of the present application may be the same or different, so as to meet different design requirements.

It should be understood that the average thickness T10 of the shell body 211 according to the embodiments of the present application may be the average thickness of at least a partial region of the shell body 211. The average thickness T13 of the first shell body layer 2115 of the shell body 211 may also be the average thickness of at least a partial region of the first shell body layer 2115. The average thickness T14 of the second shell body layer 2116 of the shell body 211 may also be the average thickness of at least a partial region of the second shell body layer 2116. In addition, the calculation region of the average thickness T10 of the shell body 211 is usually consistent with the calculation region of the average thickness T13 of the first shell body layer 2115, and is also consistent with the calculation region of the average thickness T14 of the second shell body layer 2116. For example, if a partial region is excluded in calculating the average thickness T10 of the shell body 211, the same region needs to be correspondingly excluded in calculating the average thickness T13 of the first shell body layer 2115, and the same region also needs to be excluded in calculating the average thickness T14 of the second shell body layer 2116. For convenience of description, the following description is provided by taking an example where the average thickness T10 of the shell body 211 is calculated. However, the related descriptions are also applicable to the determination of the average thickness T13 of the first shell body layer 2115 and the average thickness T14 of the second shell body layer 2116, and thus details are not repeated here.

For example, the average thickness T10 of the shell body 211 may be an average thickness T10 of all regions of the shell body 211. Particularly, in the case that the overall surface of the shell body 211 is relatively flat, that is, the thicknesses of most regions of the shell body 211 are substantially equal or slightly different, or in the case that the thicknesses of all regions of the shell body 211 are substantially equal or slightly different, it may be determined that the average thickness of all regions of the shell body 211 is T10.

For another example, the average thickness T10 of the shell body 211 may also be an average thickness T10 of a local region of the shell body 211, that is, an average thickness T10 of a remaining region excluding a partial region of the shell body 211. For example, if a partial special region is present on the shell body 211 and the thickness of the partial special region is greatly different from the thicknesses of other regions, for example, if convex structures or recessed regions are present on the partial special region in the thickness direction and the thickness of the partial special region is greater than or less than the thicknesses of other regions, the partial special region may be excluded in calculating the average thickness of the other regions of the shell body wall 211, which is T10.

In some embodiments, the shell body 211 may include a functional region, and the average thickness T10 of the shell body 211 is the average thickness of the region of the shell body 211 other than the functional region. For example, the functional region includes at least one of the following regions: a pressure relief region, a region where the electrode terminal 214 is located, a liquid injection region, and a welding region. The thickness difference between the functional region and other regions of the shell body 211 is usually large. Therefore, in the case that the functional region is excluded in calculating the average thickness T10 of the shell body 211, the design of the shell body 211 can be made to better meet the strength requirements, so as to improve the structural strength and stability of the battery cell 20.

Specifically, the functional region according to the embodiments of the present application may include a region on the shell body 211 that is provided with a specific structure or is for specific use. For example, the functional region may include a pressure relief region for providing a pressure relief mechanism. The pressure relief mechanism is an element or component configured to be actuated to relieve internal pressure or temperature when the internal pressure or temperature of the battery cell 20 reaches a preset threshold. The preset threshold may be adjusted according to different design requirements. For example, the preset threshold may depend on the material of one or more of the positive electrode plate, the negative electrode plate, the electrolytic solution, and the separation film in the battery cell 20.

The term "actuate" as used herein means that the pressure relief mechanism generates an action or is activated to a certain state to allow the relief of the internal pressure and temperature of the battery cell 20. The actions generated by the pressure relief mechanism may include, but are not limited to: cracking, fracture, tearing, or opening of at least a part of the pressure relief mechanism. When the pressure relief mechanism is actuated, high-temperature and high-pressure substances inside the battery cell 20 are discharged outwards from the actuated part as emissions. In this way, the battery cell 20 can undergo pressure relief and temperature relief under the condition of controllable pressure or temperature, thereby preventing potentially more severe accidents.

The emissions from the battery cell 20 referred to in the present application include, but are not limited to: electrolytic solution, dissolved or split positive and negative electrode plates, fragments of a separation film, high-temperature and high-pressure gas generated by reaction, flame, and the like.

The pressure relief mechanism according to the embodiments of the present application may be disposed on any one of the walls of the battery cell 20. For example, the pressure relief mechanism may be disposed at the pressure relief region of the shell body 211 of the battery cell 20. The pressure relief mechanism may be a part of the shell body 211. Alternatively, the pressure relief mechanism may be a split-type structure from the shell body 211 and is fixed on the shell body 211 by means of, for example, welding. For example, when the pressure relief mechanism is a part of the shell body 211, for example, the pressure relief mechanism may be formed by providing a score on the shell body 211, that is, a score is disposed on the shell body 211 at the pressure relief region, and the thickness at the score is significantly less than the thickness of other regions of the shell body 211. Therefore, the thickness at the score is excluded in calculating the average thickness T10 of the shell body 211. The score is where the pressure relief mechanism is weakest. When too much gas generated by the battery cell 20 raises the internal pressure to reach the threshold or heat generated by the internal reaction of the battery cell 20 raises the internal temperature of the battery cell 20 to reach the threshold, the pressure relief mechanism may crack at the score to cause the inside and the outside of the battery elevator 20 to be in communication with each other, and the gas pressure and the temperature are relieved outwards by the cracking of the pressure relief mechanism, thereby preventing the battery cell 20 from exploding.

For another example, the pressure relief mechanism may also be a split-type structure from the shell body 211, and the pressure relief mechanism may take the form of an anti-explosion valve, a gas valve, a pressure relief valve, a safety valve, or the like, and may specifically adopt a pressure-sensitive or temperature-sensitive element or configuration. For example, a through hole is disposed on the shell body 211 at the pressure relief region, and the pressure relief mechanism is mounted and fixed to the shell body 211 through the through hole. The mounted pressure relief mechanism may protrude or recess relative to other regions of the shell body 211. Therefore, the pressure relief region where the pressure relief mechanism is located may be excluded in calculating the average thickness T10 of the shell body 211. When the internal pressure or temperature of the battery cell 20 reaches a preset threshold, the pressure relief mechanism performs an action or a weak structure arranged in the pressure relief mechanism is broken, thereby forming an opening or a channel through which the internal pressure or temperature may be relieved.

In some embodiments, the functional region may further include a region where the electrode terminal 214 is located. Specifically, the electrode terminal 214 according to the embodiments of the present application is configured to be electrically connected to the electrode assembly 22 inside the battery cell 20 to output the electric energy of the battery cell 20. In addition, the battery cell 20 may include at least two electrode terminals 214, and the at least two electrode terminals 214 include at least one positive electrode terminal and at least one negative electrode terminal. The positive electrode terminal is configured to be electrically connected to the positive electrode tab of the electrode assembly 22, and the negative electrode terminal is configured to be electrically connected to the negative electrode tab of the electrode assembly 22. The positive electrode terminal and the positive electrode tab may be directly connected or indirectly connected, and the negative electrode terminal and the negative electrode tab may be directly connected or indirectly connected. Illustratively, in the embodiments of the present application, the positive electrode terminal may be the first electrode terminal 214a, and the negative electrode terminal is the second electrode terminal 214b; alternatively, the positive electrode terminal may be the second electrode terminal 214b, and the negative electrode terminal is the first electrode terminal 214a.

It should be understood that each electrode terminal 214 according to the embodiments of the present application may be disposed on any one wall, and a plurality of electrode terminals 214 may be disposed on the same wall or different walls of the battery cell 20. For example, FIGs. 24-28 show an example where each battery cell 20 includes two electrode terminals 214 and the two electrode terminals 214 are located on the same wall. For example, the two electrode terminals 214 may both be located on the cover body 211a. However, in the embodiments of the present application, the cover body 211a is the first electrode terminal 214a, so one electrode terminal 214 among the two electrode terminals 214 included in the battery cell 20 protrudes from other regions of the cover body 211a of the shell body 211, that is, the thickness of the region where the second electrode terminal 214b is located is much greater than the thickness of other regions of the shell body 211. Thus, the region where the second electrode terminal 214b is located may be excluded in calculating the average thickness T10 of the shell body 211.

In some embodiments, the functional region may further include a liquid injection region. For example, a liquid injection hole may be disposed in the liquid injection region of the shell body 211, and an electrolytic solution is injected into the shell body 211 through the liquid injection hole. After the electrolytic solution is injected, the liquid injection hole may be sealed by a sealing member. Considering that the thickness of the liquid injection region where the sealing member is located is usually much greater than the thickness of other regions of the shell body 211, the liquid injection region may be excluded in calculating the average thickness T10 of the shell body 211.

In some embodiments, the functional region may further include a welding region. For example, the shell body 211 and the cover plate 212 may be fixed by welding. Alternatively, the shell body 211 needs to be processed and formed by welding. For example, any two walls of the shell body 211 may be welded together, or the shell body 211 is formed by splicing at least two parts. In this case, the shell body 211 may include a welding region. For example, the shell body 211 may be splice-welded, and in this case the shell body 211 may have a weld seam 2113. Specifically, the shell body 211 may include at least two parts, and the at least two parts are connected by welding to form the shell body 211. According to the embodiments of the present application, taking the shell body 211 including two parts in the height direction Z of the battery cell 20 as an example, there is a weld seam 2113 between the upper half of the shell body and the lower half of the shell body; alternatively, unlike in FIG. 25, other parts of the shell body 211 may also be provided with a weld seam 2113, and the embodiments of the present application are not limited thereto. The welding region of the functional region according to the embodiments of the present application may further include the weld seam 2113. Due to manufacturing processes, the thickness of the welding region is usually greater than the thickness of other regions of the shell body 211. Therefore, the welding region may be excluded in calculating the average thickness T10 of the shell body 211.

In some embodiments, the resistivity of the second shell body layer 2116 is K2, and K2 and K1 satisfy that 2 ≤ K2/K1 ≤ 40. Further, 2 ≤ K2/K1 ≤ 20 may be further satisfied to limit the resistivity K1 of the first shell body layer 2115, thereby improving the current passage capacity of the shell body 211.

In the embodiments of the present application, the material of the second shell body layer 2116 may be flexibly selected according to practical applications. For example, the material of the second shell body layer 2116 includes at least one of the following: titanium, steel, silicon steel, and stainless steel, so as to meet the design requirements of the second shell body layer 2116.

In some embodiments, the materials of the first shell body layer 2115 and the second shell body layer 2116 may be selected from the materials shown in Table 9 to meet the design requirements.

**Table 9**

| Serial number | Material | Resistivity (Ω·m) | Tensile strength (MPa) |
|---|---|---|---|
| 1 | Silver | 1.59×10^-8 | 160-420 |
| 2 | Copper | 1.68×10^-8 | 210-270 |
| 3 | Aluminum | 2.65×10^-8 | 120-160 |
| 4 | Magnesium | 4.45×10^-8 | 120-220 |
| 5 | Brass | 6×10^-8 | 330-550 |
| 6 | Titanium | 4.2×10^-7 | 280-550 |
| 7 | Steel | 1.35×10^-7 | 370-2000 |
| 8 | Silicon steel | 5×10^-7 | 1,000-1,300 |
| 9 | Stainless steel | 6.9×10^-7 | 500-1,000 |

It should be understood that the shell body 211 according to the embodiments of the present application is of a multi-layer structure, and the number of layers of the shell body 211 may be determined according to practical applications. For example, the shell body 211 includes a plurality of first shell body layers 2115 and/or a plurality of second shell body layers 2116, and the positions of different first shell body layers 2115 and second shell body layers 2116 may be flexibly arranged according to practical applications, so as to meet different application scenarios.

In some embodiments, the shell body 211 may include a plurality of first shell body layers 2115 and one second shell body layer 2116, and the second shell body layer 2116 may be located between or on one side of the plurality of first shell body layers 2115. Similarly, the shell body 211 may include one first shell body layer 2115 and a plurality of second shell body layers 2116, and the first shell body layer 2115 may be located between or on one side of the plurality of second shell body layers 2116. For another example, the shell body 211 may include a plurality of first shell body layers 2115 and a plurality of second shell body layers 2116. The plurality of first shell body layers 2115 and the plurality of second shell body layers 2116 may be spaced apart from each other, or the plurality of first shell body layers 2115 may be disposed on one side of the plurality of second shell body layers 2116. The embodiments of the present application are not limited thereto.

In some embodiments, if the shell body 211 includes a plurality of first shell body layers 2115 that meet the above design requirements, the materials of the plurality of first shell body layers 2115 may be the same or different, the resistivities K1 may also be the same or different, and the thicknesses T13 may also be the same or different, so as to increase the design flexibility. Similarly, if the shell body 211 includes a plurality of second shell body layers 2116 that meet the above design requirements, the materials of the plurality of second shell body layers 2116 may be the same or different, the tensile strengths Rm2 at room temperature may also be the same or different, and thicknesses T14 may also be the same or different, so as to increase the design flexibility.

The embodiments of the present application further provide a battery. The battery includes the battery cell 20 according to the above various embodiments.

The embodiments of the present application further provide an electric device. The electric device includes a battery. The battery includes the battery cell 20 according to the above various embodiments and is configured to provide electric energy for the electric device.

The electric device may be the vehicle as shown in FIG. 1, or may be any device using batteries.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery cell, comprising:
an electrode assembly, comprising a positive electrode plate, wherein the positive electrode plate comprises a positive electrode active material enabling reversible de-intercalation and intercalation of metal ions, and the positive electrode active material comprises a nickel element-containing compound; and
a shell body, configured to accommodate the electrode assembly, wherein a melting point of at least a partial region of the shell body is p, and p satisfies that 1200 °C ≤ p ≤ 2000 °C.

2. The battery cell according to claim 1, wherein the nickel element-containing compound comprises a layered lithium-containing transition metal oxide, and a molar amount of the nickel element in the layered lithium-containing transition metal oxide accounts for not less than 50%, optionally not less than 70%, optionally not less than 80%, or optionally not less than 90%, of a total molar amount of a transition metal element in the layered lithium-containing transition metal oxide.

3. The battery cell according to claim 2, wherein the layered lithium-containing transition metal oxide comprises LiaNibCocMdOeAf, wherein: 0 < a ≤ 1.2; 0.5 ≤ b < 1, optionally, 0.9 ≤ b < 1; 0 < c < 1; 0 < d < 1; 1 ≤ e ≤ 2; 0 ≤ f ≤ 1; M comprises, but is not limited to, one or more of Mn, Al, Zr, Zn, Cu, Cr, Mg, Fe, V, Ti, and B, and A comprises, but is not limited to, one or more of N, F, S and Cl.

4. The battery cell according to any one of claims 1 to 3, wherein a material of the at least a partial region of the shell body comprises at least one of the following: steel, copper alloy, titanium alloy, and nickel alloy.

5. The battery cell according to claim 4, wherein the material of the at least a partial region of the shell body comprises steel, and 1300 °C ≤ p ≤ 1800 °C.

6. The battery cell according to claim 4 or 5, wherein the material of the at least a partial region of the shell body comprises at least one of the following: stainless steel and carbon steel.

7. The battery cell according to any one of claims 4 to 6, wherein a mass content of a chromium element in the material of the at least a partial region of the shell body is m, and m satisfies that 10% ≤ m ≤ 30%.

8. The battery cell according to any one of claims 1 to 7, wherein the at least a partial region of the shell body comprises all walls of the shell body.

9. The battery cell according to any one of claims 1 to 8, wherein the shell body is cylindrical or polygonal prismatic.

10. The battery cell according to any one of claims 1 to 9, wherein a tensile strength of the at least a partial region of the shell body at a temperature of 500 °C is Rn, and Rn satisfies that 100 MPa ≤ Rn ≤ 1200 MPa.

11. The battery cell according to any one of claims 1 to 10, wherein:
the electrode assembly further comprises a negative electrode plate, the negative electrode plate comprises a negative electrode active material enabling reversible de-intercalation and intercalation of metal ions, and the negative electrode active material comprises a silicon-based material; and
a tensile strength of the at least a partial region of the shell body at a temperature of 25 °C is Rm, and Rm satisfies that 250 MPa ≤ Rm ≤ 2000 MPa.

12. The battery cell according to any one of claims 1 to 11, wherein:
the electrode assembly further comprises a negative electrode plate, the negative electrode plate comprises a negative electrode active material enabling reversible de-intercalation and intercalation of metal ions, and the negative electrode active material comprises a silicon-based material; and
a yield strength of the at least a partial region of the shell body at the temperature of 25 °C is Re, and Re satisfies that 140 MPa ≤ Re ≤ 1000 MPa.

13. The battery cell according to any one of claims 1 to 12, wherein the tensile strength of the at least a partial region of the shell body at the temperature of 25 °C is Rm, at least a part of the shell body comprises a third shell body wall, an average thickness of the third shell body wall is T, and Rm and T satisfy that 250 MPa ≤ Rm ≤ 2000 MPa, 0.05 mm ≤ T ≤ 0.5 mm, and 60 mm·MPa ≤ T × Rm ≤ 500 mm·MPa.

14. The battery cell according to any one of claims 1 to 13, wherein a capacity of the battery cell is C, the tensile strength of the at least a partial region of the shell body at the temperature of 25 °C is Rm, and Rm and C satisfy that 250 MPa ≤ Rm ≤ 2000 MPa and 25 Ah ≤ C ≤ 550 Ah.

15. The battery cell according to any one of claims 1 to 14, wherein the shell body is provided with an opening, the shell body comprises a first shell body wall disposed opposite to the opening and at least two second shell body walls, and the first shell body wall intersects with the second shell body walls,
wherein a transition region is disposed between two adjacent second shell body walls among the at least two second shell body walls, and a maximum thickness T1 of the transition region and a maximum thickness T0 of a second shell body wall with a largest thickness among the two second shell body walls satisfy that T1 > T0.

16. The battery cell according to any one of claims 1 to 15, wherein the shell body is of an integrally formed structure, the shell body is provided with an opening, and the shell body comprises a first shell body wall disposed opposite to the opening and at least two second shell body walls,
wherein the first shell body wall intersects with the second shell body walls, two second shell body walls among the at least two second shell body walls are connected by a first round corner, and a depth H of the shell body and an inner diameter R1 of the first round corner satisfy that 2.5 mm ≤ R1 ≤ 20 mm and 50 mm < H ≤ 250 mm.

17. The battery cell according to any one of claims 1 to 16, wherein the shell body is of an integrally formed structure, the shell body is provided with an opening, and the shell body comprises a first shell body wall disposed opposite to the opening and at least two second shell body walls,
wherein the first shell body wall intersects with the second shell body walls, two second shell body walls among the at least two second shell body walls are connected by a first round corner, and a yield strength Re of the shell body at the temperature of 25 °C and an inner diameter R1 of the first round corner satisfy that 140 MPa ≤ Re ≤ 1000 MPa and 2.5 mm ≤ R1 ≤ 20 mm.

18. The battery cell according to any one of claims 1 to 17, wherein the shell body is provided with an opening, and the shell body comprises a first shell body wall disposed opposite to the opening and at least one second shell body wall,
wherein the first shell body wall intersects with the second shell body wall, the first shell body wall is connected to the second shell body wall by a second round corner, and an inner diameter r1 of the second round corner and a minimum thickness T2 of a second shell body wall with a smallest thickness among the at least one second shell body wall satisfy that 2.0 ≤ r1/T2 ≤ 30.

19. The battery cell according to any one of claims 1 to 18, wherein the shell body comprises:
a first shell body part, provided with an opening, wherein the first shell body part comprises a first wall opposite to the opening and a second wall connected to the first wall, and the first wall and the second wall are integrally formed; and
a second shell body part, fixedly connected to the second wall,
wherein in a depth direction of the first shell body part, the at least a partial region of the shell body is jointly formed by the first shell body part and the second shell body part.

20. The battery cell according to any one of claims 1 to 19, wherein:
the battery cell is used in a battery, and the electrode assembly comprises a first tab and a second tab opposite in polarity;
the shell body comprises a cylindrical body and a cover body connected to the cylindrical body, wherein the cover body and the cylindrical body are of an integrally formed structure, the cylindrical body is arranged around an outer periphery of the electrode assembly, the cover body is provided with an electrode lead-out hole, and at least a part of the cover body is configured to electrically connect a first connecting member of the battery and the first tab; and
the battery cell further comprises:
a second electrode terminal, configured to electrically connect a second connecting member of the battery and the second tab, wherein the second electrode terminal is insulatedly disposed on the cover body and mounted at the electrode lead-out hole, one of the cover body and the second electrode terminal is a positive output pole of the battery cell, and the other is a negative output pole of the battery cell.

21. The battery cell according to claim 20, wherein:
the second tab is disposed at an end of the electrode assembly facing the cover body, and the first tab is disposed at the other end of the electrode assembly facing away from the cover body; and
the cylindrical body is configured to connect the first tab and the cover body, so that the first tab is electrically connected to the cover body.

22. The battery cell according to any one of claims 1 to 21, wherein the electrode assembly comprises a first tab, and the shell body comprises a cylindrical body and a cover body connected to the cylindrical body, wherein the cylindrical body is arranged around an outer periphery of the electrode assembly, the cover body comprises a first electrode terminal, and the first tab is electrically connected to the first electrode terminal through the cylindrical body,
wherein the shell body is of a multi-layer structure, and a resistivity of the multi-layer structure varies across the layers.

23. The battery cell according to any one of claims 1 to 22, wherein the shell body is of a multi-layer structure, and a material of an outermost shell body of the shell body comprises at least one of the following: aluminum, aluminum alloy, copper, copper alloy, and chromium.

24. A battery, comprising:
a plurality of battery cells, wherein the battery cell is the battery cell according to any one of claims 1 to 23.

25. An electric device, comprising:
a battery, wherein the battery comprises the battery cell according to any one of claims 1 to 23, and the battery is configured to supply power to the electric device.
